# EUROPEAN PATENT APPLICATION

(11) **EP 4 611 186 A1**
(43) Date of publication of application: **03.09.2025**
(21) Application number: 25161002.8
(22) Date of filing: 28.02.2025
(51) Int. Cl.: H01R 13/639, B60L 53/16, H01R 13/447, H01R 13/52, E05B 67/38

(54) **ELECTRIC VEHICLE (EV) LOCKOUT DEVICE AND METHOD OF USING AN ELECTRIC VEHICLE (EV) LOCKOUT DEVICE**

(30) Priority: 01.03.2024 US 202418592699
(71) Applicant: Brady Worldwide, Inc., Milwaukee, Wisconsin 53223 (US)
(72) Inventor: ENGER, Andrew, Muskego 53150 (US); GLADKOV, Gene, Muskego 53150 (US)
(74) Representative: Viering, Jentschura & Partner mbB Patent- und Rechtsanwälte

(57) **Abstract**

An electric vehicle (EV) lockout device including a clip and a housing. The housing having a base with a front side and a back side. A first flange extends from the front side of the base and is configured to engage with an EV charge port or EV charge plug. A clip support unit extending from the back side of the base. The clip support unit including a first side plate having a first top end, a first bottom end, and a first opening disposed between the first top end and the first bottom end, and a second side plate having a second top end, a second bottom end, and a first opening disposed between the second top end and the second bottom end. The second side plate being disposed substantially parallel to the first side plate, and the second opening being substantially aligned with the first opening.

## Description

### CROSS-REFERENCE TO RELATED APPLICATIONS

None.

### FIELD OF DISCLOSURE

The present disclosure relates generally to electric vehicle lockout devices, and more specifically to electric vehicle lockout devices for a charge port of an electric vehicle and a charging plug for an electric vehicle charging station.

### BACKGROUND

The number of electric vehicles being produced and driven has increased rapidly over the past decade. As a result, more electric vehicle (EV) charging stations have been built and installed to accommodate the growing number of electric vehicles.

Electric vehicles include a charge port that can be connected to a charge plug of the EV charging station to charge the battery of the electric vehicle. There are several types of charging ports and charging plugs used to charge an electric vehicle. Such ports and plugs include the Combined Charging System (CCS) Type 1 and CCS Type 2 charge ports and charge plugs, the J1772 charge port and charge plug, and the North American Charging Standard (NACS) or Tesla charge port and charge plug.

Currently, charge ports of electric vehicles and charge plugs of EV charge stations do not have an effective mechanism to lock the charge port or charge plug to prevent access. While some EV lockout devices exist that lock the socket housing of the electric vehicle to prevent someone from removing the charge port from the electric vehicle, the prior art devices do not necessarily prevent access to the charge port nor do they provide protection for charge plugs of EV charging stations. Thus, there exists a need for EV lockout devices that prevent access, namely, EV lockout devices that lock the charge port of the electric vehicle to prevent charging during maintenance or repairs of the electric vehicle and/or to prevent tampering with the charge port, and lock the charge plug of an EV charging station to prevent the charge plug from being used during maintenance or repairs and/or to prevent unauthorized use of the charge plug.

### SUMMARY

The present apparatuses overcome many of the shortcomings and limitations of the prior art devices discussed above. The apparatuses and methods described herein include several EV lockout devices including multiple embodiments of housings for the EV lockout devices and multiple embodiments of clips for the EV lockout devices.

In one aspect, a housing for an electric vehicle (EV) lockout device is provided. The housing includes a base having a front side and a back side and a first flange extending from the front side of the base. The first flange is configured to engage with a first portion of the port housing of an EV charge port or a first portion of the plug housing of an EV charge plug. The housing also includes a clip support unit extending from the back side of the base. The clip support unit includes a first side plate having a first top end, a first bottom end that is opposite the first top end, and a first opening disposed between the first top end and the first bottom end. The clip support unit also includes a second side plate having a second top end, a second bottom end that is opposite the second top end, and a first opening disposed between the second top end and the second bottom end. The second side plate is disposed in a substantially parallel manner with respect to the first side plate, and the second opening is substantially aligned with the first opening.

In some instances, the first opening and the second opening are imparted with substantially the same shape and size. In some instances, the first opening and the second opening may be configured to align with a hole of a clip for an EV lockout device when the clip is attached to the housing for an EV lockout device. In some instances, the first opening and the second opening are configured to enable a shackle of a lock to pass through the first opening and the second opening when the lock is attached to the housing for an EV lockout device.

In other instances, the first flange includes a bottom flange portion. The housing for an EV lockout device further includes a ridge that extends from the bottom flange portion of the first flange. The ridge is configured to engage with a channel in the first portion of the port housing of the EV charge port. In further instances, the housing for an EV lockout device further includes a flange channel that extends through the bottom flange portion of the first flange. The flange channel is configured to engage with a protrusion ridge of the plug housing of the EV charge plug.

In some instances, the housing for an EV lockout device further includes a first vertical member disposed on the back side of the base and a second vertical member disposed on the back side of the base. The first vertical member is oriented in a substantially parallel manner with respect to the second vertical member. In some instances, the housing for an EV lockout device also includes a clip connector that extends between the first vertical member and the second vertical member. In some instances, the clip connector is configured to engage with a coupling member and a projection of a clip for an EV lockout device when the clip is attached to the housing for an EV lockout device.

In other instances, the housing for an EV lockout device includes a first support member connected to the first top end of the first side plate, and a second support member connected to the second top end of the second side plate. The first vertical member extends upwardly from the first support member and the second vertical support extends upwardly from the second support member. In some instances, the first support member and the second support member are configured to engage with a first support leg and a second support leg, respectively, of a clip for an EV lockout device when the clip is attached to the housing for an EV lockout device.

In some instances, the housing for an EV lockout device includes a second flange extending from the front side of the base. The second flange is disposed below the first flange and is configured to engage with a second portion of the port housing of the EV charge port or the second portion of the plug housing of the EV charge plug. In some instances, a ridge is disposed between the first flange and the second flange. The ridge is configured to engage with a channel in the first portion of the port housing of the EV charge port. In other instances, a flange channel is disposed between the first flange and the second flange. The flange channel is configured to engage with a protrusion ridge of the first portion of the plug housing of the EV charge port.

In some instances, the housing for an EV lockout device includes a first guide rail and a second guide rail disposed along a top flange portion of the first flange. The first guide rail and the second guide rail are configured to engage with a first guide member and a second guide member, respectively, of a clip for an EV lockout device when the clip is attached to the housing for an EV lockout device.

In another aspect, a clip for an electric vehicle (EV) lockout device is provided. The clip includes a first elongated member having a first end and a second end that is opposite the first end. The clip includes a second elongated member having a top portion and a bottom portion opposite the top portion. The second elongated member is disposed substantially perpendicular to the first elongated member. The clip also includes a platform portion that is connected to the second end of the first elongated member. A first support leg and a second support leg extend downwardly from the platform portion. The second support leg is disposed in a substantially parallel orientation with respect to the first support legs. In some instances, the first support leg extends downwardly from a front end of the platform portion on a first platform side of the platform portion, and the second support leg extends downwardly from the front end of the platform portion on a second platform side of the platform portion.

In some instances, the second elongated member extends downwardly from the platform portion. In other instances, the second elongated member extends upwardly from a top side of the first elongated member.

In some instances, the clip for an EV lockout device includes a hole disposed between the top portion and the bottom portion of the second elongated member. In some instances, the hole is configured to substantially align with a first opening and a second opening of a clip support unit of a housing for an EV lockout device when the clip for an EV lockout device is attached to the housing for an EV lockout device. In some instances, the first opening and the second opening of the clip support unit for an EV lockout device and the hole of the clip for an EV lockout device are configured to enable a shackle of a lock to pass through the first opening, the hole, and the second opening, when the clip is attached to a housing for an EV lockout device and a lock is attached to the EV lockout device.

In some instances, the first support leg and the second support leg each extend downwardly from the platform portion at an angle. In some instances, the first support leg and the second support leg are configured to compress such that the angle between the platform portion and the first support leg or the second support leg decreases. In some instances, the angle is about 45 degrees. In some instances, the first support leg and the second support leg are configured to engage with a first support member and a second support member, respectively, of a clip support unit of a housing for an EV lockout device when the clip for an EV lockout device is attached to the housing for an EV lockout device. In other instances, the first support leg and the second support leg are configured to engage with a bottom clip support of a housing for an EV lockout device when the clip for an EV lockout device is attached to the housing for an EV lockout device.

In some instances, the clip for an EV lockout device includes a hook portion that extends downwardly from the first end of the first elongated member. The hook portion is configured to engage with a locking mechanism of an EV charge port or an EV charge plug. In other instances, the clip for an EV lockout device includes a raised member on the first end of the first elongated member. The raised member is configured to engage with a locking mechanism of an EV charge port or an EV charge plug.

In some instances, the first elongated member includes a first side and second side that is substantially parallel to the first side. The first side and the second side extend between the first end and the second end of the first elongated member. In some instances, a first guide member extends downwardly from the first side of the first elongated member, and a second guide member extends downwardly from the second side of the first elongated member. The first guide member and the second guide member are configured to engage with a first guide rail and a second guide rail, respectively, of a housing for an EV lockout device when the clip for an EV lockout device is attached to the housing for an EV lockout device.

In yet another aspect, a method of using an electric vehicle (EV) lockout device is provided. The EV lockout device includes a clip and a housing. The clip includes a first elongated member having a first end and a second end that is opposite the first end. The clip also includes a second elongated member disposed perpendicular to the first elongated member. A hole is disposed on the second elongated member. The clip further includes a platform portion connected to the second end of the first elongated member.

The method includes the step of attaching the clip to the housing such that the first elongated member extends over a first flange of the housing and the hole is in substantial alignment with a first opening of the housing and a second opening of the housing.

The method includes the step of depressing the platform portion of the clip to move the clip from a first clip position in which the clip is in a neutral position to a second clip position in which the first end of the first elongated member is raised. The method includes the steps of engaging the first end of the clip with a locking mechanism of an EV charge port or an EV charge plug and mating the first flange of the housing with a first portion of a port housing of the EV charge port or a first portion of the plug housing of the EV charge plug. In some instances, the method includes the step of mating a second flange of the housing with a second portion of a port housing of the EV charge port or a second portion of the plug housing of the EV charge plug.

The method includes the step of releasing the platform portion of the clip to move the clip from the second clip position to the first clip position.

The method further includes the step of attaching a lock to the EV lockout device by threading a shackle of a lock through the first opening of the housing, the hole of the second elongated member of the clip, and the second opening of the housing, and attaching the shackle to a body of the lock.

These and other aspects and advantages of the present disclosure will become apparent to those skilled in the art after considering the following detailed description in connection with the accompanying drawings.

### BRIEF DESCRIPTION OF DRAWINGS

FIG. 1 is a partially exploded isometric view of a lock, a first embodiment of an electric vehicle (EV) lockout device, and a first charge port for an electric vehicle;
FIG. 2A is an isometric view of a top, back, and right side of a housing for the first embodiment of the EV lockout device of FIG. 1;
FIG. 2B is a front plan view of the housing of FIG. 2A;
FIG. 2C is a left side elevational view of the housing of FIG. 2A, the right side view being a mirror image thereof;
FIG. 2D is a rear plan view of the housing of FIG. 2A;
FIG. 3A is an isometric view of a top, back, and right side of a first embodiment of a clip for use with one or more of the first embodiment of the EV lockout device of FIG. 1, the third embodiment of the EV lockout device of FIG. 11, and the seventh embodiment of the EV lockout device of FIG. 29;
FIG. 3B is a left side elevational view of the first embodiment of the clip of FIG. 3A, the right side view being a mirror image thereof;
FIG. 3C is a front plan view of the first embodiment of the clip of FIG. 3A;
FIG. 4A is an isometric view of a top, back, and right side of the first embodiment of the EV lockout device of FIG. 1 including the housing of FIGS. 2A-2D in combination with the first embodiment of the clip of FIGS. 3A-3C;
FIG. 4B is a rear plan view of the first embodiment of the EV lockout device of FIG. 4A;
FIG. 4C is a cross-sectional view of the first embodiment of the EV lockout device taken generally along the lines 4C-4C of FIG. 4A;
FIG. 5 is an isometric view of the first embodiment of the EV lockout device of FIGS. 1 and 4A-4C in use with the lock and the first charge port for an electric vehicle of FIG. 1;
FIG. 6 is a partially exploded isometric view of a lock, a second embodiment of an EV lockout device, and a first charge plug for an electric vehicle;
FIG. 7A is an isometric view of a top, back, and right side of a housing for the second embodiment of the EV lockout device of FIG. 6;
FIG. 7B is a front plan view of the housing of FIG. 7A;
FIG. 7C is a left side elevational view of the housing of FIG. 7A, the right side view being a mirror image thereof;
FIG. 7D is a rear plan view of the housing of FIG. 7A;
FIG. 8A is an isometric view of a top, back, and right side of a second embodiment of a clip for use with the second embodiment of the EV lockout device of FIG. 6 and the fourth embodiment of the EV lockout device of FIG. 15;
FIG. 8B is a left side elevational view of the second embodiment of the clip of FIG. 8A, the right side view being a mirror image thereof;
FIG. 8C is a front plan view of the second embodiment of the clip of FIG. 8A;
FIG. 9A is an isometric view of a top, back, and right side of the second embodiment of the EV lockout device of FIG. 6 including the housing of FIGS. 7A-7D in combination with the second embodiment of the clip of FIGS. 8A-8C;
FIG. 9B is rear plan view of the second embodiment of the EV lockout device of FIG. 9A;
FIG. 9C is a cross-sectional view of the second embodiment of the EV lockout device taken generally along the lines 9C-9C of FIG. 9A;
FIG. 10 is an isometric view of the second embodiment of the EV lockout device of FIGS. 6 and 9A-9C in use with the lock and the first charge plug for an electric vehicle of FIG. 6;
FIG. 11 is a partially exploded isometric view of a lock, a third embodiment of an EV lockout device, and a second charge port for an electric vehicle;
FIG. 12A is an isometric view of a top, back, and right side of a housing for the third embodiment of the EV lockout device of FIG. 11;
FIG. 12B is a front plan view of the housing of FIG. 12A;
FIG. 12C is a left side elevational view of the housing of FIG. 12A, the right side view being a mirror image thereof;
FIG. 12D is a rear plan view of the housing of FIG. 12A;
FIG. 13A is an isometric view of a top, back, and right side of the third embodiment of the EV lockout device of FIG. 11 including the housing of FIGS. 12A-12D in combination with the first embodiment of the clip of FIGS. 3A-3C;
FIG. 13B is a rear plan view of the third embodiment of the EV lockout device of FIG. 13A;
FIG. 13C is a cross-sectional view of the third embodiment of the EV lockout device taken generally along the lines 13C-13C of FIG. 13A;
FIG. 14 is an isometric view of the third embodiment of the EV lockout device of FIGS. 11 and 13A-13C in use with the lock and the second charge port for an electric vehicle of FIG. 11;
FIG. 15 is a partially exploded isometric view of a lock, a fourth embodiment of an EV lockout device, and a second charge plug for an electric vehicle;
FIG. 16A is an isometric view of a top, back, and right side of a housing for the fourth embodiment of the EV lockout device of FIG. 15;
FIG. 16B is a front plan view of the housing of FIG. 16A;
FIG. 16C is a left side elevational view of the housing of FIG. 16A, the right side view being a mirror image thereof;
FIG. 16D is a rear plan view of the housing of FIG. 16A;
FIG. 17A is an isometric view of a top, back, and right side of the fourth embodiment of the EV lockout device of FIG. 15 including the housing of FIGS. 16A-16D in combination with the second embodiment of the clip of FIGS. 8A-8C;
FIG. 17B is a rear plan view of the fourth embodiment of the EV lockout device of FIG. 17A;
FIG. 17C is a cross-sectional view of the fourth embodiment of the EV lockout device taken generally along the lines 17C-17C of FIG. 17A;
FIG. 18 is an isometric view of the fourth embodiment of the EV lockout device of FIGS. 15 and 17A-17C in use with the lock and the second charge plug for an electric vehicle of FIG. 15;
FIG. 19 is a partially exploded isometric view of a lock, a fifth embodiment of an EV lockout device, and a third charge plug for an electric vehicle;
FIG. 20A is an isometric view of a top, back, and right side of a housing for the second embodiment of the EV lockout device of FIG. 19;
FIG. 20B is a front plan view of the housing of FIG. 20A;
FIG. 20C is a left side elevational view of the housing of FIG. 20A, the right side view being a mirror image thereof;
FIG. 20D is a rear plan view of the housing of FIG. 20A;
FIG. 21A is an isometric view of a top, front, and right side of a third embodiment of a clip for use with the fifth embodiment of the EV lockout device of FIG. 19;
FIG. 21B is a left side elevational view of the third embodiment of the clip of FIG. 21A, the right side view being a mirror image thereof;
FIG. 21C is a front plan view of the third embodiment of the clip of FIG. 21A;
FIG. 22A is an isometric view of a top, back, and right side of the fifth embodiment of the EV lockout device of FIG. 19 including the housing of FIGS. 20A-20D in combination with the third embodiment of the clip of FIGS. 21A-21C;
FIG. 22B is a rear plan view of the fifth embodiment of the EV lockout device of FIG. 22A;
FIG. 22C is a cross-sectional view of the fifth embodiment of the EV lockout device taken generally along the lines 22C-22C of FIG. 22A;
FIG. 23 is an isometric view of the fifth embodiment of the EV lockout device of FIGS. 19 and 22A-22C in use with the lock and the third charge plug for an electric vehicle of FIG. 19;
FIG. 24 is a partially exploded isometric view of a lock, a sixth embodiment of an EV lockout device, and a third charge port for an electric vehicle;
FIG. 25A is an isometric view of a top, back, and right side of a housing for the sixth embodiment of the EV lockout device of FIG. 24;
FIG. 25B is a left side elevational view of the housing of FIG. 25A, the right side view being a mirror image thereof;
FIG. 25C is a front plan view of the housing of FIG. 25A;
FIG. 25D is a rear plan view of the housing of FIG. 25A;
FIG. 26A is an isometric view of a top, front, and right side of a fourth embodiment of a clip for use with the sixth embodiment of the EV lockout device of FIG. 24;
FIG. 26B is a left side elevational view of the fourth embodiment of the clip of FIG. 26A, the right side view being a mirror image thereof;
FIG. 26C is a front plan view of the fourth embodiment of the clip of FIG. 26A;
FIG. 27A is an isometric view of a top, back, and right side of the sixth embodiment of the EV lockout device of FIG. 24 including the housing of FIGS. 25A-25D in combination with the fourth embodiment of the clip of FIGS. 26A-26C;
FIG. 27C is a rear plan view of the sixth embodiment of the EV lockout device of FIG. 27A;
FIG. 27D is a cross-sectional view of the sixth embodiment of the EV lockout device taken generally along the lines 27D-27D of FIG. 27A;
FIG. 28 is an isometric view of the sixth embodiment of the EV lockout device of FIGS. 24 and 27A-27D in use with the lock and the third charge port for an electric vehicle of FIG. 24;
FIG. 29 is a partially exploded isometric view of a lock, a seventh embodiment of an EV lockout device, and a fourth charge plug for an electric vehicle;
FIG. 30A is an isometric view of a top, back, and left side of a housing for the seventh embodiment of the EV lockout device of FIG. 29;
FIG. 30B is a front plan view of the housing of FIG. 30A;
FIG. 30C is a right side elevational view of the housing of FIG. 30A, the left side view being a mirror image thereof;
FIG. 30D is a rear plan view of the housing of FIG. 30A;
FIG. 31A is an isometric view of a top, back, and left side of the seventh embodiment of the EV lockout device of FIG. 29 including the housing of FIGS. 30A-30D in combination with the first embodiment of the clip of FIGS. 3A-3C;
FIG. 31B is a rear view of the seventh embodiment of the EV lockout device of FIG. 31A;
FIG. 31C is a cross-sectional view of the seventh embodiment of the EV lockout device taken generally along the lines 31C-31C of FIG. 31A;
FIG. 32 is an isometric view of the seventh embodiment of the EV lockout device of FIGS. 29 and 31A-31C in use with the lock and the fourth charge plug for an electric vehicle of FIG. 29; and,
FIG. 33 is a flowchart of a method 1200 of using the first, second, third, fourth, fifth, and sixth embodiments of the EV lockout devices of FIGS. 1, 6, 11, 15, 19, 24, and 29, respectively.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the spirit and scope of the present disclosure as defined by the appended claims.

### DETAILED DESCRIPTION

Before any embodiments are described in detail, it is to be understood that the disclosure is not limited in its application to the details of construction and the arrangement of components set forth in the following description or illustrated in the following drawings, which is limited only by the claims that follow the present disclosure. The disclosure is capable of other embodiments, and of being practiced, or of being carried out, in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "attached," "supported," and "coupled" and variations thereof are used broadly and encompass both direct and indirect mountings, connections, attachments, supports, and couplings. Further, "connected," "attached," and "coupled" are not restricted to physical or mechanical connections, attachments, or couplings.

The following description is presented to enable a person skilled in the art to make and use embodiments of the disclosure. Various modifications to the illustrated embodiments will be readily apparent to those skilled in the art, and the generic principles herein can be applied to other embodiments and applications without departing from embodiments of the disclosure. Thus, embodiments of the disclosure are not intended to be limited to embodiments shown but are to be accorded the widest scope consistent with the principles and features disclosed herein. The following detailed description is to be read with reference to the figures, in which like elements in different figures have like reference numerals. Furthermore, directional terminology is utilized herein (e.g., front, back, right, left, upwards, downwards, etc.) to describe components or features in relation to one another and is not intended to be limiting. Skilled artisans will recognize the examples provided herein have many useful alternatives and fall within the scope of embodiments of the disclosure.

Additionally, while the following discussion may describe features associated with specific devices or embodiments, it is understood that additional devices and/or features can be used with the described systems and methods, and that the discussed devices and features are used to provide examples of possible embodiments, without being limited.

The embodiments of the EV lockout devices disclosed herein may include a housing and an embodiment of a clip. The clip may be placed on, attached to, or otherwise engaged with the housing. Once the clip is placed on the housing, the EV lockout device may be placed on and secured to an EV charge port or EV charge plug with a locking device.

The embodiments of the EV lockout devices disclosed herein provide numerous benefits. For example, the EV lockout devices can protect the charge port of the electric vehicle or the charge plug of an EV charge station while maintenance or repairs are performed on the electric vehicle or the EV charging station. Locking the charge port of an electric vehicle with an EV lockout device may also prevent the electric vehicle from being charged while maintenance or repairs are being performed on the electric vehicle. In some instances, the EV lockout device can be left on the charge port when the charge port cover is closed, which may prevent the charge port from being tampered with while the electric vehicle is parked or being stored.

In addition, locking the charge plug of an EV charge station with an EV lockout device can prevent the charge plug of an EV charging station from being used if the charge plug is disabled or unsafe to use or maintenance or repairs are being performed. Furthermore, locking the charge plug of an EV charging station with an EV lockout device may prevent unauthorized users from using the charge plug.

Furthermore, the unique EV lockout device disclosed herein are designed for easy installation on and removal from the charge port of an electric vehicle or the charge plug of an EV charging station (e.g., single-handed installation and/or removal). Some embodiments of the EV lockout devices include clips that are designed to lift up and snap down over a portion of the housing of the EV charge port or the EV charge plug just by pushing the EV lockout device onto the housing of the EV charge port or the EV charge plug. Other embodiments of the EV lockout devices include clips that are designed to simply snap in place just by pushing the EV lockout devices onto or into the housing of the EV charge port or the EV charge plug. The platform portion of the clips may then be depressed using a finger or thumb to disengage the clips from the EV charge port or the EV charge plug for easy removal of the EV lockout device.

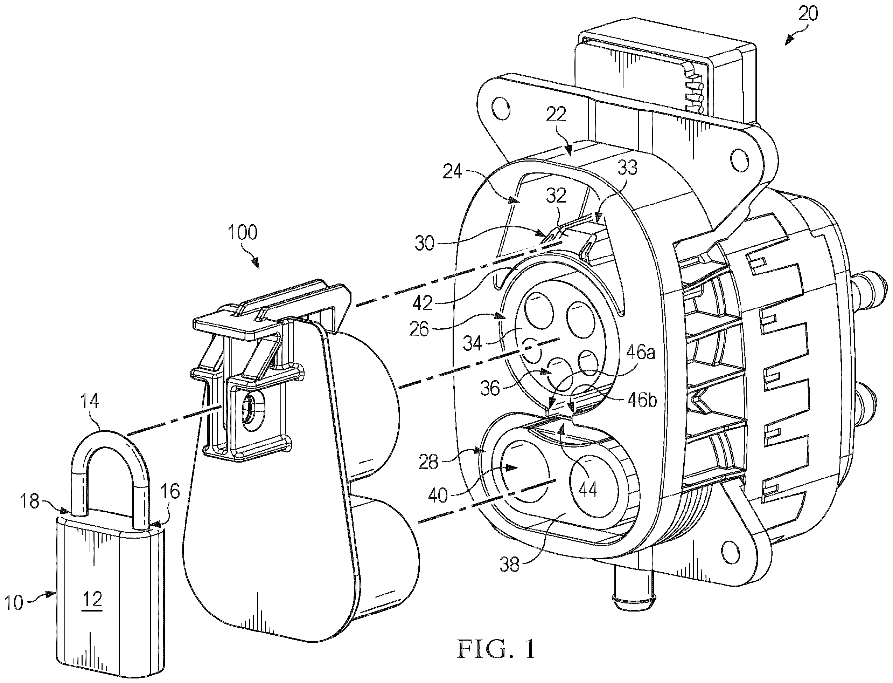

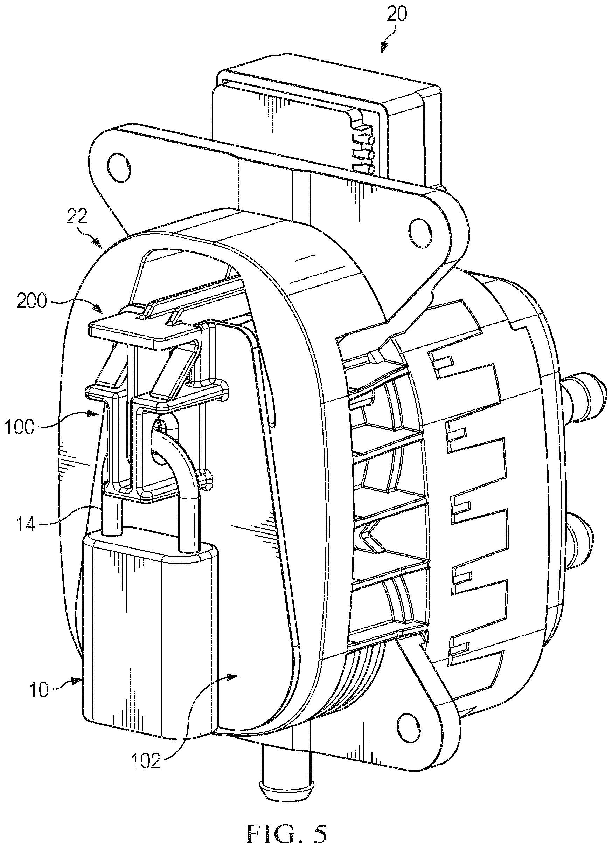

FIG. 1 depicts a partially exploded view of a lock 10, a first embodiment of an EV lockout device 100, and a first electric vehicle (EV) charge port 20. The lock 10 may be provided in the form of a body 12 and a shackle 14 that securely attaches to the body 12 when in a locked position as shown in FIG. 1. The shackle 14 may be defined by a first end portion 16 and a second end portion 18. One or both of the first end portion 16 and the second end portion 18 may disengage from the body 12 when the lock 10 is in an unlocked position. In one embodiment, the first end portion 16 of the shackle 14 may disengage from the body 12, while the second end portion 18 remains fastened or otherwise attached to the body 12, when in the unlocked position. The first end portion 16 may be movable relative to the body 12, when in the unlocked position, such that the shackle 14 can be threaded through an opening or other aperture in an object to be secured (e.g., the EV lockout device 100) before the first end portion 16 of the shackle 14 is reattached to the body 12, when in the locked position (see, e.g., FIG. 5).

The first EV charge port 20 may be disposed inside of, on, or otherwise associated with an electric vehicle (not shown). In some embodiments, the first EV charge port 20 may be provided in the form of a Combined Charging System (CCS) Type 1 socket.

The first EV charge port 20 may include a port housing 22 having a locking mechanism aperture 24, a first protrusion aperture 26, and a second protrusion aperture 28. The first EV charge port 20 may include a locking mechanism 30 disposed within the locking mechanism aperture 24, which may include a locking member 32 having an inner side 33.

The first EV charge port 20 may further include a first protrusion 34 disposed within the first protrusion aperture 26. A first set of terminals receptors 36 may be disposed within the first protrusion 34.

The first protrusion 34 may be imparted with a first protrusion shape. In some embodiments, the first protrusion shape may be substantially cylindrical with a substantially circular cross-section. In other embodiments, the first protrusion 34 may be imparted with other shapes, for example, a rectangular or square shape, a triangular shape, a trapezoidal shape, and the like, a combination of shapes, or an irregular shape.

The first protrusion 34 may be imparted with a set of dimensions (not shown). In some embodiments, the set of dimensions of the first protrusion 34 may include a diameter, a circumference, and/or a depth. In some embodiments, the diameter of the first protrusion 34 may be about 33.9 millimeters (mm). In some embodiments, the depth of the first protrusion 34 may be about 35.5 mm.

The first EV charge port 20 may include a second protrusion 38 disposed within the second protrusion aperture 28. A second set of terminal receptors 40 may be disposed within the second protrusion 38.

The second protrusion 38 may be imparted with a second protrusion shape. In some embodiments, the second protrusion shape may be substantially cylindrical with a substantially elliptical cross-section. In other embodiments, the second protrusion 38 may be imparted with other shapes, for example, a rectangular or square shape, a triangular shape, a trapezoidal shape, and the like, a combination of shapes, or an irregular shape.

The second protrusion 38 may be imparted with a set of dimensions (not shown). In some embodiments, the set of dimensions of the second protrusion 38 may include one or more diameters, a circumference, and/or a depth. One or more of the dimensions within the set of dimensions of the second protrusion 38 may be the same or different from one or more of the dimensions within the set of dimensions for the first protrusion 34. In some embodiments, the depth of the first protrusion 34 may be the same as the depth of the second protrusion 38.

In some embodiments, a first diameter (or width) of the second protrusion 38 may be about 51.34 mm, and a second diameter (or a height) of the second protrusion 38 may be about 25.34 mm. In some embodiments, the depth of the second protrusion 38 may be about 35.5 mm.

In some embodiments, the locking mechanism aperture 24 may be disposed above the first protrusion aperture 26, and the first protrusion aperture 26 may be disposed above the second protrusion aperture 28. A divider 42 may be disposed between the locking mechanism aperture 24 and the first protrusion aperture 26. A channel 44 may be disposed between the first protrusion aperture 26 and the second protrusion aperture 28.

The channel 44 may be defined by a first channel side 46a and the second channel side 46b. In some embodiments, the channel 44 may be imparted with a substantially rectilinear shape, although other shapes may be used. The channel 44 may be imparted with a set of dimensions (not shown). In some embodiments, the set of dimensions of the channel 44 may include a width, a height, and a depth. For example, in some embodiments, the width of the channel 44 may be about 9.1 mm. In some embodiments, the height of the channel 44 may be about 3.48 mm. In some embodiments, the depth of the channel 44 may be about 35.5 mm.

The depth of the channel 44 may be the same or different than the depth of the first protrusion 34 or the depth of the second protrusion 38. In some embodiments, the depths of the channel 44, the first protrusion 34, and the second protrusion 38 may be substantially the same, or the same.

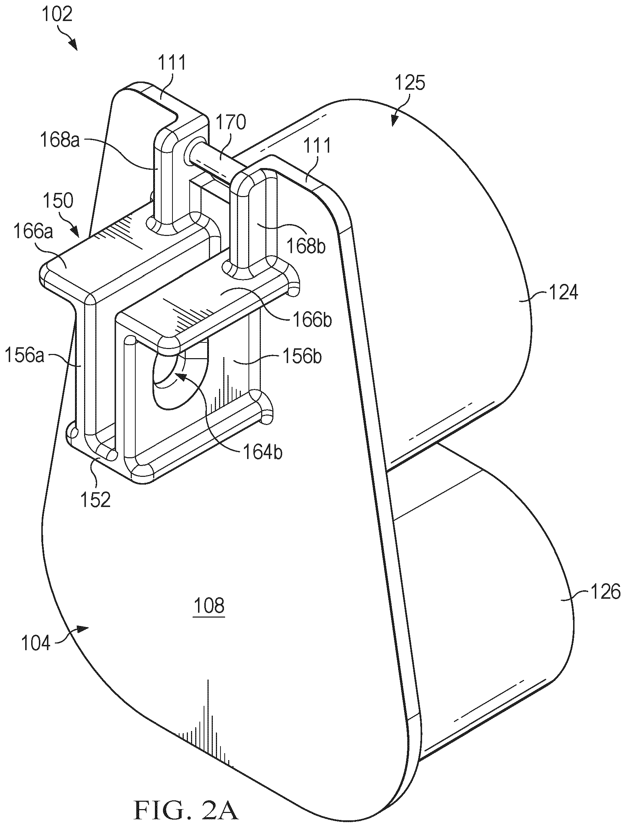

Turning to FIGS. 2A-2D, the first embodiment of the EV lockout device 100 may include a housing 102. The housing 102 may be made of a polymeric material such as a plastic, metal, or other suitable materials, or combinations thereof. In one embodiment, the housing 102 may be made of acrylonitrile butadiene styrene (ABS) polymer plastic. In some embodiments, the housing 102 may be formed using injection molding or a 3D printer.

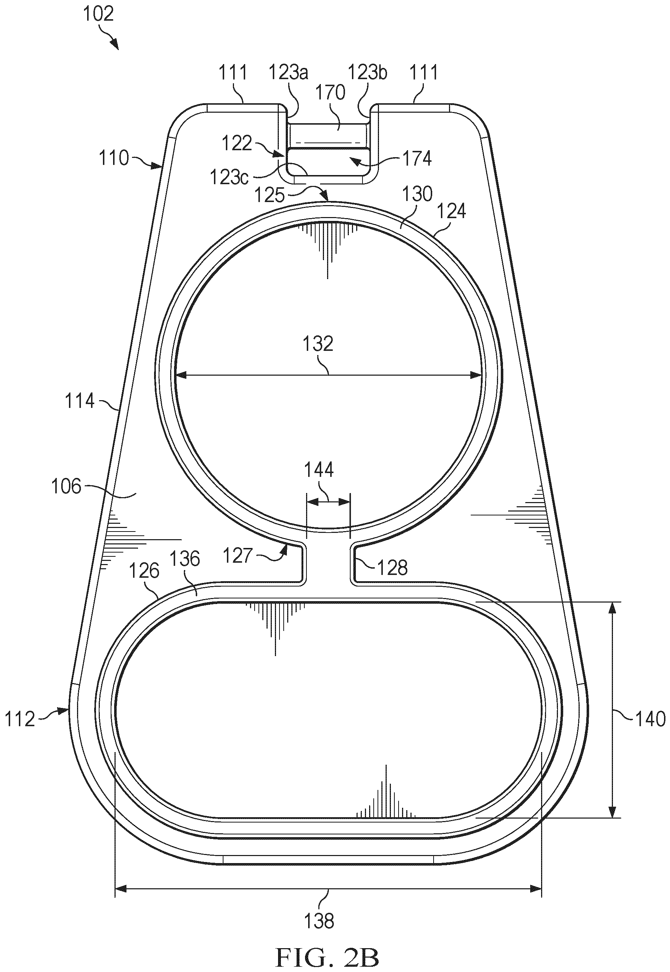

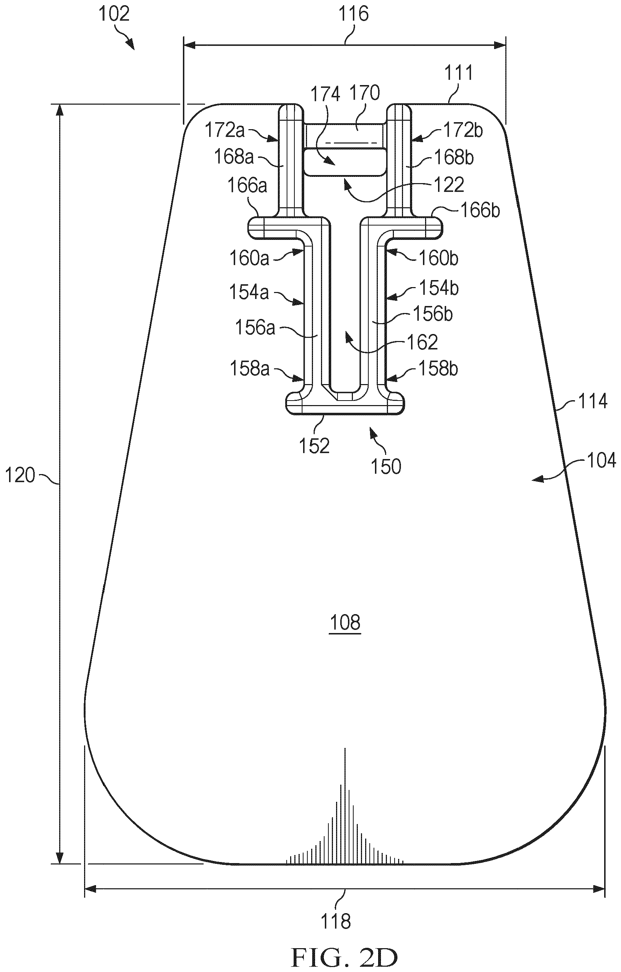

The housing 102 may include a base 104 defined by a front side 106 and a back side 108. The base 104 may also have a top portion 110 and a bottom portion 112, opposite the top portion 110. In some embodiments, the top portion 110 terminates at a top edge 111. The base 104 may have an outer edge 114 that defines a shape of the base 104. In some embodiments, the shape of the base 104 may be substantially a square, a rectangle, a circle, an oval, a triangle, a trapezoid, and the like. In some embodiments, the shape of the base 104 may be imparted with round edges as shown in FIGS. 2A, 2B, and 2D. Combinations of shapes and irregular shapes are also contemplated.

In some embodiments, the base 104 may be imparted with a substantially trapezoidal shape as shown in FIGS. 2B and 2D where a top length 116 dimension of the top portion 110 is less than a bottom length 118 dimension of the bottom portion 112. In some embodiments, the top length 116 of the top portion 110 may be 40.23 mm, or about 40.23 mm, and the bottom length 118 of the bottom portion 112 may be 65 mm, or about 65 mm.

The base 104 may be imparted with a base height 120. In some embodiments, the base height 120 may be 95.32 mm, or about 95.32 mm. The base 104 also may be imparted with a base thickness (not shown). In some embodiments, the base thickness may be 3 mm, or about 3 mm.

The top portion 110 of the base 104 may be interrupted by a divot 122 disposed in a center area of the top portion 110. The divot 122 may extend downwardly from the top edge 111 and be defined by a first divot side 123a, a second divot side 123b, and a bottom divot side 123c. In some embodiments, the divot 122 may be imparted with a "C" shape or a "U" shape as shown in FIGS. 2B and 2D.

The front side 106 of the base 104 may include a first flange 124 and a second flange 126 protruding outwardly therefrom. The first flange 124 may have a top flange portion 125 and a bottom flange portion 127. In some embodiments, the first flange 124 may be disposed above the second flange 126 and below the divot 122 of the top portion 110. The first flange 124 may be connected to the second flange 126 by a ridge 128. In some embodiments, the ridge 128 may extend downwardly from a center area of the bottom flange portion 127.

The first flange 124 may have a first flange wall 130 that is imparted with a first flange thickness. In some embodiments, the first flange thickness may be 2.5 mm, or about 2.5 mm.

The first flange wall 130 may define a first flange shape. The first flange shape may be any size and shape suitable to engage with the first protrusion 34 when the EV lockout device 100 is placed on or otherwise in communication with the first EV charge port 20. In some embodiments, the first flange shape may be the same or substantially the same as the shape of the first protrusion 34 of the first EV charge port 20. In some embodiments, the first flange shape may be substantially cylindrical with a substantially circular cross-section.

The first flange 124 may be imparted with a first set of dimensions. In some embodiments, the first set of dimensions of the first flange 124 may be complimentary to the set of dimensions for the first protrusion 34 of the first EV charge port 20 so that the first flange 124 can be placed onto and fit over the first protrusion 34. In some instances, a friction fit between the first flange wall 130 and the first protrusion 34 may prevent the housing 102 from disengaging from the first EV charge port 20.

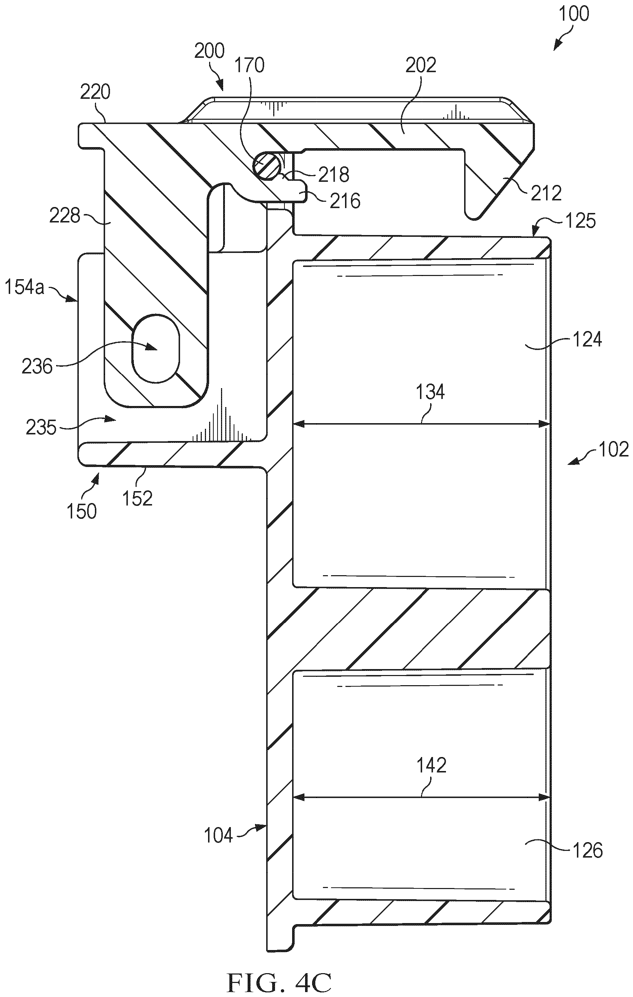

In some embodiments, the first set of dimensions of the first flange 124 may include a first flange diameter 132 (see FIG. 2B), a first flange circumference (not shown), and a first flange depth 134 (see FIG. 4C). In some embodiments, the first flange diameter 132 may be the same as or greater than the diameter of the first protrusion 34 of the first EV charge port 20. For example, in some embodiments, the first flange diameter 132, may be 38 mm, or about 38 mm, and the first flange circumference may be 119.41 mm, or about 119.41 mm.

The first flange depth 134 may be the same as or different from the depth of the first protrusion 34 of the first EV charge port 20. In some embodiments, the first flange depth 134 is the same as, substantially the same as or less than the depth of the first protrusion 34 of the first EV charge port 20. For example, in some embodiments, the first flange depth 134 may be 30 mm, or about 30 mm.

The second flange 126 may have a second flange wall 136 that may be imparted with a second flange thickness. In some embodiments, the second flange thickness may be 2.5 mm, or about 2.5 mm.

The second flange wall 136 may define a second flange shape. The second flange shape may be any size and shape suitable to engage with the second protrusion 38 when the EV lockout device 100 is placed on or otherwise in communication with the first EV charge port 20. In some embodiments, the second flange shape may be the same or substantially the same as the second protrusion 38 of the first EV charge port 20. In some embodiments, the second flange shape may be substantially cylindrical with a substantially elliptical cross-section.

The second flange 126 may be imparted with a second set of dimensions. In some embodiments, the second set of dimensions of the second flange 126 may be complimentary to the set of dimensions for the second protrusion 38 of the first EV charge port 20 so that the second flange 126 can be placed onto and fit over the second protrusion 38. In some instances, a friction fit between the second flange wall 136 and the second protrusion 38 may prevent the housing 102 from disengaging from the first EV charge port 20.

In some embodiments, the second set of dimensions of the second flange 126 may include a second flange diameter 138, a second flange height 140 (see FIG. 2B), a second flange circumference (not shown), and a second flange depth 142 (see FIG. 4C). In some embodiments, the second flange diameter 138 may be the same as or greater than the first diameter of the second protrusion 38 of the first EV charge port 20. In some embodiments, the second flange height 140 may be the same as or greater than the second diameter of the second protrusion 38 of the first EV charge port 20. For example, in some embodiments, the second flange diameter (or width) 138 may be 53.51 mm, or about 53.51 mm; and, the second flange height 140 may be 27.11 mm, or about 27.11 mm. The second flange circumference may be 137.98 mm, or about 137.98 mm.

The second flange depth 142 may be the same as or different from the depth of the second protrusion 38 of the first EV charge port 20. In some embodiments, the second flange depth 142 may be the same as, substantially the same as, or less than the depth of the second protrusion 38 of the first EV charge port 20. In other embodiments, the second flange depth 142 may be the same as the first flange depth 134. For example, in some embodiments, the second flange depth 142 may be 30 mm, or about 30 mm.

The ridge 128 may be imparted with a size and shape that is designed to engage with the channel 44 of the first EV charge port 20. In some embodiments, the ridge 128 may be imparted with a substantially rectangular shape, although other shapes may be used that can engage with the channel 44 of the first EV charge port 20.

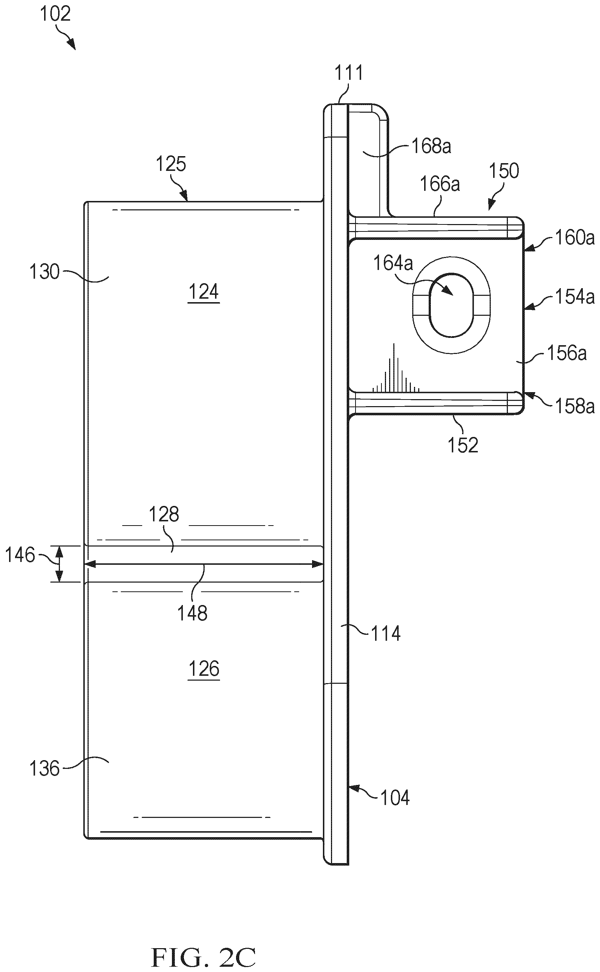

In some embodiments, the ridge 128 may be defined by a ridge width 144 (see FIG. 2B), a ridge height 146, and a ridge depth 148 (see FIG. 2C). The ridge width 144 may be the same as or less than the width of the channel 44 of the first EV charge port 20. In some embodiments, the ridge width 144 may be 6.49 mm, or about 6.49 mm. The ridge height 146 may be the same or greater than the height of the channel 44 of the first EV charge port 20. In some embodiments, the ridge height 146 may be 4.55 mm, or about 4.55 mm.

The ridge depth 148 may be the same as or different than the depth of the channel 44 of the first EV charge port 20. In addition, the ridge depth 148 may be the same as or different than the first flange depth 134 or the second flange depth 142. In some embodiments, the ridge depth 148, the first flange depth 134, and the second flange depth 142 may be the same. In some embodiments, the ridge depth 148 may be 30 mm, or about 30 mm.

The back side 108 of the base 104 may include a clip support unit 150 protruding outwardly therefrom. The clip support unit 150 may be defined by a bottom support 152, a first side 154a and a second side 154b. In some embodiments, the first side 154a may be substantially parallel to the second side 154b. In some embodiments, the second side 154b may be a mirror image of the first side 154a.

The first side 154a may include a first side plate 156a having a first bottom end 158a and a first top end 160a. The first side plate 156a may be attached to the bottom support 152 on the first bottom end 158a. The second side 154b may include a second side plate 156b having a second bottom end 158b and a second top end 160b. The second side plate 156b may be attached to the bottom support 152 on the second bottom end 158b.

The bottom support 152 may connect the first bottom end 158a of the first side plate 156a to the second bottom end 158b of the second side plate 156b. A gap 162 is formed between the first side plate 156a and the second side plate 156b as shown in FIG. 2D.

A first hole 164a may be disposed in and extend entirely through the first side plate 156a between the first top end 160a and the first bottom end 158a. A second hole 164b may also be disposed in and extend entirely through the second side plate 156b between the second top end 160b and the second bottom end 158b. The second hole 164b may be disposed in the second side plate 156b at the same location as the first hole 164a is disposed in the first side plate 156a so that the first hole 164a and the second hole 164b are substantially aligned. The first and second holes 164a, 164b may be any size and shape suitable for a shackle or shank of a lock (e.g., shackle 14 of the lock 10) to pass through. In some embodiments, the first and second holes 164a, 164b may be imparted with a substantially oval shape. In other embodiments, the first and second holes 164a, 164b may be imparted with a substantially circular shape.

The first side 154a may further include a first clip support 166a on the first top end 160a and the second side 154b may include a second clip support 166b on the second top end 160b. A first vertical support 168a may extend from the first clip support 166a toward the top edge 111 of the base 104 and a second vertical support 168b may extend from the second clip support 166b toward the top edge 111 of the base 104. In some embodiments, the first vertical support 168a and the second vertical support 168b may be mirror images of each other. The first and second vertical supports 168a, 168b may also be disposed on the back side 108 of the housing 102 adjacent the divot 122 such that the first vertical support 168a is disposed adjacent the first divot side 123a of the divot 122 and the second vertical support 168b is disposed adjacent the second divot side 123b of the divot 122.

A clip connector 170 may extend between a first top 172a of the first vertical support 168a and a first top 172b of the second vertical support 168b thereby connecting the first vertical support 168a to the second vertical support 168b. The clip connector 170 may also extend across the divot 122 in such a manner that an opening 174 is defined by the first divot side 123a, the second divot side 123b, the bottom divot side 123c, and the clip connector 170. In some embodiments, the clip connector 170 may be imparted with a cylindrical or rod shape.

The clip support unit 150 may be designed to engage with one or more embodiments of a clip (e.g., 200, 400, 800, 1000) disclosed herein. In some embodiments, the first and second clip supports 166a, 166b may be designed to engage or otherwise be in communication with first and second support legs (e.g., 222a, 222b), respectively, of a clip (e.g., 200). The clip connector 170 may be designed to engage with a coupling member (e.g., 216) of the clip such that the coupling member can rotate about the clip connector 170 in order to raise and/or lower a first end (e.g., 204) of a first elongated member (e.g., 202) of the clip. In addition, the gap 162 disposed between the first and second side plates 156a, 156b may be designed to allow a second elongated member (e.g., 228) of the clip to move in a substantially upwardly or downwardly direction between the first and second side plates 156a, 156b. Furthermore, the first and second holes 164a, 164b of the clip support unit 150 may be designed to substantially align with a lock through hole (e.g., 236) of the clip to enable the shackle of a lock (e.g., shackle 14 of lock 10) to pass through the housing 102 and clip and secure same to an EV charge port (e.g., 20) or an EV charge plug.

The first embodiment of the EV lockout device 100 may include a first embodiment of a clip 200 designed for use therewith. The clip 200 may be made of a polymeric material such as a plastic, metal, or other suitable materials, or combinations thereof. In one embodiment, the clip 200 may be made of polypropylene. In some embodiments, the clip 200 may be formed using injection molding or a 3D printer.

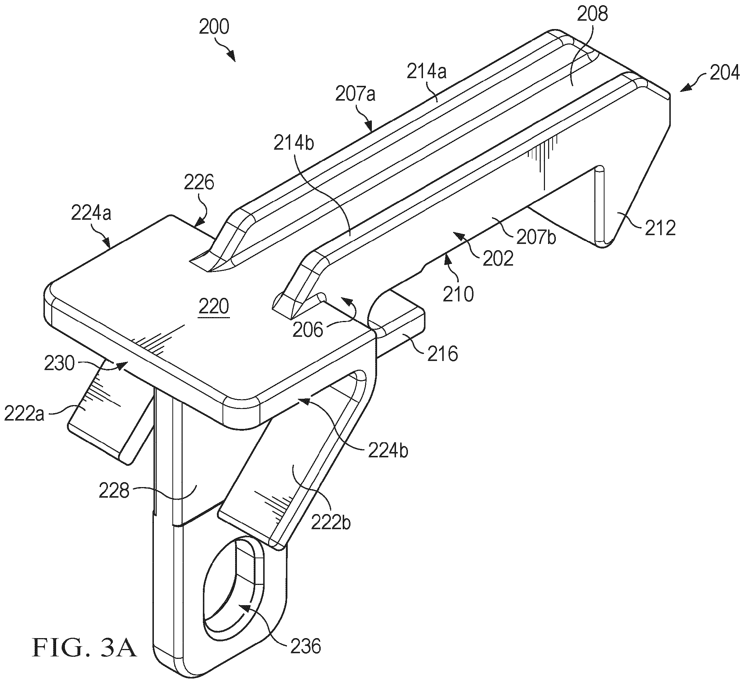

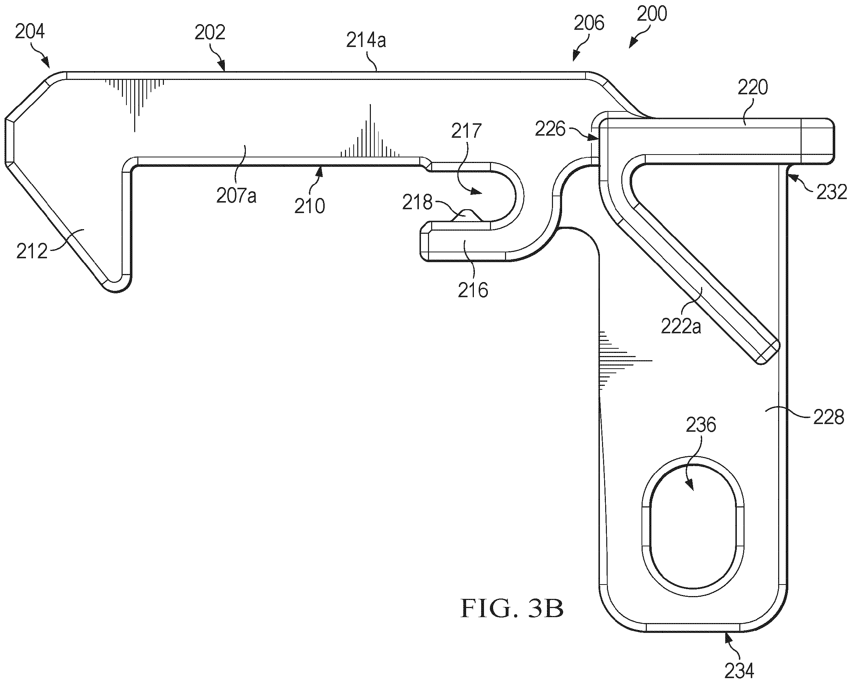

As shown in FIGS. 3A and 3B, the clip 200 may be provided in the form of a body having a first elongated member 202 defining a first end 204 and a second end 206, opposite the first end 204. The first elongated member 202 may have a first elongated side 207a and a second elongated side 207b, whereby the first and second elongated sides 207a, 207b may extend between the first end 204 and the second end 206 of the first elongated member 202. The first elongated member 202 may further by defined by a top side 208 and a bottom side 210.

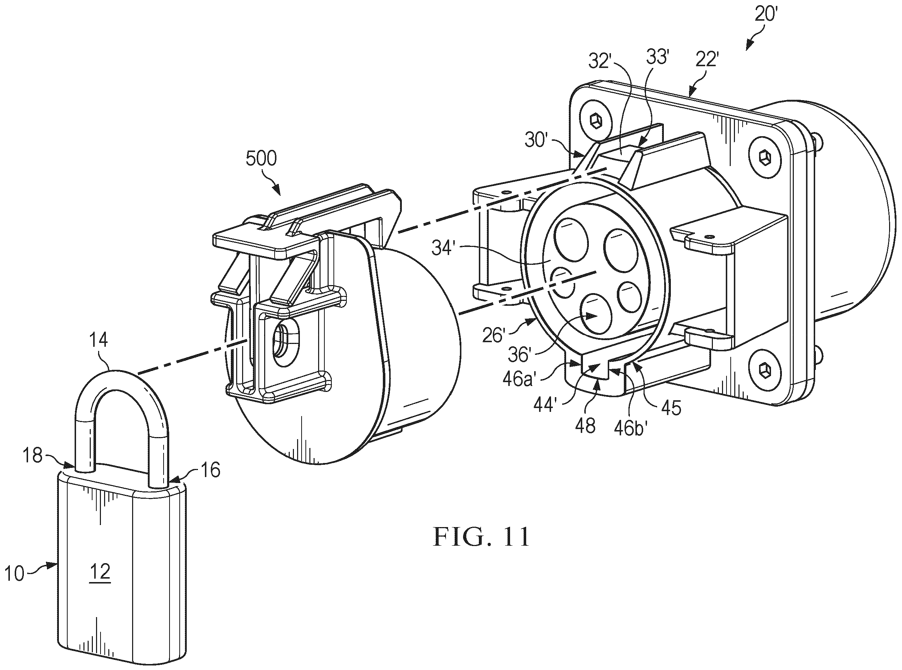

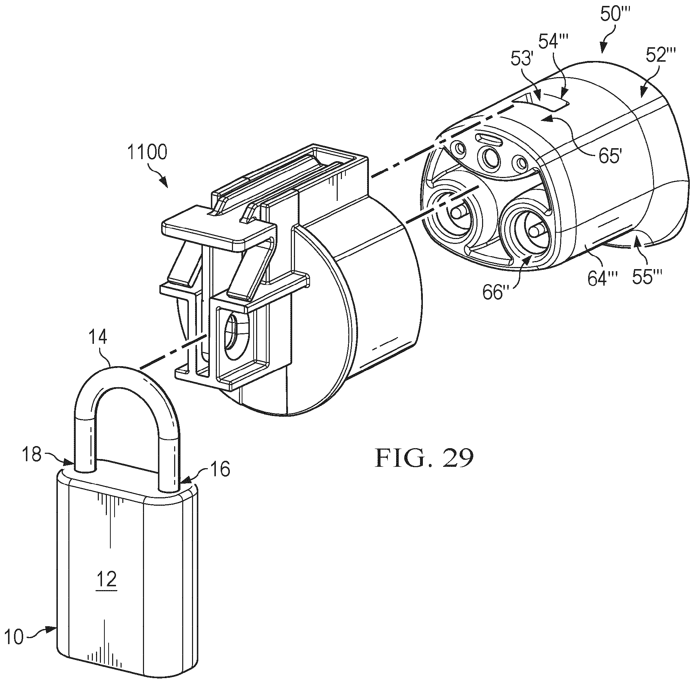

The elongated member 202 may terminate at a hook portion 212 that extends downwardly from the bottom side 210 at the first end 204. In some embodiments, the hook portion 212 may be designed to engage with the locking mechanism 30 of the first EV charge port 20 of FIG. 1 (or the locking mechanism 30' of the second EV charge port 20' of FIG. 11 or the locking mechanism 54‴ of the fourth EV charge plug 50‴ of FIG. 29, discussed below). In some embodiments, the hook portion 212 may be imparted with a substantially triangular cross-sectional profile. In other embodiments, the hook portion 212 may be imparted with a different shape.

The first elongated member 202 may further include a first rail 214a and a second rail 214b that extend along the top side 208 of the first elongated member 202. The first rail 214a may be disposed on and be coextensive with the first elongated side 207a and the second rail 214b may be disposed on and be coextensive with the second elongated side 207b. In some embodiments, the first and second rails 214a, 214b may provide structural support or additional rigidity to the first elongated member 202.

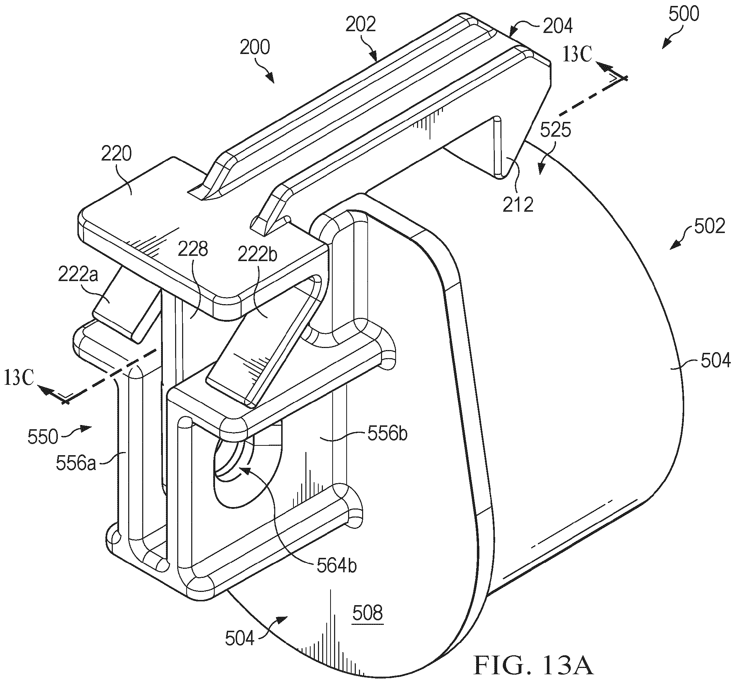

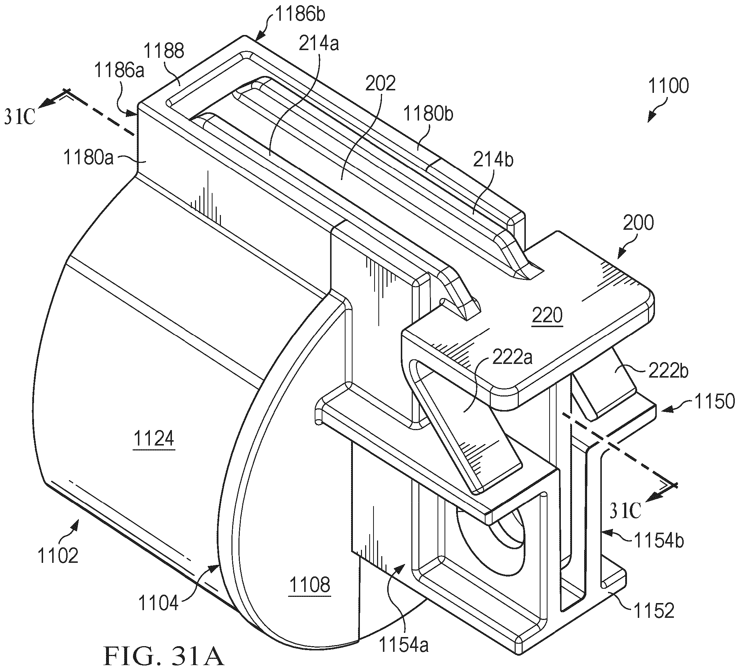

The first elongated member 202 may further include a coupling member 216 protruding downwardly from the bottom side 210 thereof. The coupling member 216 may be disposed on the bottom side 210 of the first elongated member 202 adjacent the second end 206. In some embodiments, the bottom side 210 of the first elongated member 202 together with the coupling member 216 may define a "C" or "U" shape nook 217 as shown in FIG. 3B. The coupling member 216 may include a projection 218 on an end portion of the coupling member 216. In some embodiments, the projection 218 may extend upwardly toward the bottom side 210 of the first elongated member 202. In some embodiments, the nook 217 and the projection 218 may be designed to keep the clip 200 engaged with the housing 102 when placed thereon (see, e.g., FIG. 4C), or to keep the clip 200 engaged with the housing 502 of the third embodiment of an EV lockout device 500 of FIGS. 13A-13C or the housing 1102 of the seventh embodiment of an EV lockout device 1100 of FIGS. 31A-31C, discussed below.

In some embodiments, the first elongated member 202 may be made of a flexible, but sturdy material, so that the hook portion 212 can slide up and over the locking mechanism 30 of the first EV charge port 20 (or the locking mechanism 30' of the second EV charge port 20' or the locking mechanism 54‴ of the fourth EV charge plug 50‴) when the clip 200 is attached to or engaged with the housing 102 of the EV lockout device 100 (or the housing 502 of the EV lockout device 500 or the housing 1102 of the EV lockout device 1100), but is not able to be easily tampered with or broken. In some embodiments, the first elongated member 202 also may be imparted with a length that is suitable for the hook portion 212 to slide up and over the locking mechanism 30 of the first EV charge port 20 (or the locking mechanism 30' or the locking mechanism 54‴ ) and secure the EV lockout device 100 to the locking member 32 of the locking mechanism 30, when the clip 200 is attached or engaged with the housing 102 of the EV lockout device 100 (or the housing 502 or the housing 1102).

The second end 206 of the first elongated member 202 may be connected to or attached to a platform portion 220. The platform portion 220 may include a first support leg 222a disposed on a first platform side 224a of the platform portion 220 and a second support leg 222b disposed on a second platform side 224b of the platform portion 220. In some embodiments, the second support leg 222b may be substantially parallel to and a mirror image of the first support leg 222a. The first and second support legs 222a, 222b may extend from a front end 226 of the platform portion 220 on an angle downwardly and away from the front end 226. In some embodiments, the angle at which the first and second support legs 222a, 222b may extend downwardly from the front end 226 of the platform portion 220 may be 45 degrees, or about 45 degrees. In other embodiments, the angle may be greater than or less than 45 degrees. In some embodiments, the first and second support legs 222a, 222b may be made of a flexible, but sturdy material, so that the first and second support legs 222a, 222b can compress and expand without breaking. In some embodiments, the first and second support legs 222a, 222b may be springs or a flexible material.

In some embodiments, the platform portion 220 may be imparted with a substantially rectangular shape. In other embodiments, the platform portion 220 may be imparted with another shape (e.g., elliptical) or an irregular shape. In some embodiments, the platform portion 220 may be imparted with a length and a width and/or a surface area that is large enough for a human finger or thumb to engage with and press downward on the platform portion 220. For example, in some embodiments, the platform portion 220 may be imparted with a length of 14.88 mm, or about 14.88 mm, and a width of 22.5 mm, or about 22.5 mm.

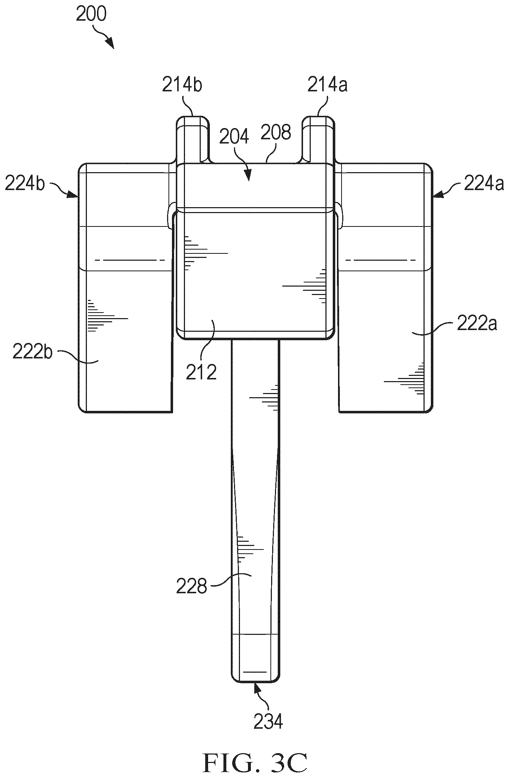

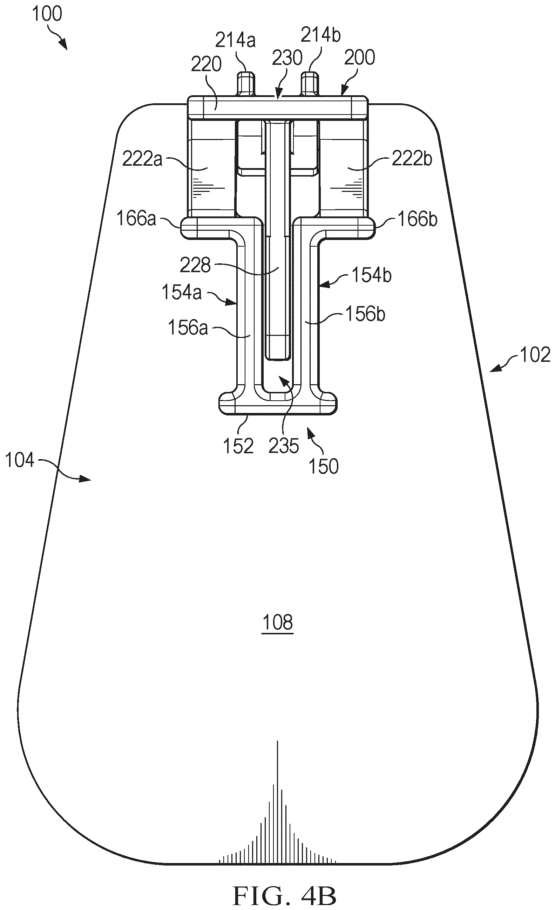

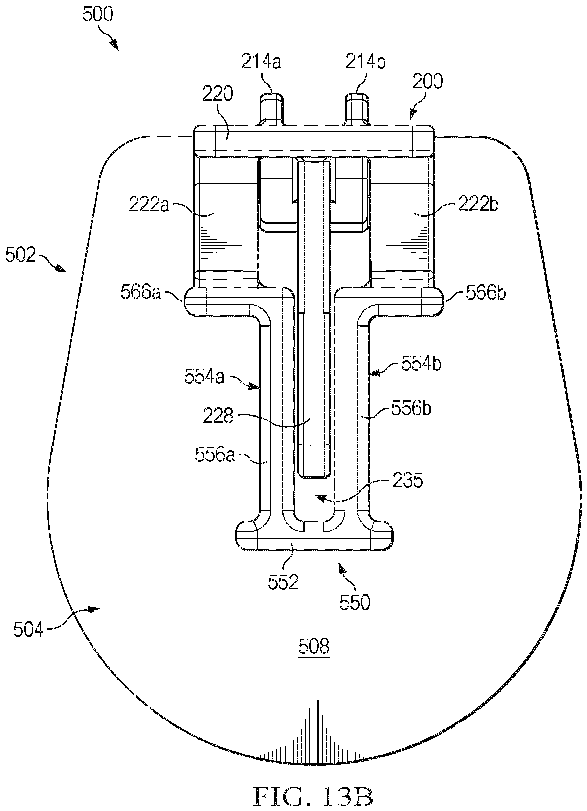

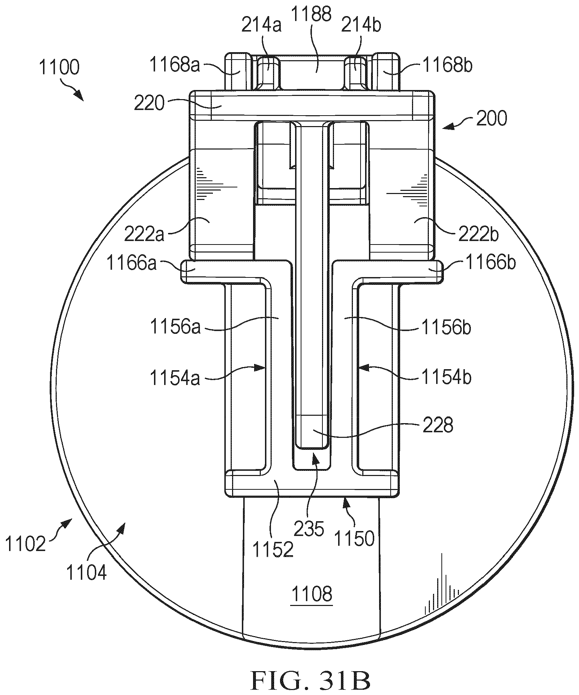

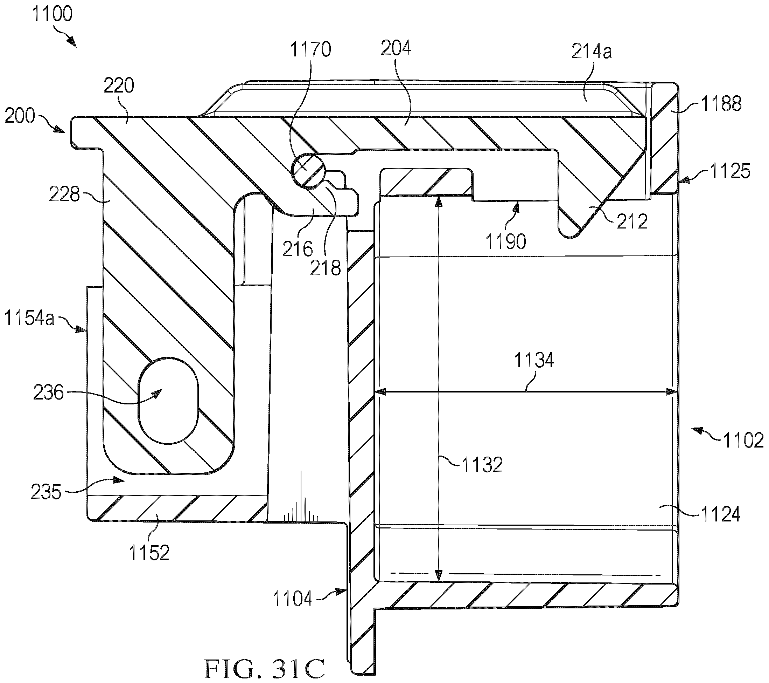

The clip 200 may further include a second elongated member 228 that extends downwardly from a center portion 230 of the platform portion 220. The second elongated member 228 may have a top end 232 and a bottom end 234 and may be connected or attached to the center portion 230 of the platform portion 220 at the top end 232 of the second elongated member 228. In some embodiments, the second elongated member 228 may extend downwardly from the platform portion 220 such that the first elongated member 202 and second elongated member 228 are disposed substantially perpendicular to one another as shown in FIG. 3B. In some embodiments, the second elongated member 228 may be imparted with a length such that a space 235 exists between the bottom support 152 of the housing 102 of the EV lockout device 100 (or the bottom support 552 of the housing 502 of the EV lockout device 500 or the bottom support 1152 of the housing 1102 of the EV lockout device 1100) and the bottom end 234 of the second elongated member 228 when the clip 200 is attached to or engaged with the housing 102 as shown in FIGS. 4B and 4C (or the housing 502 of FIGS. 13B and 3C or the housing 1102 of FIGS. 31B and 31C).

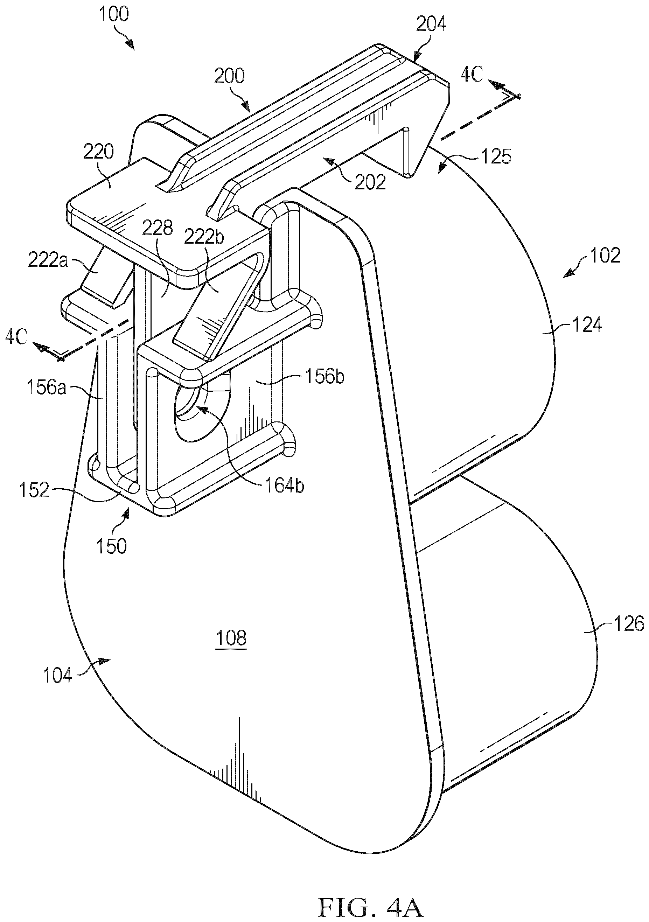

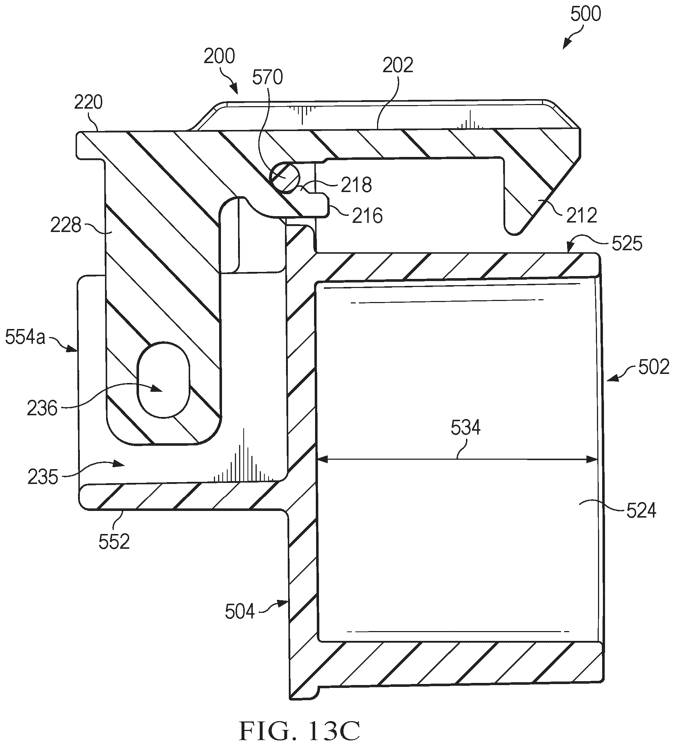

A lock through hole 236 may be disposed in and extend entirely through the second elongated member 228 between the top end 232 and the bottom end 234. In some embodiments, the lock through hole 236 may be disposed adjacent the bottom end 234. The lock through hole 236 may be imparted with a size and shape that is suitable for a shackle or shank of a lock (e.g., shackle 14 of lock 10) to pass through. In some embodiments, the lock through hole 236 may be imparted with the same shape and/or size as the first and second holes 164a, 164b of the clip support unit 150 of the housing 102 (or the first and second holes 564a, 564b of the clip support unit 550 or the first and second holes 1164a, 1164b of the clip support unit 1150). In some embodiments, the lock through hole 236 may be the same shape, but a different size as the first and second holes 164a, 164b of the clip support unit 150 of the housing 102. In other embodiments, the lock through hole 236 may be a different size and/or shape as the first hole 164a or the second hole 164b of the clip support unit 150 of the housing 102 (or the first and second holes 564a, 564b of the clip support unit 550 or the first and second holes 1164a, 1164b of the clip support unit 1150). In some embodiments, the lock through hole 236 may be disposed at a location in the second elongated member 228 such that the lock through hole 236 substantially aligns with the first hole 164a and the second hole 164b of the clip support unit 150 (or the first and second holes 564a, 564b of the clip support unit 550 or the first and second holes 1164a, 1164b of the clip support unit 1150) when the clip 200 is attached to or engages with the housing 102 in a first clip position (see, e.g., FIG. 4A and 4C; or the housing 502 of FIGS. 13A and 13C or the housing 1102 of FIGS. 31A and 31C).

As shown in FIGS. 4A-4C, the clip 200 may attach to or otherwise engage with the housing 102. When in the first clip position, the clip 200 may be placed on the housing 102 such that the coupling member 216, the bottom side 210 of the first elongated member 202, and/or the projection 218 of the clip 200 may engage with the clip connector 170 of the housing 102 as best seen in FIG. 4C. The clip connector 170 may rest within the nook 217 when in the first clip position, and the coupling member 216 may extend through the opening 174 of the housing 102 as shown in FIG. 4C. In addition, when in the first clip position, the first support leg 222a may engage with the first clip support 166a of the clip support unit 150, and the second support leg 222b may engage with the second clip support 166b of the clip support unit 150. The first elongated member 202 of the clip 200 may extend over the top flange portion 125 of the first flange 124. The second elongated member 228 may be disposed within the gap 162 between the first side 154a and the second side 154b of the clip support unit 150 as shown in FIG. 4B. Further, when in the first clip position, the lock through hole 236 of the clip 200 may substantially align with the first hole 164a of the first side 154a and the second hole 164b of the second side 154b of the clip support unit 150.

As discussed above, when in the first clip position, the first and second support legs 222a, 222b may engage with the first and second clip supports 166a, 166b, respectively. In addition, when in the first clip position, the lock through hole 236 of the second elongated member 228 of the clip 200 may substantially align with the first hole 164a of the first side 154a and the second hole 164b of the second side 154b of the clip support unit 150 of the housing 102.

When the EV lockout device 100 is being placed on or is being removed from the first EV charge port 20, the clip 200 may move to a second clip position (not shown). When moving into the second clip position, the first end 204 of the first elongated member 202 may move in a substantially upward direction. In some embodiments, the clip 200 may move to the second clip position in response to the platform portion 220 being pressed downward so that the first and second support legs 222a, 222b compress (e.g., the angle between the platform portion 220 and one or more of the first and second support legs 222a, 222b decreases). In other embodiments, the clip 200 may move to the second clip position in response to the hook portion 212 of the first elongated member 202 engaging with the locking mechanism 30 of the first EV charge port 20. In the second clip position, the first end 204 of the first elongated member 202 may raise up in order for the hook portion 212 to slide over the locking member 32 of the locking mechanism 30 of the first EV charge port 20. As the first end 204 of the first elongated member 202 raises upward, the coupling member 216 and the projection 218 may move or rotate about the clip connector 170 of the housing 102 in a first direction. In some embodiments, as the first end 204 of the first elongated member 202 raises upward, the second elongated member 228 may move in a substantially downward direction such that the space 235 between the bottom end of the second elongated member 228 and the bottom support 152 of the clip support unit 150 decreases. In some embodiments, as the second elongated member 228 moves in the substantially downward direction, the lock through hole 236 of the second elongated member 228 may become out of alignment with the first hole 164a and the second hole 164b of the clip support unit 150.

If the EV lockout device 100 is being placed onto the first EV charge port 20, the clip 200 may move from the first clip position to the second clip position. As the clip 200 is moving from the first clip position to the second clip position, the housing 102 may engage with the first EV charge port 20. In some embodiments, the first flange 124 of the housing 102 may engage with the first protrusion 34 of the first EV charge port 20 such that the first flange 124 surrounds all or a portion of the first protrusion 34, the ridge 128 may engage with the channel 44 of the first EV charge port 20 such that the ridge 128 slides through the channel 44, and the second flange 126 of the housing 102 may engage with the second protrusion 38 of the first EV charge port 20 such that the second flange 126 surrounds all or a portion of the second protrusion 38.

After moving into the second clip position in response to the platform portion 220 being depressed, the clip 200 may move back into the first clip position upon release of the platform portion 220. As the clip 200 moves back into the first clip position, the first end 204 of the first elongated member 202 may lower and the coupling member 216 and the projection 218 may move or rotate about the clip connector 170 of the housing 102 in a direction opposition the first direction. In addition, as the clip 200 moves back in the first clip position, the second elongated member 228 may move in a substantially upward direction as the first and second support legs 222a, 222b decompress (e.g., the angle between the platform portion 220 and one or more of the first and second support legs 222a, 222b increases). If the EV lockout device 100 has been placed on the first EV charge port 20, the hook portion 212 may be disposed on the inner side 33 of the locking member 32 when the clip 200 returns to the first clip position. Additionally, when the clip 200 moves back into the first clip position, the first hole 164a of the clip support unit 150, the lock through hole 236 of the second elongated member 228, and the second hole 164b of the clip support unit 150 may be substantially aligned such that the shackle 14 of lock 10 may be threaded through the first hole 164a, the lock through hole 236, and the second hole 164b, or vice versa. The shackle 14 may then be securely attached to the body 12 of the lock 10, thereby placing the EV lockout device 100 in a locked position as shown in FIG. 5.

When in the locked position, the clip 200 cannot fully move to the second clip position (e.g., the hook portion 212 cannot be raised high enough to slide back over the locking member 32 of the first EV charge port 20) as the shackle 14 prevents the second elongated member 228 of the clip 200 from moving sufficiently downward. To remove the EV lockout device 100 from the first EV charge port 20, the shackle 14 of the lock 10 may be disengaged from the body 12 of the lock 10 and removed from the clip support unit 150 of the housing 102 by threading the shackle 14 through the second hole 164b, the lock through hole 236, and the first hole 164a, or vice versa. Once the lock 10 is removed from the EV lockout device 100, the platform portion 220 of the clip 200 may be depressed causing the clip 200 to move from the first clip position to the second clip position in which the first and second support legs 222a, 222b compress and the hook portion 212 is raised. The hook portion 212 may then be moved over and away from the locking member 32 as the EV lockout device 100 is slid off or otherwise removed from the first EV charge port 20 (e.g., the first flange 124 is removed from the first protrusion 34, the ridge 128 is removed from the channel 44, and the second flange 126 is removed from the second protrusion 38).

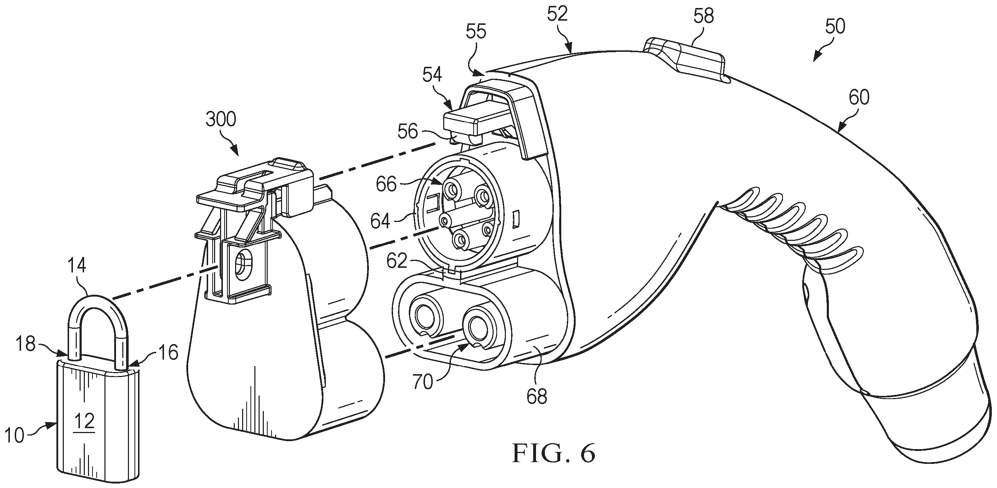

FIG. 6 depicts a partially exploded view of the lock 10, a second embodiment of an EV lockout device 300, and a first electric vehicle (EV) charge plug 50. The first EV charge plug 50 may be attached to an EV charging station (not shown). In some embodiments, the first EV charge plug 50 may be provided in the form of a Combined Charging System (CCS) Type 1 plug.

The first EV charge plug 50 may include a plug housing 52 having a locking mechanism 54 disposed on a front side 55 thereof and protruding outwardly therefrom. The locking mechanism 54 may include a locking member 56 and, in some embodiments, the locking member 56 may be provided in the form of a hook. The first EV charge plug 50 may also include a lock release button 58 on a backside 60 of the plug housing 52. In some embodiments, the lock release button 58 may be used to release or otherwise disengage the locking mechanism 54 and locking member 56 so that the EV lockout device 300 can be removed from the first EV charge plug 50.

The first EV charge plug 50 may include a first protrusion 64 disposed on the front side 55 of the plug housing 52. A first set of terminals 66 may be disposed within the first protrusion 64. The first protrusion 64 may be imparted with a first protrusion shape. In some embodiments, the first protrusion shape may be substantially cylindrical with a substantially circular cross-section. In other embodiments, the first protrusion 64 may be imparted with other shapes, for example, a rectangular or square shape, a triangular shape, a trapezoidal shape, and the like, a combination of shapes, or an irregular shape. In some embodiments, the first protrusion 64 may be imparted with a slanted front side (not shown) where a top portion of the first protrusion has a first depth and the bottom portion of the first protrusion 64 has a second or max depth that is larger than the first depth (e.g., the depth of the protrusion is not uniform along the surface thereof).

The first protrusion 64 may be imparted with a set of dimensions (not shown). In some embodiments, the set of dimensions of the first protrusion 64 may include a diameter, a circumference, and/or a max depth. In some embodiments, the diameter of the first protrusion 64 may be about 44 mm. In some embodiments, the circumference of the first protrusion 64 may be about 138.23 mm. In some embodiments, the max depth of the first protrusion 64 may be about 33.5 mm.

The first EV charge plug 50 may include a second protrusion 68 disposed on the front side 55 of the plug housing 52. A second set of terminals 70 may be disposed within the second protrusion 68.

The second protrusion 68 may be imparted with a second protrusion shape. In some embodiments, the second protrusion shape may be substantially cylindrical with a substantially elliptical cross-section. In other embodiments, the second protrusion 68 may be imparted with other shapes, for example, a rectangular or square shape, a triangular shape, a trapezoidal shape, and the like, a combination of shapes, or an irregular shape.

The second protrusion 68 may be imparted with a set of dimensions (not shown). In some embodiments, the set of dimensions of the second protrusion 68 may include one or more diameters, a circumference, and/or a depth. One or more of the dimensions within the set of dimensions of the second protrusion 68 may be the same or different than one or more of the dimensions within the set of dimensions for the first protrusion 64. In one embodiment, the depth of the second protrusion 68 may be the same as the max depth of the first protrusion 64.

In some embodiments, a first diameter (or width) of the second protrusion 68 may be about 59 mm, and a second diameter (or a height) of the second protrusion 68 may be about 32.6 mm. In some embodiments, the circumference of the second protrusion 38 may be about 155.22 mm. In some embodiments, the depth of the second protrusion 68 may be about 33.5 mm.

In some embodiments, the first protrusion 64 may be disposed above the second protrusion 68. A protrusion ridge 62 may be disposed between the first protrusion 64 and the second protrusion 68. The protrusion ridge 62 may connect the first protrusion 64 to the second protrusion 68.

The protrusion ridge 62 may be imparted with a substantially rectangular shape, although other shapes may be used. The protrusion ridge 62 may be imparted with a set of dimensions (not shown). In some embodiments, the set of dimensions of the protrusion ridge 62 may include a width, a height, and a depth. For example, the width of the protrusion ridge 62 may be about 9 mm. In some embodiments, the height of the protrusion ridge 62 may be about 4.34 mm. In some embodiments, the depth of the protrusion ridge 62 may be about 33.5 mm.

The depth of the protrusion ridge 62 may be the same or different than the max depth of the first protrusion 64 or the depth of the second protrusion 68. In some embodiments, the depth of the protrusion ridge 62, the max depth of the first protrusion 64, and the depth of the second protrusion 68 may be the same.

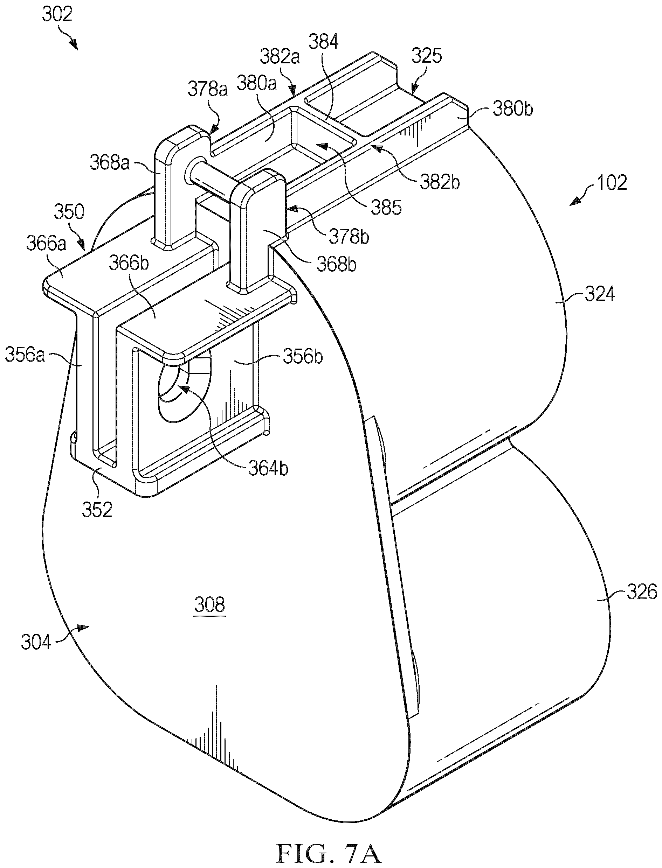

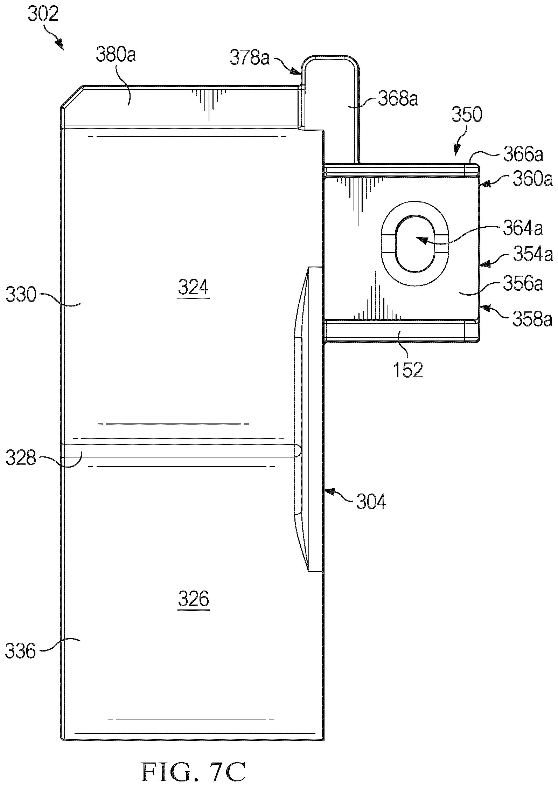

Turning to FIGS. 7A-7D, the second embodiment of the EV lockout device 300 may include a housing 302. The housing 302 may be made of a polymeric material such as a plastic, metal, or other suitable materials, or combinations thereof. In one embodiment, the housing 302 may be made of ABS polymer plastic. In some embodiments, the housing 302 may be formed using injection molding or a 3D printer.

The housing 302 may include a base 304 defined by a front side 306 and a back side 308. The base 304 may also have a top portion 310 and a bottom portion 312, opposite the top portion 310. The base 304 may have an outer edge 314 that defines a shape of the base 304. In some embodiments, the shape of the base 304 may be substantially a square, a rectangle, a circle, an oval, a triangle, a trapezoid, and the like. In some embodiments, the shape of the base 304 may be imparted with round edges as shown in FIGS. 7A. 7B, and 7D. Combinations of shapes and irregular shapes are also contemplated.

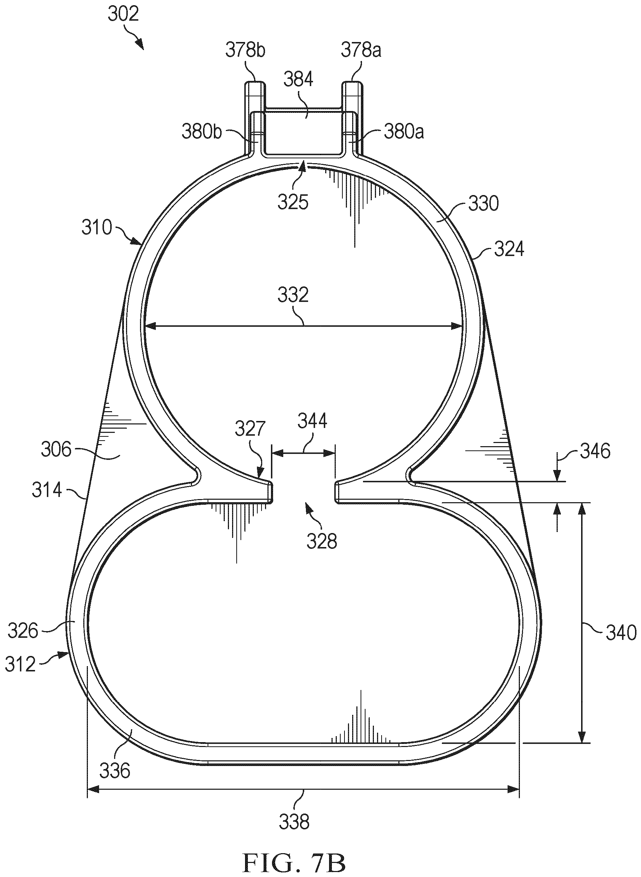

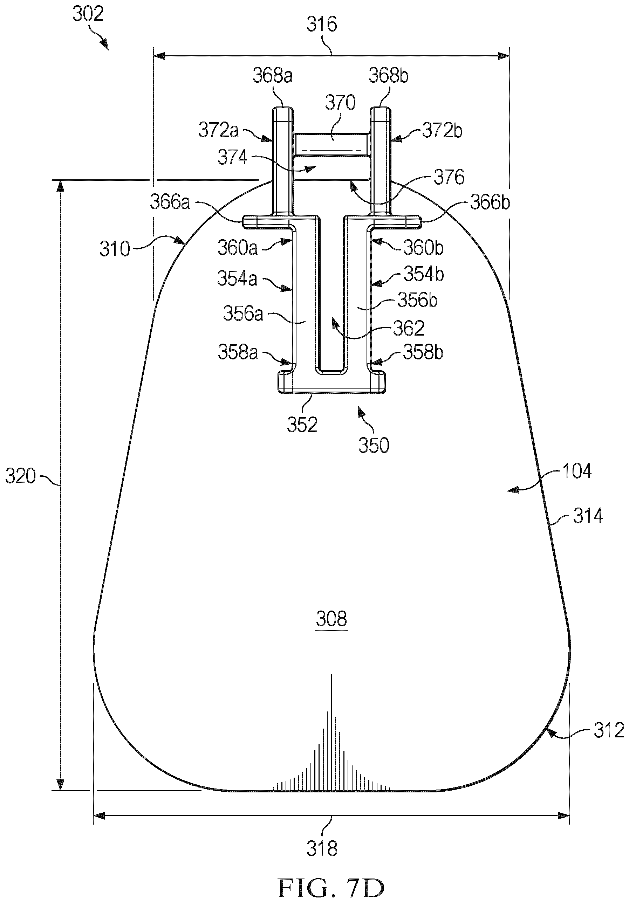

In some embodiments, the base 304 may be imparted with a substantially rounded triangular shape as shown in FIGS. 7B and 7D where a top length 316 dimension of the top portion 310 is less than a bottom length 318 dimension of the bottom portion 312. In some embodiments, the top length 316 of the top portion 310 may be 50.12 mm, or about 50.12 mm, and the bottom length 318 of the bottom portion 312 may be 67 mm, or about 67 mm.

The base 304 may be imparted with a base height 320. In some embodiments, the base height 320 may be 86.27 mm, or about 86.27 mm. The base 304 also may be imparted with a base thickness (not shown). In some embodiments, the base thickness may be 3 mm, or about 3 mm.

The front side 306 of the base 304 may include a first flange 324 and a second flange 326 protruding outwardly therefrom. The first flange 324 may have a top flange portion 3325 and a bottom flange portion 327. In some embodiments, the first flange 324 may be disposed above the second flange 326. The first flange 324 may be connected to the second flange 326 by a flange channel 328. In some embodiments, the flange channel may extend through a center area of the bottom flange portion 327.

The first flange 324 may have a first flange wall 330 that is imparted with a first flange thickness. In some embodiments, the first flange thickness may be 2.4 mm, or about 2.4 mm.

The first flange wall 330 may define a first flange shape. The first flange shape may be any size and shape suitable to engage with the first protrusion 64 when the EV lockout device 300 is placed on or otherwise in communication with the first EV charge plug 50. In some embodiments, the first flange shape may be the same or substantially the same as the shape of the first protrusion 64 of the first EV charge plug 50. In some embodiments, the first flange shape may be substantially cylindrical with a substantially circular cross-section.

The first flange 324 may be imparted with a first set of dimensions. In some embodiments, the first set of dimensions of the first flange 324 may be complimentary to the set of dimensions for the first protrusion 64 of the first EV charge plug 50 so that the first flange 324 can be placed onto and fit over the first protrusion 64. In some instances, a friction fit between the first flange wall 330 and the first protrusion 64 may prevent the housing 302 from disengaging from the first EV charge plug 50.

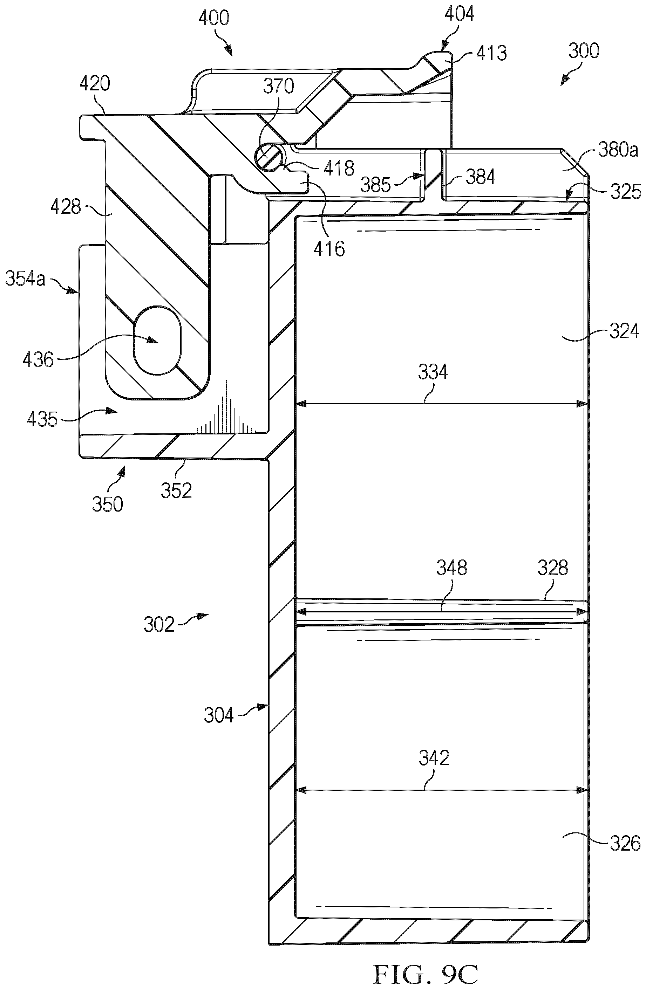

In some embodiments, the first set of dimensions of the first flange 324 may include a first flange diameter 332 (see FIG. 7B), a first flange circumference (not shown), and a first flange depth 334 (see FIG. 9C). In some embodiments, the first flange diameter 332 may be the same as or greater than the diameter of the first protrusion 64 of the first EV charge plug 50. For example, in some embodiments, the first flange diameter 332, may be 45.58 mm, or about 45.58 mm, and the first flange circumference may be 143.19 mm, or about 143.19 mm.

The first flange depth 334 may be the same as or different from the max depth of the first protrusion 64 of the first EV charge plug 50. In some embodiments, the first flange depth 334 is the same as, substantially the same as, or greater than the max depth of the first protrusion 64 of the first EV charge plug 50. For example, in some embodiments, the first flange depth 334 may be 34 mm, or about 34 mm.

The second flange 326 may be imparted with a second flange wall 336 that may be imparted with a thickness. In some embodiments, the second flange thickness may be 2.4 mm, or about 2.4 mm.

The second flange wall 336 may define a second flange shape. The second flange shape may be any size and shape suitable to engage with the second protrusion 68 when the EV lockout device 300 is placed on or otherwise in communication with the first EV charge plug 50. In some embodiments, the second flange shape may be the same or substantially the same as the second protrusion 68 of the first EV charge plug 50. In some embodiments, the second flange shape may be substantially cylindrical with a substantially elliptical cross-section.

The second flange 326 may be imparted with a second set of dimensions. In some embodiments, the second set of dimensions of the second flange 326 may be complimentary to the set of dimensions for the second protrusion 68 of the first EV charge plug 50 so that the second flange 326 can be placed onto and fit over the second protrusion 68. In some instances, a friction fit between the second flange wall 336 and the second protrusion 68 may prevent the housing 302 from disengaging from the first EV charge plug 50.

In some embodiments, the second set of dimensions of the second flange 326 may include a second flange diameter 338, a second flange height 340 (see FIG. 7B), a second flange circumference (not shown), and a second flange depth 342 (see FIG. 9C). In some embodiments, the second flange diameter 338 may be the same as or greater than the first diameter of the second protrusion 68 of the first EV charge plug 50. In some embodiments, the second flange height 340 may be the same as or greater than the second diameter of the second protrusion 68 of the first EV charge plug 50. For example, in some embodiments, the second flange diameter 338 may be 61.58 mm, or about 61.58 mm, the second flange height 340 may be 34.58 mm, or about 34.58 mm, and the second flange circumference may be 162.65 mm, or about 162.65 mm.

The second flange depth 342 may be the same as or different from the depth of the second protrusion 68 of the first EV charge plug 50. In some embodiments, the second flange depth 342 may be the same as, substantially the same as, or greater than the depth of the second protrusion 68 of the first EV charge plug 50. In some embodiments, the second flange depth 342 may be the same as the first flange depth 334. For example, in some embodiments, the second flange depth 342 may be 34 mm, or about 34 mm.

The flange channel 328 may be imparted with a size and shape that is designed to engage with the protrusion ridge 62 of the first EV charge plug 50. In some embodiments, the flange channel 328 may be imparted with a substantially rectilinear shape, although other shapes may be used that can engage with the protrusion ridge 62 of the first EV charge plug 50.

The flange channel 328 may be imparted with a flange channel width 344, a flange channel height 346 (see FIG. 7B), and a flange channel depth 348 (see FIG. 9C). The flange channel width 344 may be the same as or less than the width of the protrusion ridge 62 of the first EV charge plug 50. In some embodiments, the flange channel width 344 may be 9 mm, or about 9 mm. The flange channel height 346 may be the same as or greater than the height of the protrusion ridge 62 of the first EV charge plug 50. In some embodiments, the flange channel height 346 may be2.53 mm, or about 2.53 mm.

The flange channel depth 348 may be the same as or different than the depth of the protrusion ridge 62 of the first EV charge plug 50. In addition, the flange channel depth 348 may be the same as or different than the first flange depth 334 or the second flange depth 342. In some embodiments, the flange channel depth 348, the first flange depth 334, and the second flange depth 342 may be the same. In some embodiments, the flange channel depth 348 may be 34 mm, or about 34 mm.

The back side 308 of the base 304 may include a clip support unit 350 protruding outwardly therefrom. The clip support unit 350 may be defined by a bottom support 352, a first side 354a and a second side 354b. In some embodiments, the second side 354b may be a mirror image of the first side 354a. In some embodiments, the first side 354a may be substantially parallel to the second side 354b.

The first side 354a may include a first side plate 356a having a first bottom end 358a and a first top end 360a. The first side plate 356a may be attached to the bottom support 352 on the first bottom end 358a. The second side 354b may include a second side plate 356b having a second bottom end 358b and a second top end 360b. The second side plate 356b may be attached to the bottom support 352 on the second bottom end 358b.

The bottom support 352 may connect the first bottom end 358a of the first side plate 356a to the second bottom end 358b of the second side plate 356b. A gap 362 is formed between the first side plate 356a and the second side plate 356b as shown in FIG. 7D.

A first hole 364a may be disposed in and extend entirely through the first side plate 356a between the first top end 360a and the first bottom end 358a. A second hole 364b may also be disposed in and extend entirely through the second side plate 356b between the second top end 360b and the second bottom end 358b. The second hole 364b may be disposed in the second side plate 356b at the same location as the first hole 364a is disposed in the first side plate 356a so that the first hole 364a and the second hole 364b are substantially aligned. The first and second holes 364a, 364b may be any size and shape suitable for a shackle or shank of a lock (e.g., shackle 14 of the lock 10) to pass through. In some embodiments, the first and second holes 364a, 364b may be imparted with a substantially oval shape. In other embodiments, the first and second holes 364a, 364b may be imparted with a substantially circular shape.

The first side 354a may further include a first clip support 366a on the first top end 360a, and the second side 354b may include a second clip support 366b on the second top end 360b. A first vertical support 368a may extend from the first clip support 366a upwards and past the top portion 310 of the base 304. A second vertical support 368b may extend from the second clip support 366b upwards and past the top portion 310 of the base 304. In some embodiments, the first vertical support 368a and the second vertical support 368b may be mirror images of each other.

A clip connector 370 may extend between a first top 372a of the first vertical support 368a and a first top 372b of the second vertical support 368b thereby connecting the first vertical support 368a to the second vertical support 368b. The clip connector 370 may also extend from the first vertical support 368a to the second vertical support 368b in such a manner that an opening 374 is defined by the first vertical support 368a, the second vertical support 368b, the top flange portion 325 of the first flange 324, and the clip connector 370. In some embodiments, the clip connector 370 may be imparted with a cylindrical or rod shape.

A first front portion 378a of the first vertical support 368a may be connected or attached to the top flange portion 325 of the first flange 324. A second front portion 378b of the second vertical support 368a may be connected or attached to the top flange portion 325 of the first flange 324. Extending outward from the first front portion 378a of the first vertical support 368a may be a first guide rail 380a, and extending outward from the second front portion 378b of the second vertical support 368b may be a second guide rail 380b. In some embodiments, the first and second guide rails 380a, 380b may extend along the top flange portion 325 of the first flange 324 across the entire length of the top flange portion 325. In some embodiments, the first and second guide rails 380a, 380b may be disposed substantially parallel to one another, and may be mirror images of each other.

The first guide rail 380a may have a first center portion 382a, and the second guide rail 380b may have a second center portion 382b. In some embodiments, a center divider 384 may extend from the first center portion 382a of the first guide rail 380a to the second center portion 382b of the second guide rail 380b, thereby connecting the first guide rail 380a to the second guide rail 380b. The center divider 384 may also be connected or attached to the top flange portion 325 of the first flange 324 on a bottom side of the center divider 384. The center divider 384 may have an inner side 385 as shown in FIGS. 7A and 9C.

The clip support unit 350 may be designed to engage with one or more embodiments of a clip (e.g., 200, 400, 800, 1000) disclosed herein. In some embodiments, the first and second clip supports 366a, 366b may be designed to engage or otherwise be in communication with first and second support legs (e.g., 422a, 422b), respectively, of a clip (e.g., 400). The clip connector 370 may be designed to engage with a coupling member (e.g., 416) of the clip such that the coupling member can rotate about the clip connector 370 in order to raise and/or lower a first end (e.g., 404) of a first elongated member (e.g., 402) of the clip. In addition, the gap 362 disposed between the first and second side plates 356a, 356b of the clip support unit 350 may be designed to allow a second elongated member (e.g., 428) of the clip to move in a substantially upwardly or downwardly direction between the first and second side plates 356a, 356b. The first and second guide rails 380a, 380b may be designed to engage or otherwise be in communication with first and second guide members (e.g., 412a, 412b), respectively, of the clip. Furthermore, the first and second holes 364a, 364b of the clip support unit 350 may be designed to substantially align with a lock through hole (e.g., 436) of the clip to enable the shackle of a lock (e.g., shackle 14 of lock 10) to pass through the housing 302 and clip and secure same to an EV charge port or an EV charge plug (e.g., 50).

The second embodiment of the EV lockout device 300 may include a second embodiment of a clip 400 designed for use therewith. The clip 400 may be made of a polymeric material such as a plastic, metal, or other suitable materials, or combinations thereof. In one embodiment, the clip 400 may be made of polypropylene. In some embodiments, the clip 400 may be formed using injection molding or a 3D printer.

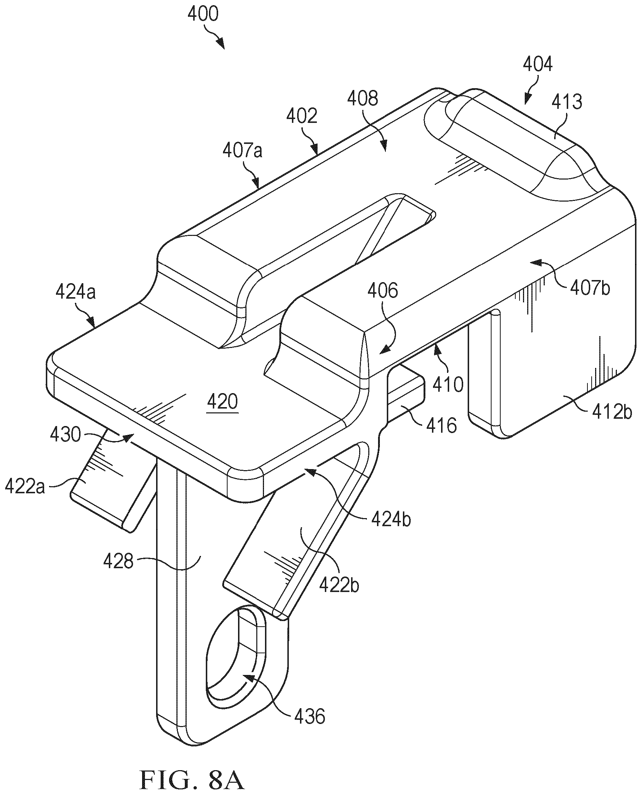

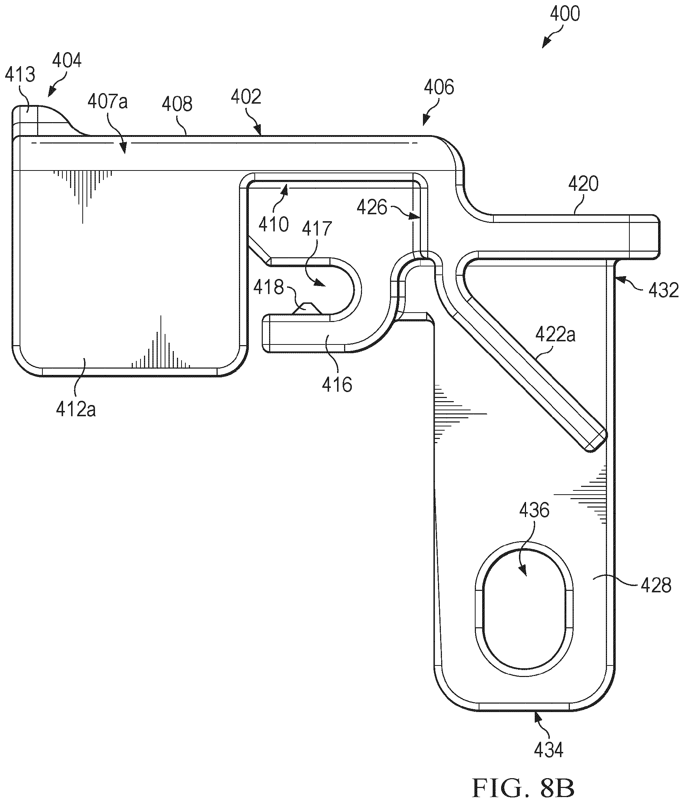

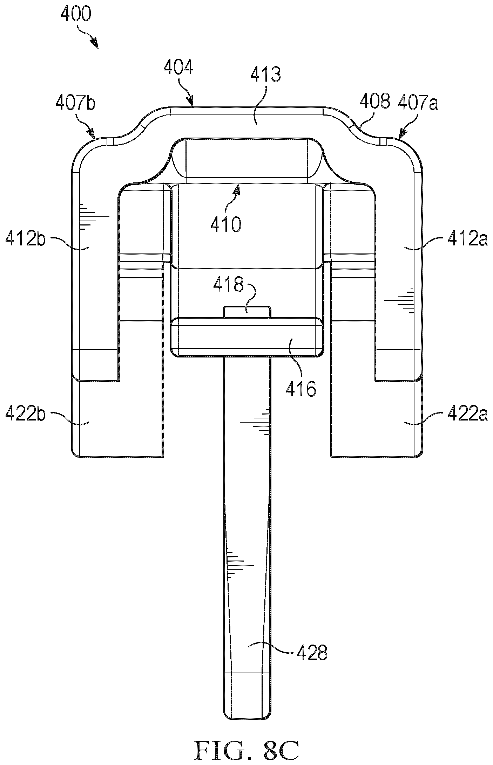

As shown in FIGS. 8A and 8B, the clip 400 may be provided in the form of a body having a first elongated member 402 defining a first end 404 and a second end 406, opposite the first end 404. The first elongated member 402 may have a first elongated side 407a and a second elongated side 407b, whereby the first and second elongated sides 407a, 407b may extend between the first end 404 and the second end 406 of the first elongated member 402. The first elongated member 402 may further be defined by a top side 408 and a bottom side 410.

The first elongated member 402 may further include a first guide member 412a and a second guide member 412b. The first guide member 412a may extend downwardly from the first elongated side 407a and the second guide member 412b may extend downwardly from the second elongated side 407b. In some embodiments, the first and second guide members 412a, 412b may be imparted with a substantially square or rectangular shape. In other embodiments, the first and second guide members 412a, 412b may be imparted with a different shape.

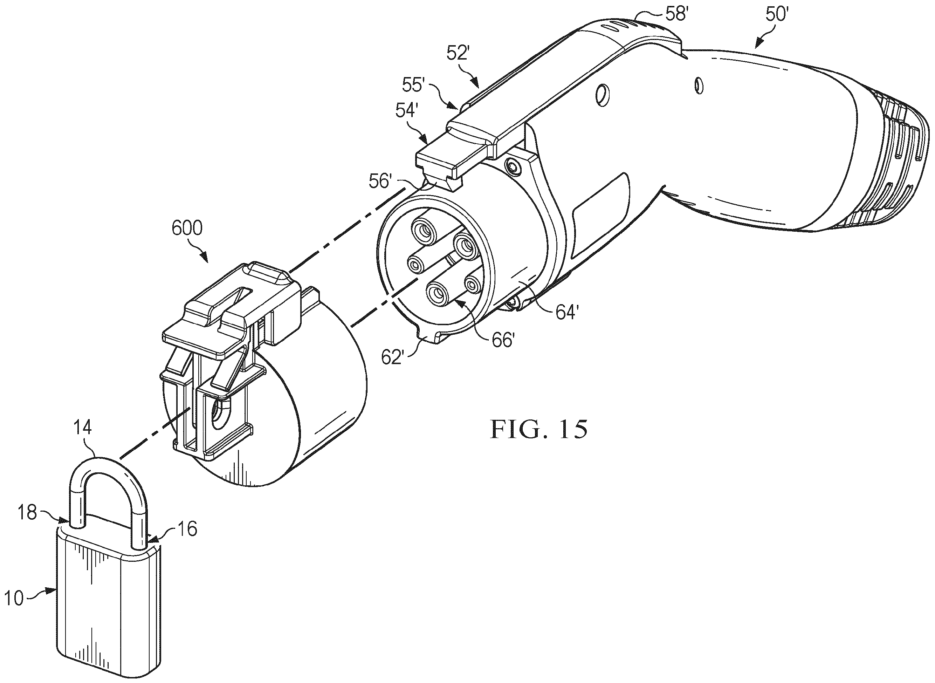

The first end 404 may have a raised member 413. The raised member 413 may project upwardly from the top side 408 of the first elongated member 402. The raised member 413 may be designed to enable the first end 404 of the clip 400 to accommodate and slide over the locking mechanism 54 of the first EV charge plug 50 (or the locking mechanism 54' of the second EV charge plug 50' of FIG. 15, discussed below) as the clip 400 moves from a first clip position to a second clip position (as discussed in more detail below), and vice versa.

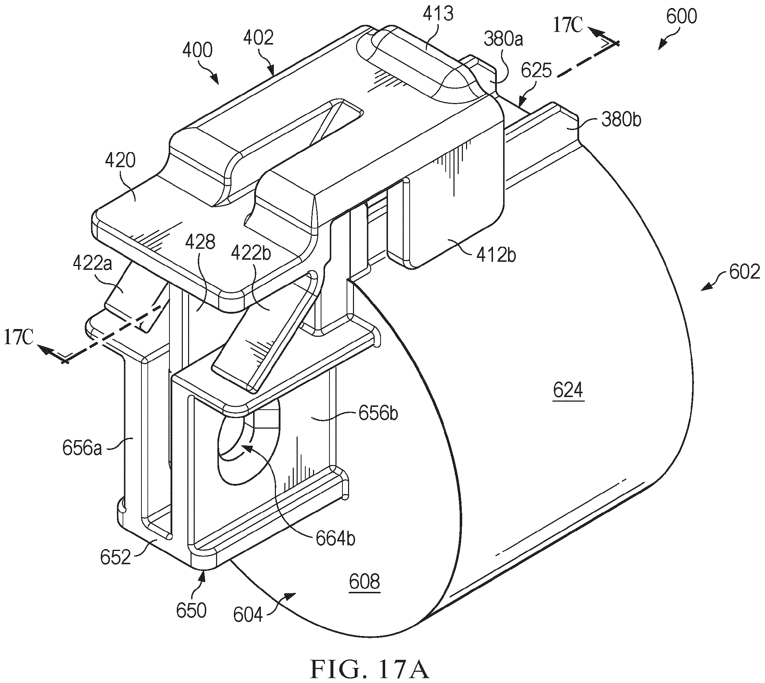

The first elongated member 402 may further include a coupling member 416 protruding downwardly from the bottom side 410 thereof. The coupling member 416 may be disposed on the bottom side 410 of the first elongated member 402 adjacent the second end 406. In some embodiments, the bottom side 410 of the first elongated member 402 together with the coupling member 416 may define a "C" or "U" shape nook 417 as shown in FIG. 8B. The coupling member 416 may include a projection 418 on an end portion of the coupling member 416. In some embodiments, the projection 418 may extend upwardly toward the bottom side 410 of the first elongated member 402. In some embodiments, the nook 417 and the projection 418 may be designed to keep the clip 400 engaged with the housing 602 when placed thereon (see, e.g., FIG. 9C) or to keep the clip 400 engaged with the housing 602 of the fourth embodiment of an EV lockout device 600 of FIGS. 17A-17C.

In some embodiments, the first elongated member 402 may be made of a flexible, but sturdy material, so that the first end 404 can slide up and over the locking mechanism 54 of the first EV charge plug 50 (the locking mechanism 54' of the second EV charge plug 50') when the clip 400 is attached to or engaged with the housing 302 of the EV lockout device 300 (or the housing 602 of the EV lockout device 600) ), but is not able to be easily tampered with or broken. In some embodiments, the first elongated member 402 may be imparted with a length that is suitable for the first elongated member 402 to engage with the locking mechanism 54 of the first EV charge plug 50 (the locking mechanism 54') and secure the EV lockout device 300 to the locking member 56, when the clip 400 is attached to or engaged with the housing 302 of the EV lockout device 300 (or the housing 602 of the EV lockout device 600).

The second end 406 of the first elongated member 402 may be connected to or attached to a platform portion 420. The platform portion 420 may include a first support leg 422a disposed on a first platform side 424a of the platform portion 420 and a second support leg 422b disposed on a second platform side 424b of the platform portion 420. In some embodiments, the second support leg 422b may be substantially parallel to and a mirror image of the first support leg 422a. The first and second support legs 422a, 422b may extend from a front end 426 of the platform portion 420 on an angle downward and away from the front end 426. In some embodiments, the angle at which the first and second support legs 422a, 422b may extend downwardly from the front end 426 of the platform portion 420 may be 45 degrees or about 45 degrees. In other embodiments, the angle may be greater than or less than 45 degrees. In some embodiments, the first and second support legs 422a, 422b may be made of a flexible, but sturdy material, so that the first and second support legs 422a, 422b can compress and expand without breaking. In some embodiments, the first and second support legs 422a, 422b may be springs or a flexible material.

In some embodiments, the platform portion 420 may be imparted with a substantially rectangular shape. In other embodiments, the platform portion 420 may be imparted with another shape (e.g., elliptical) or an irregular shape. In some embodiments, the platform portion 420 may be imparted with a length and a width and/or a surface area that is large enough for a human finger or thumb to engage with and press downward on the platform portion 420. For example, in some embodiments, the platform portion 420 may be imparted with a length of 10.52 mm, or about 10.52 mm, and a width of 22 mm, or about 22 mm.

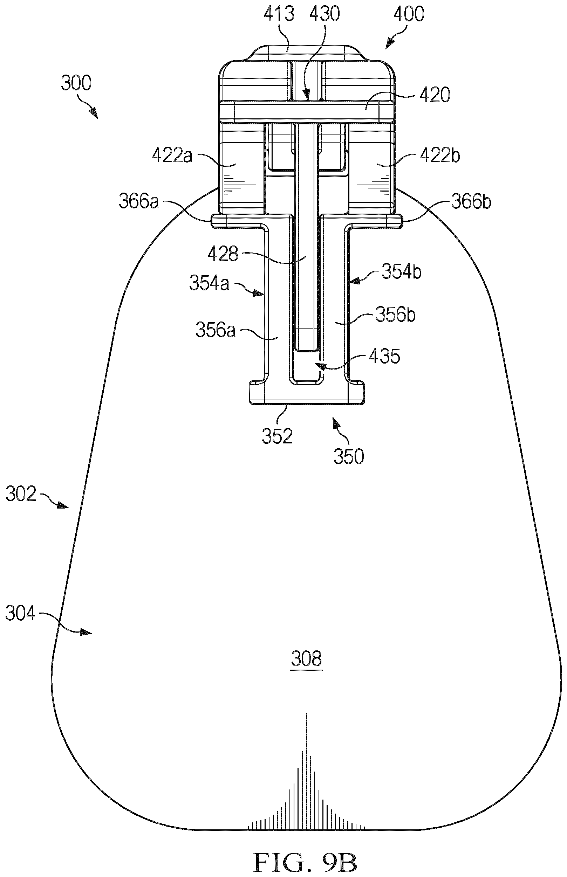

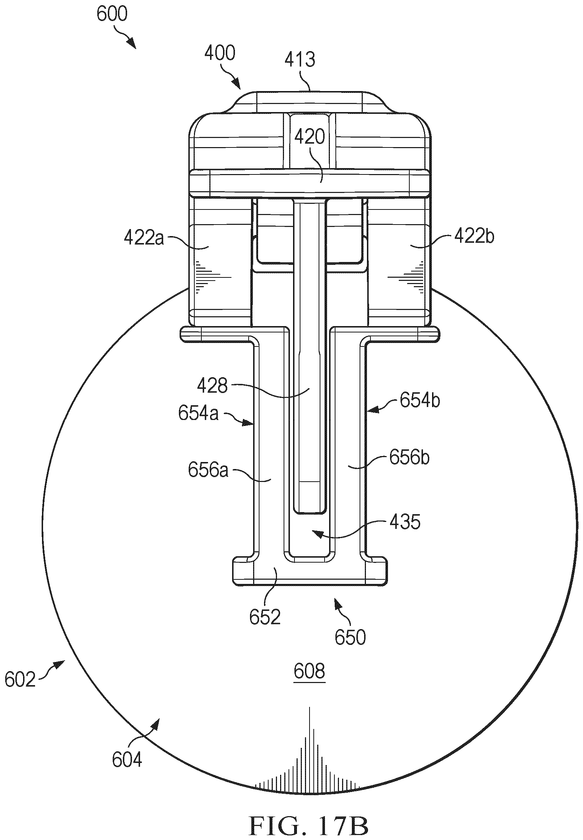

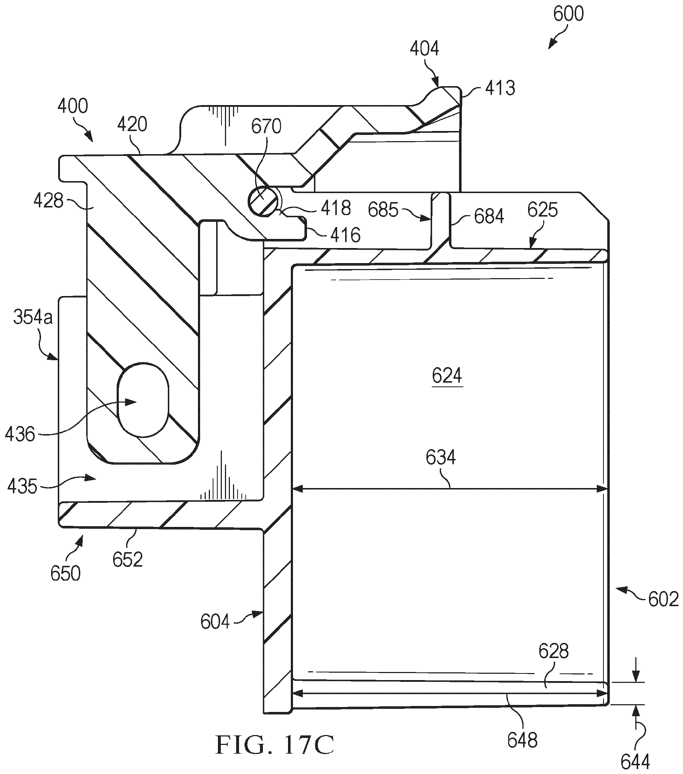

The clip 400 may further include a second elongated member 428 that extends downwardly from a center portion 430 of the platform portion 420. The second elongated member 428 may have a top end 432 and a bottom end 434 and may be connected or attached to the center portion 430 of the platform portion 420 at the top end 432 of the second elongated member 428. In some embodiments, the second elongated member 428 may extend downwardly from the platform portion 420 such that the first elongated member 402 and second elongated member 428 are disposed substantially perpendicular to one another as shown in FIG. 8B. In some embodiments, the second elongated member 428 may be imparted with a length such that a space 435 exists between the bottom support 352 of the housing 302 of the EV lockout device 300 (or the bottom support 652 of the housing 602 of the EV lockout device 600) and the bottom end 434 of the second elongated member 428 when the clip 400 is attached to or engaged with the housing 302 of the EV lockout device 300 as shown in FIGS. 9B and 9C (or the housing 602 of FIGS. 17B and 17C).

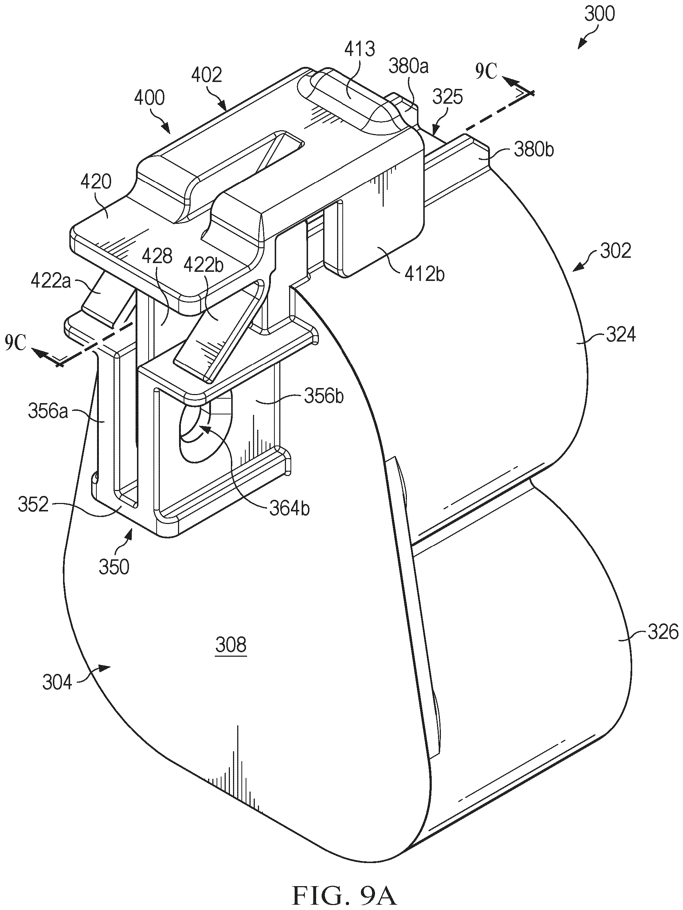

A lock through hole 436 may be disposed in and extend entirely through the second elongated member 428 between the top end 432 and the bottom end 434. In some embodiments, the lock through hole 436 may be disposed adjacent the bottom end 434. The lock through hole 436 may be imparted with a size and shape that is suitable for a shackle or shank of a lock (e.g., shackle 14 of lock 10) to pass through. In some embodiments, the lock through hole 436 may be imparted with the same shape and/or size as the first and second holes 364a, 364b of the clip support unit 350 of the housing 302 (or the first and second holes 664a, 664b of the clip support unit 650). In some embodiments, the lock through hole 436 may be the same shape, but a different size as the first and second holes 364a, 364b of the clip support unit 350 of the housing 302. In other embodiments, the lock through hole 436 may be a different size and/or shape as the first hole 364a or the second hole 364b of the clip support unit 350 of the housing 302 (or the first and second holes 664a, 664b of the clip support unit 650). In some embodiments, the lock through hole 436 may be disposed at a location in the second elongated member 428 such that the lock through hole 436 substantially aligns with the first hole 364a and the second hole 364b of the clip support unit 350 (or the first and second holes 664a, 664b of the clip support unit 650) when the clip 400 is attached to or engages with the housing 302 in a first clip position (see, e.g., FIGS. 9A and 9C; or the housing 602 of FIGS. 17A and 17C).

As shown in FIGS. 9A-9C, the clip 400 may attach to or otherwise engage with the housing 302. When in the first clip position, the clip 400 may be placed on the housing 302 such that the coupling member 416, the bottom side 410 of the first elongated member 402, and/or the projection 418 of the clip 400 may engage with the clip connector 370 of the housing 302 as best seen in FIG. 9C. The clip connector 370 may rest within the nook 417 when in the first clip position, and the coupling member 416 may extend through the opening 374 of the housing 302 as shown in FIG. 4C. In addition, when in the first clip position, the first support leg 422a may engage with the first clip support 366a of the clip support unit 350, and the second support leg 422b may engage with the second clip support 366b of the clip support unit 350. The first elongated member 402 of the clip 400 may extend over the top flange portion 325 of the first flange 324. The second elongated member 428 may be disposed within the gap 362 between the first side 354a and the second side 354b of the clip support unit 350 FIG. 9B. Further, when in the first clip position, the lock through hole 436 of the clip 400 may substantially align with the first hole 364a of the first side 354a and the second hole 364b of the second side 354b of the clip support unit 350.

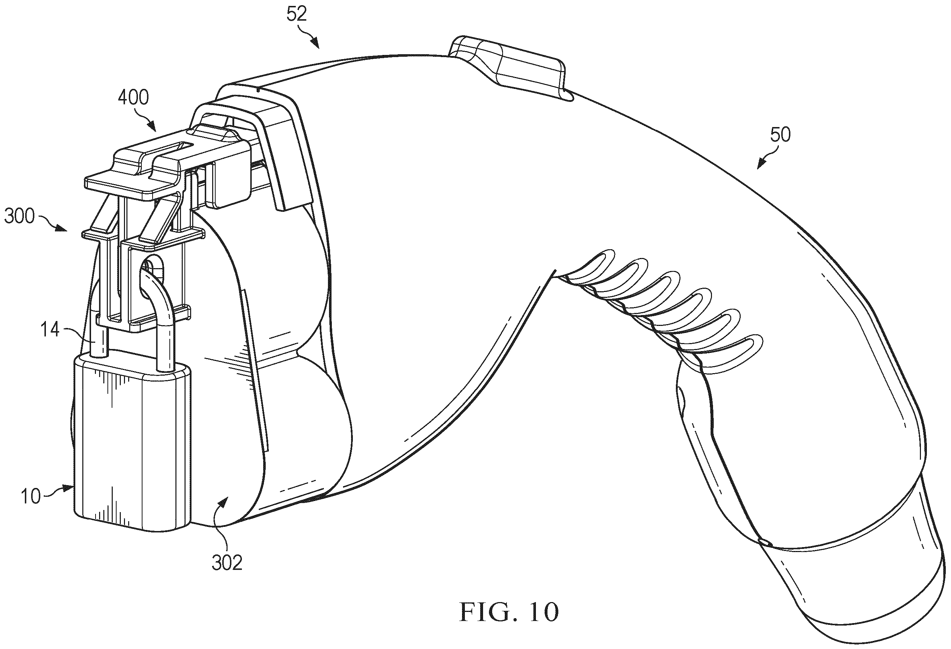

When in the first clip position, the first guide member 412a of the clip 400 may be disposed on an outer side of the first guide rail 380a on the top flange portion 376 of the first flange 324 of the housing 302. In addition, the second guide member 412b of the clip 400 may be disposed on an outer side of the second guide rail 380b on the top flange portion 376 of the first flange 324 of the housing 302. In some embodiments, the first and second guide members 412a, 412b may be designed to prevent access to the locking mechanism 54 of the first EV charge plug 50 when in a locked position as shown in FIG. 10.

As discussed above, when in the first clip position, the first and second support legs 422a, 422b may engage with the first and second clip supports 366a, 366b, respectively. In addition, when in the first clip position, the lock through hole 436 of the second elongated member 428 of the clip 400 may substantially align with the first hole 364a of the first side 354a and the second hole 364b of the second side 354b of the clip support unit 350 of the housing 302. Further, when in the first clip position, the first and second guide members 412a, 412b may be disposed on the outer side of the first and second guide rails 380a, 380b, respectively.

When the EV lockout device 300 is being placed on or is being removed from the first EV charge plug 50, the clip 400 may move to a second clip position (not shown). When moving into the second clip position, the first end 404 of the first elongated member 402 may move in a substantially upward direction. In some embodiments, the clip 400 may move to the second clip position either in response to the platform portion 420 being pressed downward so that the first and second support legs 422a, 422b compress (e.g., the angle between the platform portion 420 and one or more of the first and second support legs 422a, 422b decreases). In some embodiments, the clip 400 may move to the second clip position in response to the raised member 413 of the first end 404 of the first elongated member 402 engaging with the locking mechanism 54 of the first EV charge plug 50. In other embodiments, the clip 400 may move to the second clip position in response to the locking member 56 of the first EV charge plug 50 engaging with the center divider 384 disposed between the first and second guard rails 380a, 380b on the top flange portion 376. In the second clip position, the first end 404 of the first elongated member 402 may raise up in order for the locking member 56 to slide up and over the center divider 384 disposed between the first and second guard rails 380a, 380b on the top flange portion 376 of the housing 302. As the first end 404 of the first elongated member 402 raises upward, the coupling member 416 and the projection 418 may move or rotate about the clip connector 370 of the housing 302 in a first direction. In some embodiments, as the first end 404 of the first elongated member 402 raises upward, the second elongated member 428 may move in a substantially downward direction such that the space 435 between the bottom end of the second elongated member 428 and the bottom support 352 of the clip support unit 350 decreases. In some embodiments, as the second elongated member 428 moves in the substantially downward direction, the lock through hole 436 of the second elongated member 428 may become out of alignment with the first hole 364a and the second hole 364b of the clip support unit 350.

If the EV lockout device 300 is being placed onto the first EV charge plug 50, the clip 400 may move from the first clip position to the second clip position. As the clip 400 is moving from the first clip position to the second clip position, the housing 302 may engage with the first EV charge plug 50. In some embodiments, the first flange 324 of the housing 302 may engage with the first protrusion 64 of the first EV charge plug 50 such that the first flange 324 surrounds all or a portion of the first protrusion 64, the flange channel 328 may engage with the protrusion ridge 62 of the first EV charge plug 50 such that the protrusion ridge 62 slides through the flange channel 328, and the second flange 326 of the housing 302 may engage with the second protrusion 68 of the first EV charge plug 50 such that the second flange 326 surrounds all or a portion of the second protrusion 68.

After moving into the second clip position in response to the platform portion 420 being depressed, the clip 400 may move back into the first clip position upon release of the platform portion 420. As the clip 400 moves back into the first clip position, the first end 404 of the first elongated member 402 may lower and the coupling member 416 and the projection 418 may move or rotate about the clip connector 370 of the housing 302 in a direction opposition the first direction. In addition, as the clip 400 moves back in the first clip position, the second elongated member 428 may move in a substantially upward direction as the first and second support legs 422a, 422b decompress (e.g., the angle between the platform portion 420 and one or more of the first and second support legs 422a, 422b increases). If the EV lockout device 300 has been placed on the first EV charge plug 50, the locking member 56 may be disposed on the inner side 385 of the center divider 384, when the clip 400 returns to the first clip position. Additionally, when the clip 400 moves back into the first clip position, the first hole 364a of the clip support unit 350, the lock through hole 436 of the second elongated member 428, and the second hole 364b of the clip support unit 350 may be substantially aligned such that the shackle 14 of lock 10 may be threaded through the first hole 364a, the lock through hole 436, and the second hole 364b, or vice versa. The shackle 14 may then be securely attached to the body 12 of the lock 10, thereby placing the EV lockout device 300 in a locked position as shown in FIG. 10.

When in the locked position, the clip 400 cannot fully move to the second clip position (e.g., the first end 404 of the first elongated member 402 of the clip 400 cannot be raised high enough for the locking member 56 to slide up and back over the center divider 384 on the top flange portion 376 of the housing 302) as the shackle 14 prevents the second elongated member 428 of the clip 400 from moving sufficiently downward. To remove the EV lockout device 300 from the first EV charge plug 50, the shackle 14 of the lock 10 may be disengaged from the body 12 of the lock 10 and removed from the clip support unit 350 of the housing 302 by threading the shackle 14 through the second hole 364b, the lock through hole 436, and the first hole 364a, or vice versa. Once the lock 10 is removed from the EV lockout device 300, the platform portion 420 of the clip 400 may be depressed causing the clip 400 to move from the first clip position to the second clip position in which the first and second support legs 464a, 464b compress and the first end 404 of the first elongated member 402 is raised. The locking member 56 of the first EV charge plug 50 may then be moved up and over the center divider 384 as the EV lockout device 300 is slid off or otherwise removed from the first EV charge plug 50 (e.g., the first flange 324 is removed from the first protrusion 64, the flange channel 328 is removed from the protrusion ridge 62, and the second flange 326 is removed from the second protrusion 68).

FIG. 11 depicts a partially exploded view of the lock 10, a third embodiment of an EV lockout device 500, and a second electric vehicle (EV) charge port 20'.

The second EV charge port 20' may be disposed inside of, on, or otherwise associated with an electric vehicle (not shown). In some embodiments, the second EV charge port 20' may be provided in the form of a J1772 socket.

The second EV charge port 20' may include a port housing 22' having a first protrusion aperture 26'. The first EV charge port 20' may include a locking mechanism 30' disposed above the first protrusion aperture 26'. The locking mechanism 30' may include a locking member 32' having an inner side 33'.

The second EV charge port 20' may further include a first protrusion 34' disposed within the first protrusion aperture 26'. A first set of terminals receptors 36' may be disposed within the first protrusion 34'.

The first protrusion 34' may be imparted with a first protrusion shape. In some embodiments, the first protrusion shape may be substantially cylindrical with a substantially circular cross-section. In other embodiments, the first protrusion 34' may be imparted with other shapes, for example, a rectangular or square shape, a triangular shape, a trapezoidal shape, and the like, a combination of shapes, or an irregular shape.

The first protrusion 34' may be imparted with a set of dimensions (not shown). In some embodiments, the set of dimensions of the first protrusion 34' may include a diameter, a circumference, and/or a depth. In some embodiments, the diameter of the first protrusion 34' may be about 33.53 mm. In some embodiments, the circumference of the first protrusion 34' may be about 105.33 mm. In some embodiments, the depth of the first protrusion 34' may be about 31.75 mm.

A channel 44' may be disposed on a bottom area 45 of the first protrusion aperture 26'. The channel 44' may be defined by a first channel side 46a', a second channel side 46b', and a channel bottom 48. In some embodiments, the channel 44' may be imparted with a substantially rectilinear shape, although other shapes may be used. The channel 44' may be imparted with a set of dimensions (not shown). In some embodiments, the set of dimensions of the channel 44' may include a width, a height, and a depth. For example, in some embodiments, the width of the channel 44' may be about 8.56 mm. In some embodiments, the height of the channel 44' may be about 4.3 mm. In some embodiments, the depth of the channel 44' may be about 31.75 mm.

The depth of the channel 44' may be the same or different than the depth of the first protrusion 34'. In some embodiments, the depths of the channel 44' and the first protrusion 34' may be the same.

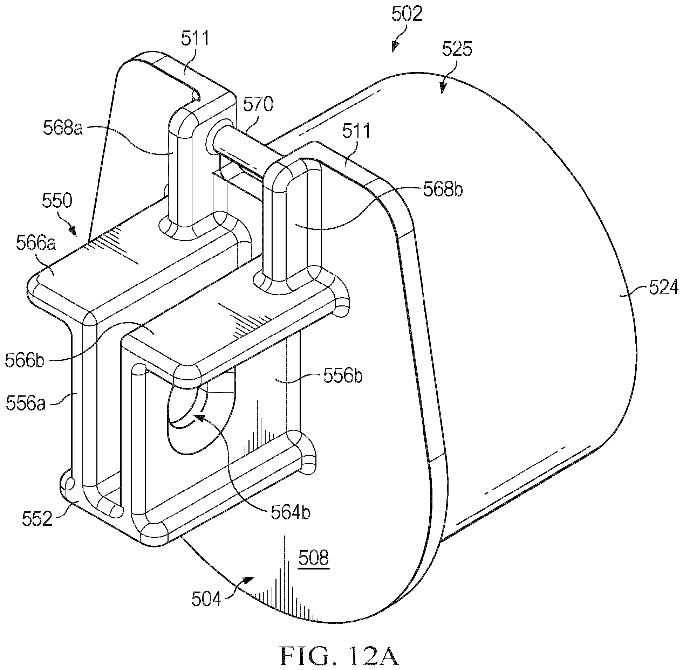

Turning to FIGS. 12A-12D, the third embodiment of the EV lockout device 500 may include a housing 502. The housing 502 may be made of a polymeric material such as a plastic, metal, or other suitable materials, or combinations thereof. In one embodiment, the housing 502 may be made of ABS polymer plastic. In some embodiments, the housing 502 may be formed using injection molding or a 3D printer.

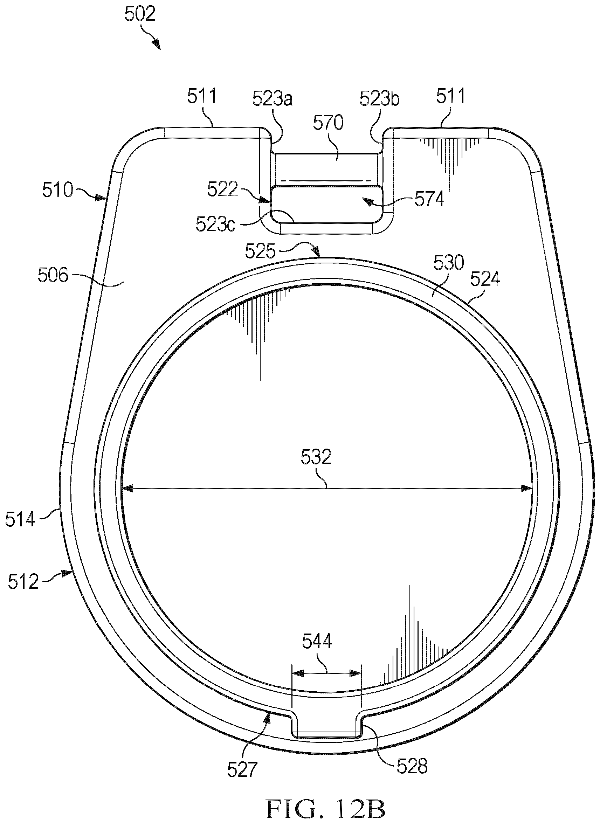

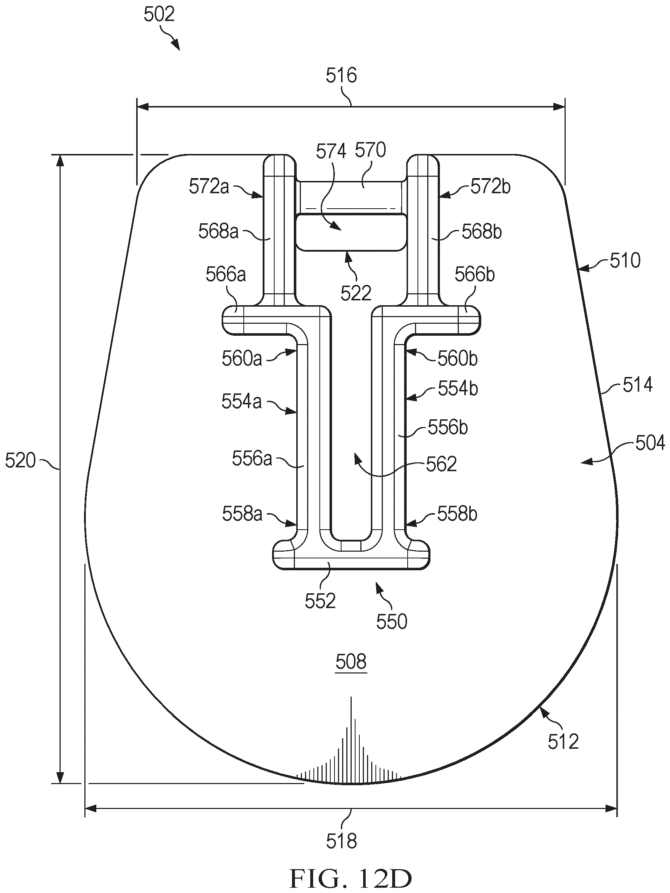

The housing 502 may include a base 504 defined by a front side 506 and a back side 508. The base 504 may also have a top portion 510 and a bottom portion 512, opposite the top portion 510. In some embodiments, the top portion 510 terminates at a top edge 511. The base 504 may have an outer edge 514 that defines a shape of the base 504. In some embodiments, the shape of the base 504 may be substantially a square, a rectangle, a circle, an oval, a triangle, a trapezoid, and the like. In some embodiments, the shape of the base 504 may be imparted with round edges as shown in FIGS. 12A, 12B, and 12D. Combinations of shapes and irregular shapes are also contemplated.

In some embodiments, the base 504 may be imparted with a combination shape as shown in FIGS. 12B and 12D, where the top portion 510 may be imparted with a substantially trapezoidal shape and the bottom portion 512 may have a substantially circular shape. The base 504 may be imparted with a top length 516 dimension of the top portion 510 and a bottom length 518 dimension of the bottom portion 512. In some embodiments, the length 516 of the top portion 510 may be less than the length of the bottom portion 512. In some embodiments, the length 516 of the top portion 510 may be 40.23 mm, or about 40.23 mm. In some embodiments, the length 518 of the bottom portion 512 may be 50 mm, or about 50 mm.

The base 504 may be imparted with a base height 520. In some embodiments, the base height 520 may be 59 mm, or about 59 mm. The base 504 also may be imparted with a base thickness (not shown). In some embodiments, the base thickness may be 3 mm, or about 3 mm.

The top portion 510 of the base 504 may be interrupted by a divot 522 disposed in a center area of the top portion 510. The divot 522 may extend downwardly from the top edge 511 and be defined by a first divot side 523a, a second divot side 523b, and a bottom divot side 523c. In some embodiments, the divot 522 may be imparted with a "C" shape or a "U" shape as shown in FIGS. 12B and 12D.

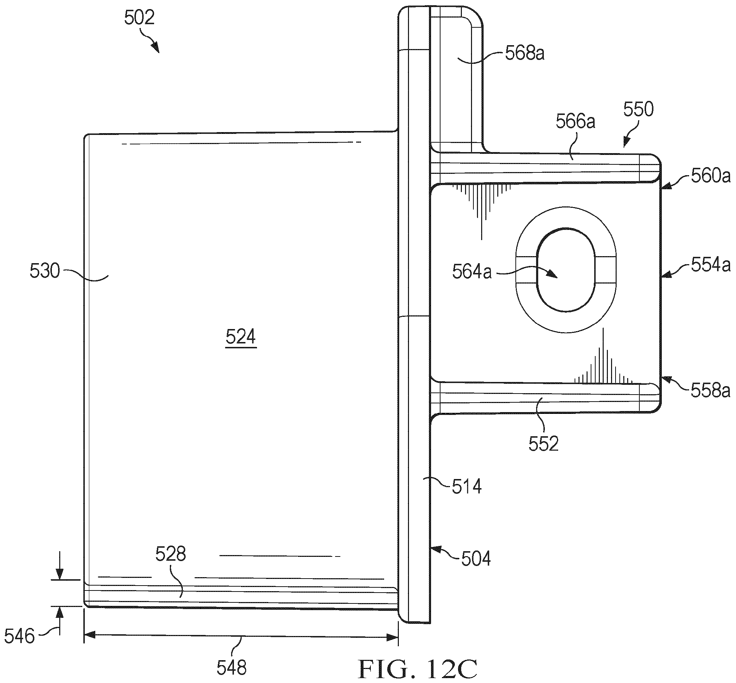

The front side 506 of the base 504 may include a first flange 524 protruding outwardly therefrom. In some embodiments, the first flange 524 may be disposed below the divot 522 of the top portion 510. The first flange 524 may have a top flange portion 525 and a bottom flange portion 527. A ridge 528 may extend downwardly from a center area of the bottom flange portion 527. The ridge 528 may extend along the entire length of the bottom flange portion 527 as shown in FIG. 12C.

The first flange 524 may have a first flange wall 530 that is imparted with a first flange thickness. In some embodiments, the first flange thickness may be 2.5 mm, or about 2.5 mm.

The first flange wall 530 may define a first flange shape. The first flange shape may be any size and shape suitable to engage with the first protrusion 34' when the EV lockout device 500 is placed on or otherwise in communication with the second EV charge port 20'. In some embodiments, the first flange shape may be the same or substantially the same as the shape of the first protrusion 34' of the second EV charge port 20'. In some embodiments, the first flange shape may be substantially cylindrical with a substantially circular cross-section.

The first flange 524 may be imparted with a first set of dimensions. In some embodiments, the first set of dimensions of the first flange 524 may be complimentary to the set of dimensions for the first protrusion 34' of the second EV charge port 20' so that the first flange 524 can be placed onto and fit over the first protrusion 34'. In some instances, a friction fit between the first flange wall 530 and the first protrusion 34' may prevent the housing 502 from disengaging from the second EV charge port 20'.

In some embodiments, the first set of dimensions of the first flange 524 may include a first flange diameter 532 (see FIG. 12B), a first flange circumference (not shown), and a first flange depth 534 (see FIG. 13C). In some embodiments, the first flange diameter 532 may be the same as or greater than the diameter of the first protrusion 34' of the second EV charge port 20'. For example, in some embodiments, the first flange diameter 532, may be 38 mm, or about 38 mm, and the first flange circumference may be 119.41 mm, or about 119.41 mm.

The first flange depth 534 may be the same as or different from the depth of the first protrusion 34' of the second EV charge port 20'. In some embodiments, the first flange depth 534 is the same as, substantially the same as, or less than the depth of the first protrusion 34' of the second EV charge port 20'. For example, in some embodiments, the first flange depth 534 may be 30 mm, or about 30 mm.

The ridge 528 may be imparted with a size and shape that is designed to engage with the channel 44' of the second EV charge port 20'. In some embodiments, the ridge 528 may be imparted with a substantially rectangular shape, although other shapes may be used that can engage with the channel 44' of the second EV charge port 20'.

The ridge 528 may be defined by a ridge width 544 (see FIG. 12B), a ridge height 546, and a ridge depth 548 (see FIG. 12C). The ridge width 544 may be the same as or less than the width of the channel 44' of the second EV charge port 20'. In some embodiments, the ridge width 544 may be 6.49 mm, or about 6.49 mm. The ridge height 546 may be the same or greater than the height of the channel 44' of the second EV charge port 20'. In some embodiments, the ridge height 546 may be 1.54 mm, or about 1.54 mm.

The ridge depth 548 may be the same as or different than the depth of the channel 44' of the second EV charge port 20'. In addition, the ridge depth 548 may be the same as or different than the first flange depth 534. In some embodiments, the ridge depth 548 and the first flange depth 534 may be the same. In some embodiments, the ridge depth 548 may be 30 mm, or about 30 mm.

The back side 508 of the base 504 may include a clip support unit 550 protruding outwardly therefrom. The clip support unit 550 may be defined by a bottom support 552, a first side 554a and a second side 554b. In some embodiments, the first side 554a may be substantially parallel to the second side 554b. In some embodiments, the second side 554b may be a mirror image of the first side 554a.

The first side 554a may include a first side plate 556a having a first bottom end 558a and a first top end 560a. The first side plate 556a may be attached to the bottom support 552 on the first bottom end 558a. The second side 554b may include a second side plate 556b having a second bottom end 558b and a second top end 560b. The second side plate 556b may be attached to the bottom support 552 on the second bottom end 558b.

The bottom support 552 may connect the first bottom end 558a of the first side plate 556a to the second bottom end 558b of the second side plate 556b. A gap 562 is formed between the first side plate 556a and the second side plate 556b as shown in FIG. 12D.

A first hole 564a may be disposed in and extend entirely through the first side plate 556a between the first top end 560a and the first bottom end 558a. A second hole 1564b may also be disposed in and extend entirely through the second side plate 556b between the second top end 560b and the second bottom end 558b. The second hole 564b may be disposed in the second side plate 556b at the same location as the first hole 564a is disposed in the first side plate 556a so that the first hole 564a and the second hole 564b are substantially aligned. The first and second holes 564a, 564b may be any size and shape suitable for a shackle or shank of a lock (e.g., shackle 14 of the lock 10) to pass through. In some embodiments, the first and second holes 564a, 564b may be imparted with a substantially oval shape. In other embodiments, the first and second holes 564a, 564b may be imparted with a substantially circular shape.

The first side 554a may include a first clip support 566a on the first top end 560a, and the second side 554b may include a second clip support 566b on the second top end 560b. A first vertical support 568a may extend from the first clip support 566a toward the top portion 510 of the housing 502 and a second vertical support 568b may extend from the second clip support 566b toward the top portion 510 of the housing 502. In some embodiments, the first vertical support 568a and the second vertical support 568b may be mirror images of each other. The first and second vertical supports 568a, 568b may also be disposed on the back side 508 of the housing 502 adjacent the divot 522 such that the first vertical support 568a is disposed adjacent the first divot side 523a of the divot 522 and the second vertical support 568b is disposed adjacent the second divot side 523b of the divot 522.

A clip connector 570 may extend between a first top 572a of the first vertical support 568a and a first top 572b of the second vertical support 568b thereby connecting the first vertical support 568a to the second vertical support 568b. The clip connector 570 may also extend across the divot 522 in such a manner that an opening 574 is defined by the first divot side 523a, the second divot side 523b, the bottom divot side 523c, and the clip connector 570. In some embodiments, the clip connector 570 may be imparted with a cylindrical or rod shape.

The clip support unit 550 may be designed to engage with one or more embodiments of a clip (e.g., 200, 400, 800, 1000) disclosed herein. In some embodiments, the first and second clip supports 566a, 566b may be designed to engage or otherwise be in communication with first and second support legs (e.g., 222a, 222b), respectively, of a clip (e.g., 200). The clip connector 570 may be designed to engage with a coupling member (e.g., 216) of the clip such that the coupling member can rotate about the clip connector 570 in order to raise and/or lower a first end (e.g., 204) of a first elongated member (e.g., 202) of the clip. In addition, the gap 562 disposed between the first and second side plates 556a, 556b of the clip support unit 550 may be designed to allow a second elongated member (e.g., 228) of the clip to move in a substantially upwardly or downwardly direction between the first and second side plates 556a, 556b. Furthermore, the first and second holes 564a, 564b of the clip support unit 550 may be designed to substantially align with a lock through hole (e.g., 236) of the clip to enable the shackle of a lock (e.g., shackle 14 of lock 10) to pass through the housing 502 and clip and secure same to an EV charge port (e.g., 20') or an EV charge plug.

The third embodiment of the EV lockout device 500 may include the clip 200 designed for use therewith. As shown in FIGS. 13A-13C, the clip 200 may attach to or otherwise engage with the housing 502. When in the first clip position, the clip 200 may be placed on the housing 502 such that the coupling member 216, the bottom side 210 of the first elongated member 202, and/or the projection 218 of the clip 200 may engage with the clip connector 570 of the housing 502 as best seen in FIG. 13C. The clip connector 570 may rest within the nook 217 when in the first clip position and the coupling member 216 may extend through the opening 574 of the housing 502 as shown in FIG. 13C. In addition, when in the first clip position, the first support leg 222a may engage with the first clip support 566a of the clip support unit 550, and the second support leg 222b may engage with the second clip support 566b of the clip support unit 550. The first elongated member 202 of the clip 200 may extend over the top flange portion 525 of the first flange 524. The second elongated member 228 may be disposed within the gap 562 between the first side 554a and the second side 554b of the clip support unit 550 as shown in FIG. 13B. Further, when in the first clip position, the lock through hole 236 of the clip 200 may substantially align with the first hole 564a of the first side 554a and the second hole 564b of the second side 554b of the clip support unit 550.

As discussed above, when in the first clip position, the first and second support legs 222a, 222b may engage with the first and second clip supports 566a, 566b, respectively. In addition, when in the first clip position, the lock through hole 236 of the second elongated member 228 of the clip 200 may substantially align with the first hole 564a of the first side 554a and the second hole 564b of the second side 554b of the clip support unit 550 of the housing 502.

When the EV lockout device 500 is being placed on or is being removed from the second EV charge port 20', the clip 200 may move to a second clip position (not shown). When moving into the second clip position, the first end 204 of the first elongated member 202 may move in a substantially upward direction. In some embodiments, the clip 200 may move to the second clip position in response to the platform portion 220 being pressed downward so that the first and second support legs 222a, 222b compress (e.g., the angle between the platform portion 220 and one or more of the first and second support legs 222a, 222b decreases). In other embodiments, the clip 200 may move to the second clip position in response to the hook portion 212 of the first elongated member 202 engaging with the locking mechanism 30' of the second EV charge port 20'. In the second clip position, the first end 204 of the first elongated member 202 may raise up in order for the hook portion 212 to slide over the locking member 32' of the locking mechanism 30' of the second EV charge port 20'. As the first end 204 of the first elongated member 202 raises upward, the coupling member 216 and the projection 218 may move or rotate about the clip connector 570 of the housing 502 in a first direction. In some embodiments, as the first end 204 of the first elongated member 202 raises upward, the second elongated member 228 may move in a substantially downward direction such that the space 235 between the bottom end of the second elongated member 228 and the bottom support 552 of the clip support unit 550 decreases. In some embodiments, as the second elongated member 228 moves in the substantially downward direction, the lock through hole 236 of the second elongated member 228 may become out of alignment with the first hole 564a and the second hole 564b of the clip support unit 550.

If the EV lockout device 500 is being placed onto the second EV charge port 20', the clip 200 may move from the first clip position to the second clip position. As the clip 200 is moving from the first clip position to the second clip position, the housing 502 may engage with the second EV charge port 20'. In some embodiments, the first flange 524 of the housing 502 may engage with the first protrusion 34' of the second EV charge port 20' such that the first flange 524 surrounds all or a portion of the first protrusion 34' and the ridge 528 may engage with the channel 44' of the second EV charge port 20' such that the ridge 528 slides through the channel 44'.

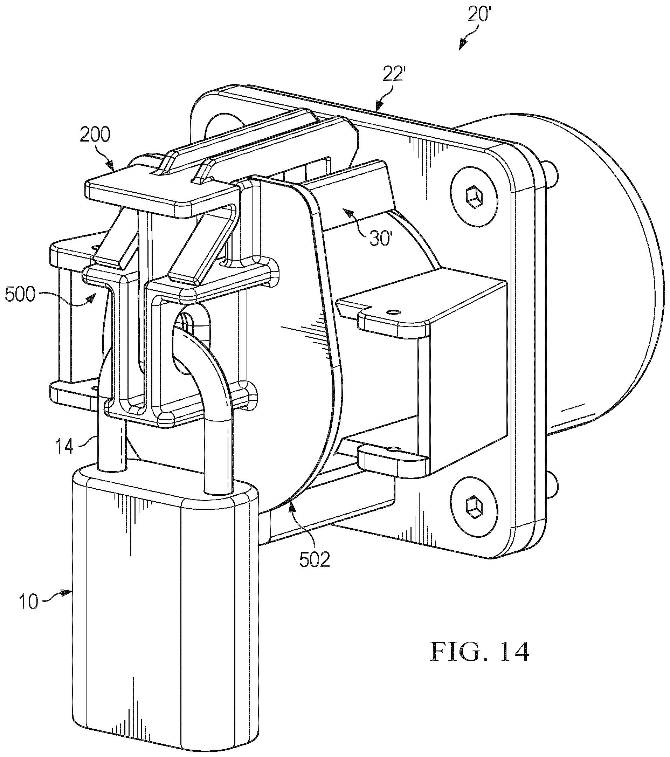

After moving into the second clip position in response to the platform portion 220 being depressed, the clip 200 may move back into the first clip position upon release of the platform portion 220. As the clip 200 moves back into the first clip position, the first end 204 of the first elongated member 202 may lower and the coupling member 216 and the projection 218 may move or rotate about the clip connector 570 of the housing 502 in a direction opposition the first direction. In addition, as the clip 200 moves back in the first clip position, the second elongated member 228 may move in a substantially upward direction as the first and second support legs 222a, 222b decompress (e.g., the angle between the platform portion 220 and one or more of the first and second support legs 222a, 222b increases). If the EV lockout device 500 has been placed on the second EV charge port 20', the hook portion 212 may be disposed on the inner side 33' of the locking member 32', when the clip 200 returns to the first clip position. Additionally, when the clip 200 moves back into the first clip position, the first hole 564a of the clip support unit 550, the lock through hole 236 of the second elongated member 228, and the second hole 564b of the clip support unit 550 may be substantially aligned such that the shackle 14 of lock 10 may be threaded through the first hole 564a, the lock through hole 236, and the second hole 564b, or vice versa. The shackle 14 may then be securely attached to the body 12 of the lock 10, thereby placing the EV lockout device 500 in a locked position as shown in FIG. 14.

When in the locked position, the clip 200 cannot fully move to the second clip position (e.g., the hook portion 212 cannot be raised high enough to slide back over the locking member 32' of the second EV charge port 20') as the shackle 14 prevents the second elongated member 228 of the clip 200 from moving sufficiently downward. To remove the EV lockout device 500 from the second EV charge port 20', the shackle 14 of the lock 10 may be disengaged from the body 12 of the lock 10 and removed from the clip support unit 550 of the housing 502 by threading the shackle 14 through the second hole 564b, the lock through hole 236, and the first hole 564a, or vice versa. Once the lock 10 is removed from the EV lockout device 500, the platform portion 220 of the clip 200 may be depressed causing the clip 200 to move from the first clip position to the second clip position in which the first and second support legs 222a, 222b compress and the hook portion 212 is raised. The hook portion 212 may then be moved over and away from the locking member 32' as the EV lockout device 500 is slid off or otherwise removed from the second EV charge port 20' (e.g., the first flange 524 is removed from the first protrusion 34' and the ridge 528 is removed from the channel 44').

FIG. 15 depicts a partially exploded view of the lock 10, a fourth embodiment of an EV lockout device 500, and a second electric vehicle (EV) charge plug 50'.

The second EV charge plug 50' may be attached to an EV charging station (not shown). In some embodiments, the second EV charge plug 50' may be provided in the form of a J1772 plug.

The second EV charge plug 50' may include a plug housing 52' having a locking mechanism 54' disposed on a front side 55' thereof and protruding outwardly therefrom. The locking mechanism 54' may include a locking member 56', and, in some embodiments, the locking member 56' may be provided in the form of a hook. The second EV charge plug 50' may also include a lock release button 58' on a backside 60' of the plug housing 52'. In some embodiments, the lock release button 58' may be used to release or otherwise disengage the locking mechanism 54' and locking member 56' so that the EV lockout device 500 can be removed from the second EV charge plug 50'.

The second EV charge plug 50' may include a first protrusion 64' disposed on the front side 55' of the plug housing 52'. A first set of terminals 66' may be disposed within the first protrusion 64'.

The first protrusion 64' may be imparted with a first protrusion shape. In some embodiments, the first protrusion shape may be substantially cylindrical with a substantially circular cross-section. In other embodiments, the first protrusion 64' may be imparted with other shapes, for example, a rectangular or square shape, a triangular shape, a trapezoidal shape, and the like, a combination of shapes, or an irregular shape. In some embodiments, the first protrusion 64' may be imparted with a slanted front side (not shown) where a top portion of the first protrusion 64' has a first depth and the bottom portion of the first protrusion 64' has a second or max depth that is larger than the first depth (e.g., the depth of the protrusion is not uniform along the surface thereof).

The first protrusion 64' may be imparted with a set of dimensions (not shown). In some embodiments, the set of dimensions of the first protrusion 64' may include a diameter, a circumference, and/or a max depth. In some embodiments, the diameter of the first protrusion 64' may be about 43.8 mm. In some embodiments, the circumference of the first protrusion 64' may be about 137.6 mm. In some embodiments, the max depth of the first protrusion 64; may be about 33.58 mm.

A protrusion ridge 62' may be disposed below the first protrusion 64'. The protrusion ridge 62' may be imparted with a substantially rectangular shape, although other shapes may be used. The protrusion ridge 62' may be imparted with a set of dimensions (not shown). In some embodiments, the set of dimensions of the protrusion ridge 62' may include a width, a height, and a depth. For example, the width of the protrusion ridge 62' may be about 8 mm. In some embodiments, the height of the protrusion ridge 62' may be about 2.69 mm. In some embodiments, the depth of the protrusion ridge 62' may be about 33.58 mm.

The depth of the protrusion ridge 62' may be the same or different than the max depth of the first protrusion 64'. In some embodiments, the depth of the protrusion ridge 62' and the max depth of the first protrusion 64' may be the same.

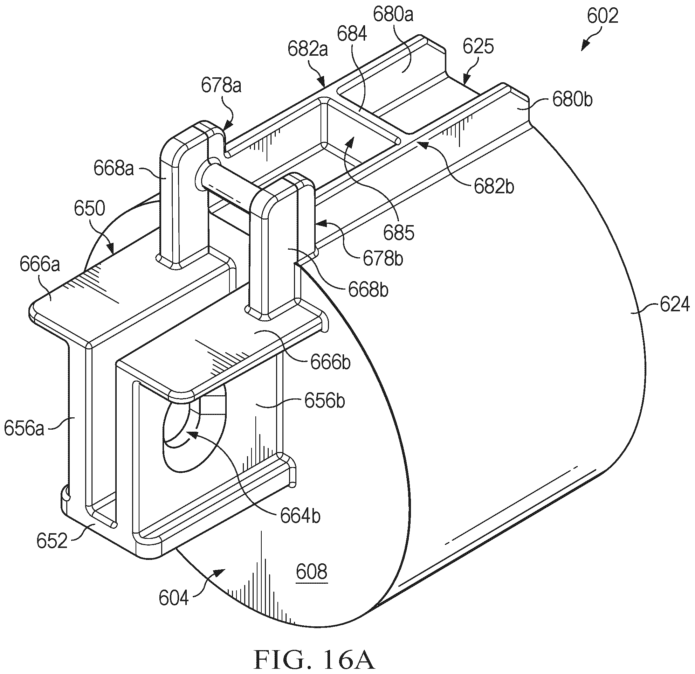

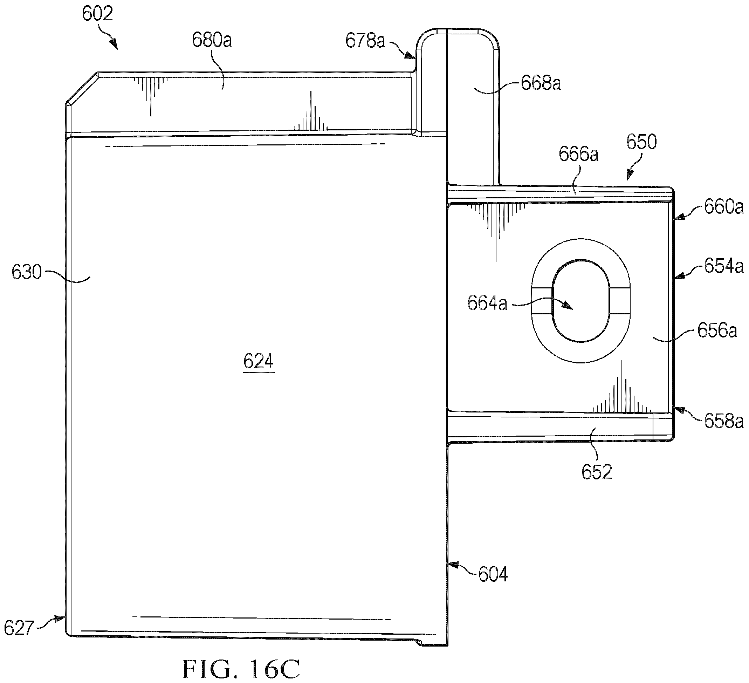

Turning to FIGS. 16A-16D, the fourth embodiment of the EV lockout device 600 may include a housing 602. The housing 602 may be made of a polymeric material such as a plastic, metal, or other suitable materials, or combinations thereof. In one embodiment, the housing 602 may be made of ABS polymer plastic. In some embodiments, the housing 602 may be formed using injection molding or a 3D printer.

The housing 602 may include a base 604 defined by a front side 606 and a back side 608. The base 604 may also have a top portion 610 and a bottom portion 612, opposite the top portion 610. The base 604 may have an outer edge 614 that defines a shape of the base 604. In some embodiments, the shape of the base 604 may be substantially a square, a rectangle, a circle, an oval, a triangle, a trapezoid, and the like. In some embodiments, the shape of the base 604 may be imparted with round edges as shown in FIGS. 16A. 16B, and 16D. Combinations of shapes and irregular shapes are also contemplated.

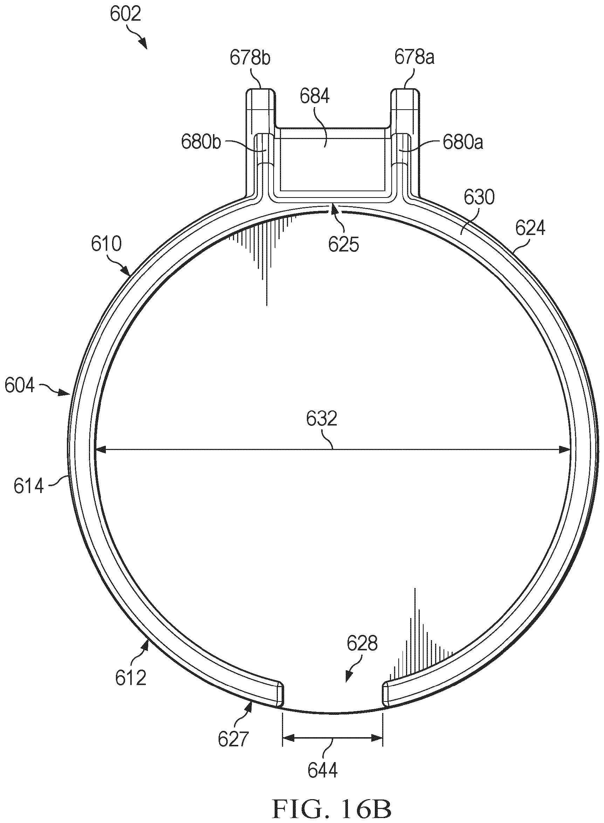

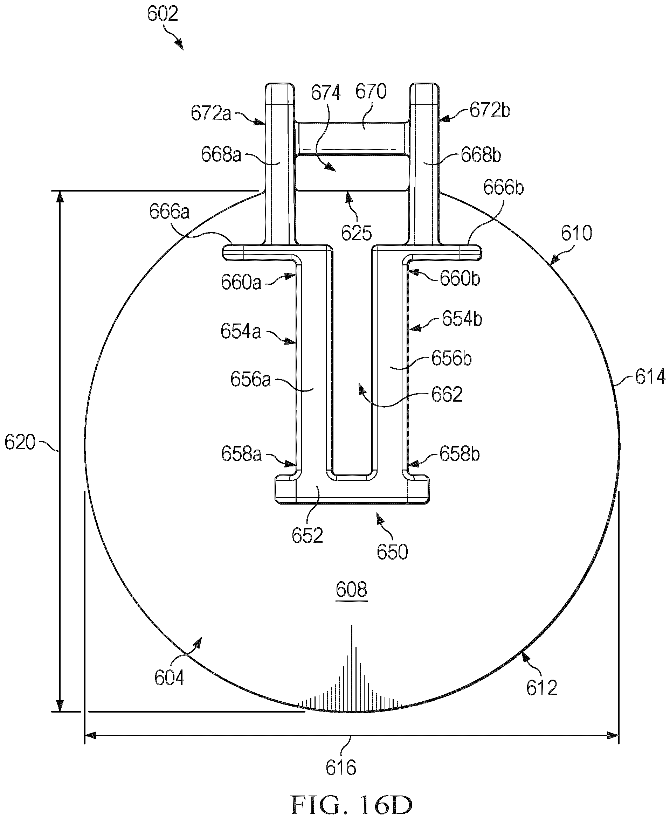

In some embodiments, the base 604 may be imparted with a substantially circular shape as shown in FIGS. 16B and 16D. In some embodiments, the base 604 may be imparted with a base diameter (or width) 616. In some embodiments, the base diameter (or width) 616 may be 51 mm, or about 51 mm.

The base 604 may be imparted with a base height 620. In some embodiments, the base height 620 may be 51 mm, or about 51 mm. The base 604 also may be imparted with a base thickness (not shown). In some embodiments, the base thickness may be 3 mm, or about 3 mm.

The front side 606 of the base 604 may include a first flange 624 protruding outwardly therefrom. The first flange 624 may have a top flange portion 625 and a bottom flange portion 627. A flange channel 628 may be disposed in a center area of the bottom flange portion 627. In some embodiments, the flange channel 628 may extend along the entire length of the bottom flange portion 627.

The first flange 624 may have a first flange wall 630 that is imparted with a first flange thickness. In some embodiments, the first flange thickness may be 2.4 mm, or about 2.4 mm.

The first flange wall 630 may define a first flange shape. The first flange shape may be any size and shape suitable to engage with the first protrusion 64' when the EV lockout device 600 is placed on or otherwise in communication with the second EV charge plug 50'. In some embodiments, the first flange shape may be the same or substantially the same as the shape of the first protrusion 64' of the second EV charge plug 50'. In some embodiments, the first flange shape may be substantially cylindrical with a substantially circular cross-section.

The first flange 624 may be imparted with a first set of dimensions. In some embodiments, the first set of dimensions of the first flange 624 may be complimentary to the set of dimensions for the first protrusion 64' of the second EV charge plug 50' so that the first flange 624 can be placed onto and fit over the first protrusion 64'. In some instances, a friction fit between the first flange wall 630 and the first protrusion 64' may prevent the housing 602 from disengaging from the second EV charge plug 50'.

In some embodiments, the first set of dimensions of the first flange 624 may include a first flange diameter 632 (see FIG. 16B), a first flange circumference (not shown), and a first flange depth 634 (see FIG. 17C). In some embodiments, the first flange diameter 632 may be the same as or greater than the diameter of the first protrusion 64' of the second EV charge port 50'. For example, in some embodiments, the first flange diameter 632, may be 45 mm, or about 45 mm, and the first flange circumference may be 141.37 mm, or about 141.37 mm.

The first flange depth 634 may be the same as or different from the max depth of the first protrusion 64' of the second EV charge plug 50'. In some embodiments, the first flange depth 634 is the same as, substantially the same as, or greater than the max depth of the first protrusion 64' of the second EV charge plug 50'. For example, in some embodiments, the first flange depth 634 may be 34 mm, or about 34 mm.

The flange channel 628 may be imparted with a size and shape that is designed to engage with the protrusion ridge 62' of the second EV charge plug 50'. In some embodiments, the flange channel 628 may be imparted with a substantially rectilinear shape, although other shapes may be used that can engage with the protrusion ridge 62' of the second EV charge plug 50'.

The flange channel 628 may be imparted with a flange channel width 644 (see FIG. 16B), a flange channel height 646, and a flange channel depth 648 (see FIG. 17C). The flange channel width 644 may be the same as or greater than the width of the protrusion ridge 62' of the second EV charge plug 50'. In some embodiments, the flange channel width 644 may be 9.58 mm, or about 9.58 mm. The flange channel height 646 may be the same or greater than the height of the protrusion ridge 62' of the second EV charge plug 50'. In some embodiments, the flange channel height 646 may be 2.4 mm, or about 2.4 mm.

The flange channel depth 648 may be the same as or different than the depth of the protrusion ridge 62' of the second EV charge plug 50'. In addition, the flange channel depth 648 may be the same as or different than the first flange depth 634. In some embodiments, the flange channel depth 648 and the first flange depth 634 may be the same. In some embodiments, the flange channel depth 648 may be 34 mm, or about 34 mm.

The back side 608 of the base 604 may include a clip support unit 650 protruding outwardly therefrom. The clip support unit 650 may be defined by a bottom support 652, a first side 654a, and a second side 654b. In some embodiments, the first side 654a may be substantially parallel to the second side 654b. In some embodiments, the second side 654b may be a mirror image of the first side 654a.

The first side 654a may include a first side plate 656a having a first bottom end 658a and a first top end 660a. The first side plate 656a may be attached to the bottom support 652 on the first bottom end 658a. The second side 654b may include a second side plate 656b having a second bottom end 658b and a second top end 660b. The second side plate 656b may be attached to the bottom support 652 on the second bottom end 658b.

The bottom support 652 may connect the first bottom end 658a of the first side plate 656a to the second bottom end 658b of the second side plate 656b. A gap 662 is formed between the first side plate 656a and the second side plate 656b as shown in FIG. 16D.

A first hole 664a may be disposed in and extend entirely through the first side plate 656a between the first top end 660a and the first bottom end 658a. A second hole 664b may also be disposed in and extend entirely through the second side plate 656b between the second top end 660b and the second bottom end 658b. The second hole 664b may be disposed in the second side plate 656b at the same location as the first hole 664a is disposed in the first side plate 656a so that the first hole 664a and the second hole 664b are substantially aligned. The first and second holes 664a, 664b may be any size and shape suitable for a shackle or shank of a lock (e.g., shackle 14 of the lock 10) to pass through. In some embodiments, the first and second holes 664a, 664b may be imparted with a substantially oval shape. In other embodiments, the first and second holes 664a, 664b may be imparted with a substantially circular shape.

The first side 654a may further include a first clip support 666a on the first top end 660a, and the second side 654b may include a second clip support 666b on the second top end 660b. A first vertical support 668a may extend from the first clip support 666a upward and past the top portion 610 of the base 604. A second vertical support 668b may extend from the second clip support 666b upward and past the top portion 610 of the base 604. In some embodiments, the first vertical support 668a and the second vertical support 668b may be mirror images of each other.

A clip connector 670 may extend between a first top 672a of the first vertical support 668a and a first top 672b of the second vertical support 668b thereby connecting the first vertical support 368a to the second vertical support 668b. The clip connector 670 may also extend from the first vertical support 668a to the second vertical support 668b in such a manner that an opening 674 is defined by the first vertical support 668a, the second vertical support 668b, the top flange portion 625 of the first flange 624, and the clip connector 670. In some embodiments, the clip connector 670 may be imparted with a cylindrical or rod shape.

A first front portion 678a of the first vertical support 668a may be connected or attached to the top flange portion 625 of the first flange 624. A second front portion 678b of the second vertical support 668a may be connected or attached to the top flange portion 625 of the first flange 624. Extending outward from the first front portion 678a of the first vertical support 668a may be a first guide rail 680a, and extending outward from the second front portion 678b of the second vertical support 668b may be a second guide rail 680b. In some embodiments, the first and second guide rails 680a, 680b may extend along the top flange portion 625 of the first flange 624 across the entire length of the top flange portion 325. In some embodiments, the first and second guide rails 680a, 680b may be disposed substantially parallel to one another, and may be mirror images of each other.

The first guide rail 680a may have a first center portion 682a, and the second guide rail 680b may have a second center portion 682b. In some embodiments, a center divider 684 may extend from the first center portion 682a of the first guide rail 680a to the second center portion 682b of the second guide rail 680b, thereby connecting the first guide rail 680a to the second guide rail 680b. The center divider 684 may also be connected or attached to the top flange portion 625 of the first flange 624 on a bottom side of the center divider 684. The center divider 684 may have an inner side 685 as shown in FIGS. 16A and 17C.

The clip support unit 650 may be designed to engage with one or more embodiments of a clip (e.g., 200, 400, 800, 1000) disclosed herein. In some embodiments, the first and second clip supports 666a, 666b may be designed to engage or otherwise be in communication with first and second support legs (e.g., 422a, 422b), respectively, of a clip (e.g., 400). The clip connector 670 may be designed to engage with a coupling member (e.g., 416) of the clip such that the coupling member can rotate about the clip connector 670 in order to raise and/or lower a first end (e.g., 404) of a first elongated member (e.g., 402) of the clip. In addition, the gap 662 disposed between the first and second side plates 656a, 656b of the clip support unit 650 may be designed to allow a second elongated member (e.g., 428) of the clip to move in a substantially upwardly or downwardly direction between the first and second side plates 656a, 656b. The first and second guide rails 680a, 680b may be designed to engage or otherwise be in communication with first and second guide members (e.g., 412a, 412b), respectively, of the clip. Furthermore, the first and second holes 664a, 664b of the clip support unit 650 may be designed to substantially align with a lock through hole (e.g., 436) of the clip to enable the shackle of a lock (e.g., shackle 14 of lock 10) to pass through the housing 602 and clip and secure same to an EV charge port or an EV charge plug (e.g., 50').

The fourth embodiment of the EV lockout device 600 may include the clip 400 designed for use therewith. As shown in FIGS. 17A-17C, the clip 400 may attach to or otherwise engage with the housing 602. When in the first clip position, the clip 400 may be placed on the housing 602 such that the coupling member 416, the bottom side 410 of the first elongated member 402, and/or the projection 418 of the clip 400 may engage with the clip connector 670 of the housing 602 as best seen in FIG. 17C. The clip connector 670 may rest within the nook 417 when in the first clip position, and the coupling member 416 may extend through the opening 674 of the housing 302 as shown in FIG. 17C. In addition, when in the first clip position, the first support leg 422a may engage with the first clip support 666a of the clip support unit 650, and the second support leg 422b may engage with the second clip support 666b of the clip support unit 650. The first elongated member 402 of the clip 400 may extend over the top flange portion 625 of the first flange 624. The second elongated member 428 may be disposed within the gap 662 between the first side 654a and the second side 654b of the clip support unit 650 as shown in FIG. 17B. Further, when in the first clip position, the lock through hole 436 of the clip 400 may substantially align with the first hole 664a of the first side 654a and the second hole 664b of the second side 354b of the clip support unit 650.

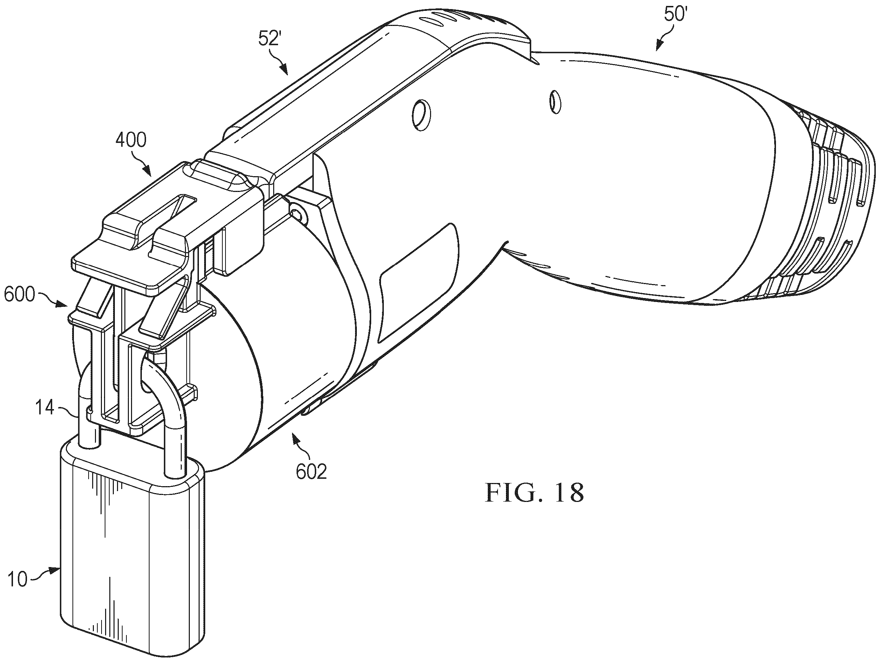

When in the first clip position, the first guide member 412a of the clip 400 may be disposed on an outer side of the first guide rail 680a on the top flange portion 625 of the first flange 624 of the housing 602. In addition, the second guide member 412b of the clip 400 may be disposed on an outer side of the second guide rail 680b on the top flange portion 625 of the first flange 624 of the housing 602. In some embodiments, the first and second guide members 412a, 412b may be designed to prevent access to the locking mechanism 54' of the second EV charge plug 50' when in a locked position as shown in FIG. 18.

As discussed above, when in the first clip position, the first and second support legs 422a, 422b may engage with the first and second clip supports 666a, 666b, respectively. In addition, when in the first clip position, the lock through hole 436 of the second elongated member 428 of the clip 400 may substantially align with the first hole 664a of the first side 654a and the second hole 664b of the second side 654b of the clip support unit 350 of the housing 602. Further, when in the first clip position, the first and second guide members 412a, 412b may be disposed on the outer side of the first and second guide rails 680a, 680b, respectively.

When the EV lockout device 400 is being placed on or is being removed from the second EV charge plug 50', the clip 400 may move to a second clip position (not shown). When moving into the second clip position, the first end 404 of the first elongated member 402 may move in a substantially upward direction. In some embodiments, the clip 400 may move to the second clip position either in response to the platform portion 420 being pressed downward so that the first and second support legs 422a, 422b compress (e.g., the angle between the platform portion 420 and one or more of the first and second support legs 422a, 422b decreases). In some embodiments, the clip 400 may move to the second clip position in response to the raised member 413 of the first end 404 of the first elongated member 402 engaging with the locking mechanism 54' of the second EV charge plug 50'. In other embodiments, the clip 400 may move to the second clip position in response to the locking member 56' of the second EV charge plug 50' engaging with the center divider 684 disposed between the first and second guard rails 680a, 680b on the top flange portion 625. In the second clip position, the first end 404 of the first elongated member 402 may raise up in order for the locking member 56' to slide up and over the center divider 684 disposed between the first and second guard rails 680a, 680b on the top flange portion 625 of the housing 602. As the first end 404 of the first elongated member 402 raises upward, the coupling member 416 and the projection 418 may move or rotate about the clip connector 670 of the housing 602 in a first direction. In some embodiments, as the first end 404 of the first elongated member 402 raises upward, the second elongated member 428 may move in a substantially downward direction such that the space 435 between the bottom end of the second elongated member 428 and the bottom support 652 of the clip support unit 650 decreases. In some embodiments, as the second elongated member 428 moves in the substantially downward direction, the lock through hole 436 of the second elongated member 428 may become out of alignment with the first hole 664a and the second hole 664b of the clip support unit 650.

If the EV lockout device 600 is being placed onto the second EV charge plug 50', the clip 400 may move from the first clip position to the second clip position. As the clip 400 is moving from the first clip position to the second clip position, the housing 602 may engage with the second EV charge plug 50'. In some embodiments, the first flange 624 of the housing 602 may engage with the first protrusion 64' of the second EV charge plug 50' such that the first flange 624 surrounds all or a portion of the first protrusion 64' and the flange channel 628 may engage with the protrusion ridge 62' of the second EV charge plug 50' such that the protrusion ridge 62' slides through the flange channel 628.

After moving into the second clip position in response to the platform portion 420 being depressed, the clip 400 may move back into the first clip position upon release of the platform portion 420. As the clip 400 moves back into the first clip position, the first end 404 of the first elongated member 402 may lower and the coupling member 416 and the projection 418 may move or rotate about the clip connector 670 of the housing 602 in a direction opposition the first direction. In addition, as the clip 400 moves back in the first clip position, the second elongated member 428 may move in a substantially upward direction as the first and second support legs 422a, 422b decompress (e.g., the angle between the platform portion 420 and one or more of the first and second support legs 422a, 422b increases). If the EV lockout device 600 has been placed on the second EV charge plug 50', the locking member 56' may be disposed on the inner side 685 of the center divider 684, when the clip 400 returns to the first clip position. Additionally, when the clip 400 moves back into the first clip position, the first hole 664a of the clip support unit 650, the lock through hole 436 of the second elongated member 428, and the second hole 664b of the clip support unit 650 may be substantially aligned such that the shackle 14 of lock 10 may be threaded through the first hole 664a, the lock through hole 436, and the second hole 664b, or vice versa. The shackle 14 may then be securely attached to the body 12 of the lock 10, thereby placing the EV lockout device 600 in a locked position as shown in FIG. 18.

When in the locked position, the clip 400 cannot fully move to the second clip position (e.g., the first end 404 of the first elongated member 402 of the clip 400 cannot be raised high enough for the locking member 56' to slide up and back over the center divider 684 on the top flange portion 625 of the housing 602) as the shackle 14 prevents the second elongated member 428 of the clip 400 from moving sufficiently downward. To remove the EV lockout device 600 from the second EV charge plug 50', the shackle 14 of the lock 10 may be disengaged from the body 12 of the lock 10 and removed from the clip support unit 650 of the housing 602 by threading the shackle 14 through the second hole 664b, the lock through hole 436, and the first hole 664a, or vice versa. Once the lock 10 is removed from the EV lockout device 600, the platform portion 420 of the clip 400 may be depressed causing the clip 400 to move from the first clip position to the second clip position in which the first and second support legs 464a, 464b compress and the first end 404 of the first elongated member 402 is raised. The locking member 56' of the second EV charge plug 50' may then be moved up and over the center divider 684 as the EV lockout device 600 is slid off or otherwise removed from the second EV charge plug 50' (e.g., the first flange 624 is removed from the first protrusion 64' and the flange channel 628 is removed from the protrusion ridge 62').

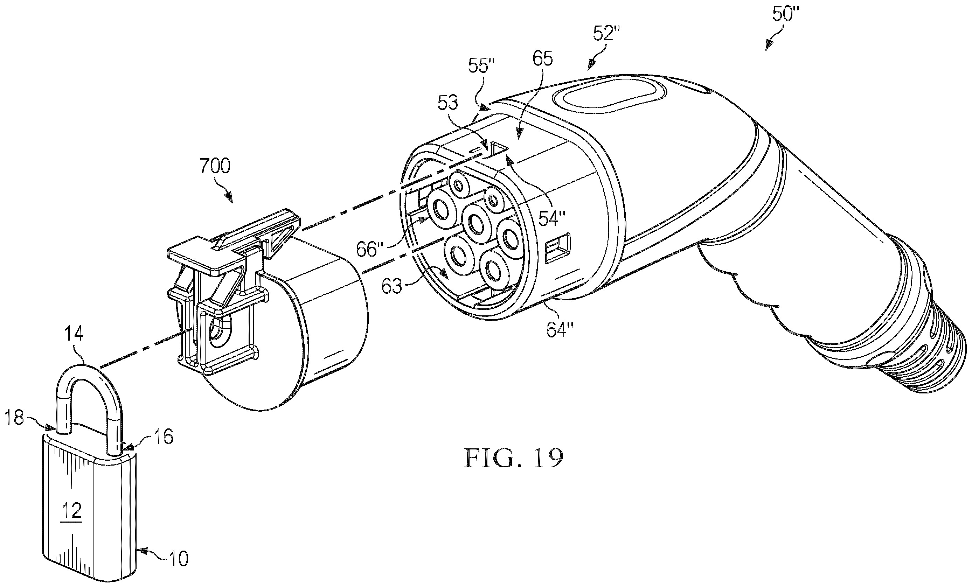

FIG. 19 depicts a partially exploded view of the lock 10, a fifth embodiment of an EV lockout device 700, and a third electric vehicle (EV) charge plug 50".

The third EV charge plug 50" may be attached to an EV charging station (not shown). In some embodiments, the third EV charge plug 50" may be provided in the form of a Combined Charging System (CCS) Type 2 charge plug.

The third EV charge plug 50" may include a plug housing 52" having a front side 55". A first protrusion 64" may extend from the front side 55" of the plug housing 52". The first protrusion 64" may have an inner wall 63.

The third EV charge plug 50" may include a locking mechanism 54" disposed on a top side 65 of the first protrusion 64". In some embodiments, the locking mechanism 54" may include a top opening 53. A first set of terminals 66" may be disposed within the first protrusion 64".

The first protrusion 64" may be imparted with a first protrusion shape. In some embodiments, the first protrusion shape may be substantially cylindrical with a partially flattened top. The first protrusion shape may be imparted with a substantially circular cross-section where the circular cross-section is partially flattened on top. In other embodiments, the first protrusion 64" may be imparted with other shapes, for example, a rectangular or square shape, a triangular shape, a trapezoidal shape, and the like, a combination of shapes, or an irregular shape.

The first protrusion 64" may be imparted with a set of dimensions (not shown). In some embodiments, the set of dimensions of the first protrusion 64" may include a width, a height, and/or a depth. In some embodiments, the width of the first protrusion 64" may be about 63 mm. In some embodiments, the height of the first protrusion 64" may be about 56 mm. In some embodiments, the depth of the first protrusion 64" may be about 34.5 mm.

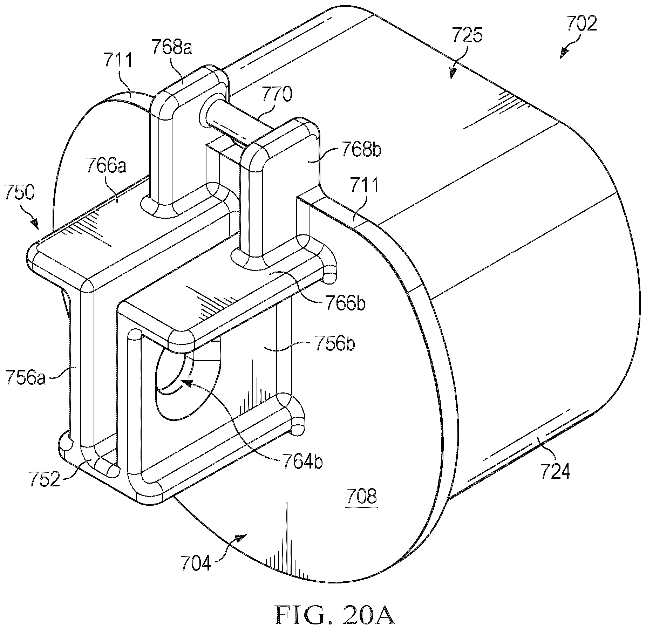

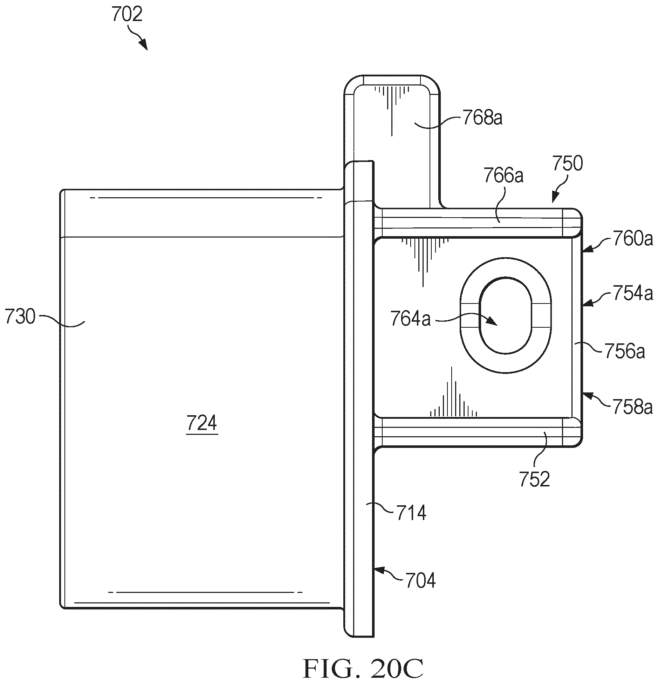

Turning to FIGS. 20A-20D, the fifth embodiment of the EV lockout device 700 may include a housing 702. The housing 702 may be made of a polymeric material such as a plastic, metal, or other suitable materials, or combinations thereof. In one embodiment, the housing 702 may be made of ABS polymer plastic. In some embodiments, the housing 702 may be formed using injection molding or a 3D printer.

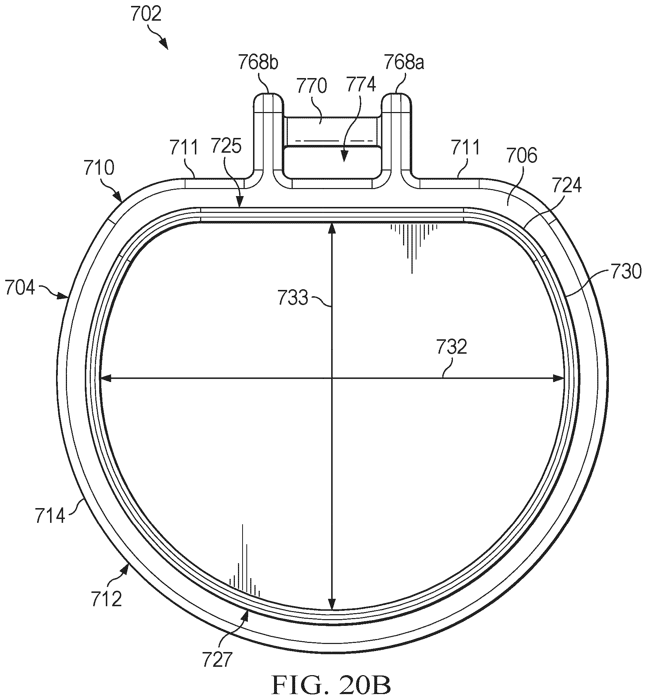

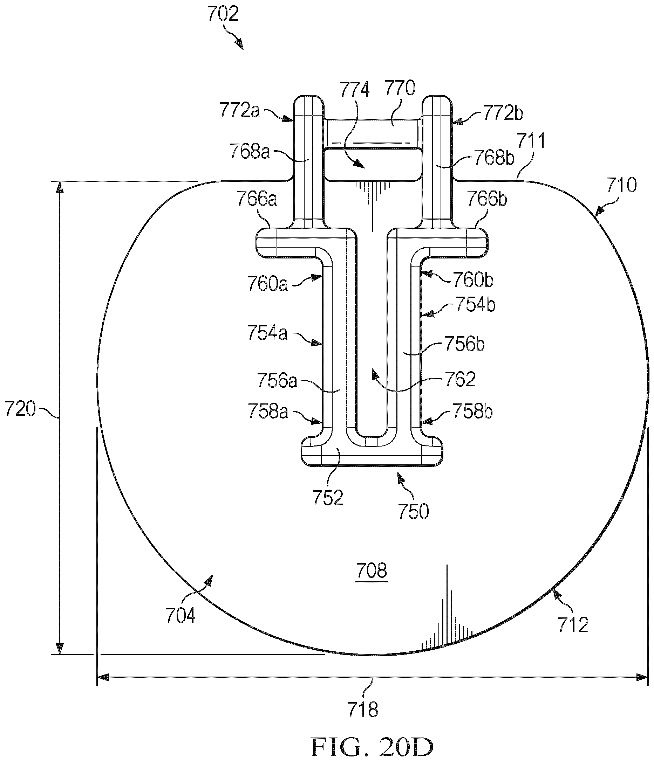

The housing 702 may include a base 704 defined by a front side 706 and a back side 708. The base 704 may also have a top portion 710 and a bottom portion 712, opposite the top portion 710. In some embodiments, the top portion 710 terminates at a top edge 711. The base 704 may have an outer edge 714 that defines a shape of the base 704. In some embodiments, the shape of the base 704 may be substantially a square, a rectangle, a circle, an oval, a triangle, a trapezoid, and the like. In some embodiments, the shape of the base 704 may be imparted with round edges as shown in FIGS. 20A, 20B, and 20D. Combinations of shapes and irregular shapes are also contemplated.

In some embodiments, the base 704 may be imparted with a substantially circular shape with a flattened top portion 710 and a rounded bottom portion 712 as shown in FIGS. 20B and 20D. In some embodiments, the base may be imparted with a base diameter (or width) 718. In some embodiments, the base diameter (or width) 718 may be 58 mm, or about 58 mm.

The base 704 may be imparted with a base height 720. In some embodiments, the base height 720 may be 50 mm, or about 50 mm. The base 704 also may be imparted with a base thickness (not shown). In some embodiments, the base thickness may be 3 mm, or about 3 mm.

The front side 706 of the base 704 may include a first flange 724 protruding outwardly therefrom. The first flange 724 may have a top flange portion 725 and a bottom flange portion 727. The first flange 724 may also have a first flange wall 730 that is imparted with a first flange thickness. In some embodiments, the first flange thickness may be 1.5 mm, or about 1.5 mm.

The first flange wall 730 may define a first flange shape. The first flange shape may be any size and shape suitable to engage with the first protrusion 64" when the EV lockout device 700 is placed on or otherwise in communication with the third EV charge plug 50". In some embodiments, the first flange shape may be the same or substantially the same as the shape of the first protrusion 64" of the third EV charge plug 50". In some embodiments, the first flange shape may be substantially cylindrical with a flattened top flange portion 725. In some embodiments, the first flange shape may be imparted with a substantially circular cross-section, where the circular cross-section has a partially flattened top flange portion 725 as shown in FIG. 20B.

The first flange 724 may be imparted with a first set of dimensions. In some embodiments, the first set of dimensions of the first flange 724 may be complimentary to the set of dimensions for the first protrusion 64" so that the first flange 724 can be placed into and fit within the first protrusion 64". In some instances, a friction fit between the first flange wall 730 and the inner wall 63 of the first protrusion 64" may prevent the housing 702 from disengaging from the third EV charge port 50".

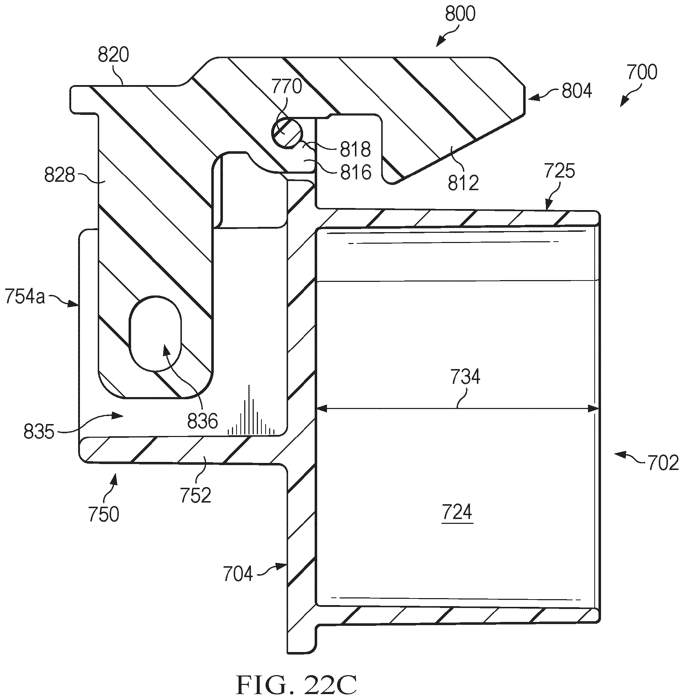

In some embodiments, the first set of dimensions of the first flange 724 may include a first flange width 732, a first flange height 733 (see FIG. 20B), and a first flange depth 734 (see FIG. 22C). In some embodiments, the first flange width 732 may be the same as or less than the width of the first protrusion 64" of the third EV charge plug 50". For example, in some embodiments, the first flange width 732, may be 48 mm, or about 48 mm.

In some embodiments, the first flange height 733 may be the same as or less than the height of the first protrusion 64" of the third EV charge plug 50". For example, in some embodiments, the first flange height 733, may be 40.51 mm, or about 40.51 mm.

The first flange depth 734 may be the same as or different from the depth of the first protrusion 64" of the third EV charge plug 50". In some embodiments, the first flange depth 734 is the same as, substantially the same as, or less than the depth of the first protrusion 64" of the third EV charge plug 50". For example, in some embodiments, the first flange depth 734 may be 30 mm, or about 30 mm.

The back side 708 of the base 704 may include a clip support unit 750 protruding outwardly therefrom. The clip support unit 750 may be defined by a bottom support 752, a first side 754a and a second side 754b. In some embodiments, the first side 754a may be substantially parallel to the second side 754b. In some embodiments, the second side 754b may be a mirror image of the first side 754a.

The first side 754a may include a first side plate 756a having a first bottom end 758a and a first top end 760a. The first side plate 756a may be attached to the bottom support 752 on the first bottom end 758a. The second side 754b may include a second side plate 756b having a second bottom end 758b and a second top end 760b. The second side plate 756b may be attached to the bottom support 752 on the second bottom end 758b.

The bottom support 752 may connect the first bottom end 758a of the first side plate 756a to the second bottom end 758b of the second side plate 756b. A gap 762 is formed between the first side plate 756a and the second side plate 756b as shown in FIG. 20D.

A first hole 764a may be disposed in and extend entirely through the first side plate 756a between the first top end 760a and the first bottom end 758a. A second hole 764b may also be disposed in and extend entirely through the second side plate 756b between the second top end 760b and the second bottom end 758b. The second hole 764b may be disposed in the second side plate 756b at the same location as the first hole 764a is disposed in the first side plate 756a so that the first hole 764a and the second hole 764b are substantially aligned. The first and second holes 764a, 764b may be any size and shape suitable for a shackle or shank of a lock (e.g., shackle 14 of the lock 10) to pass through. In some embodiments, the first and second holes 764a, 764b may be imparted with a substantially oval shape. In other embodiments, the first and second holes 764a, 764b may be imparted with a substantially circular shape.

The first side 754a may further include a first clip support 766a on the first top end 760a, the second side 754b may include a second clip support 766b on the second top end 760b. A first vertical support 768a may extend from the first clip support 766a upward and past the top edge 711 of the top portion 710 of the base 704. A second vertical support 768b may extend from the second clip support 766b upward and past the top edge 711 of the top portion 710 of the base 704. In some embodiments, the first vertical support 768a and the second vertical support 768b may be mirror images of each other.

A clip connector 770 may extend between a first top 772a of the first vertical support 768a and a first top 772b of the second vertical support 768b thereby connecting the first vertical support 768a to the second vertical support 768b. The clip connector 770 may also extend from the first vertical support 768a to the second vertical support 768b in such a manner that an opening 774 is defined by the first vertical support 768a, the second vertical support 768b, the top edge 711 of the base 704, and the clip connector 770. In some embodiments, the clip connector 770 may be imparted with a cylindrical or rod shape.

The clip support unit 750 may be designed to engage with one or more embodiments of a clip (e.g., 200, 400, 800, 1000) disclosed herein. In some embodiments, the first and second clip supports 766a, 766b may be designed to engage or otherwise be in communication with first and second support legs (e.g., 822a, 822b), respectively, of a clip (e.g., 800). The clip connector 770 may be designed to engage with a coupling member (e.g., 816) of the clip such that the coupling member can rotate about the clip connector 770 in order to raise and/or lower a first end (e.g., 804) of a first elongated member (e.g., 802) of the clip. In addition, the gap 762 disposed between the first and second side plates 756a, 756b of the clip support unit 750 may be designed to allow a second elongated member (e.g., 828) of the clip to move in a substantially upwardly or downwardly direction between the first and second side plates 756a, 756b. Furthermore, the first and second holes 764a, 764b of the clip support unit 750 may be designed to substantially align with a lock through hole (e.g., 836) of the clip to enable the shackle of a lock (e.g., shackle 14 of lock 10) to pass through the housing 702 and clip and secure same to an EV charge port or an EV charge plug (e.g., 50").

The fifth embodiment of the EV lockout device 700 may include a third embodiment of a clip 800 designed for use therewith. The clip 800 may be made of a polymeric material such as a plastic, metal, or other suitable materials, or combinations thereof. In one embodiment, the clip 800 may be made of polypropylene. In some embodiments, the clip 800 may be formed using injection molding or a 3D printer.

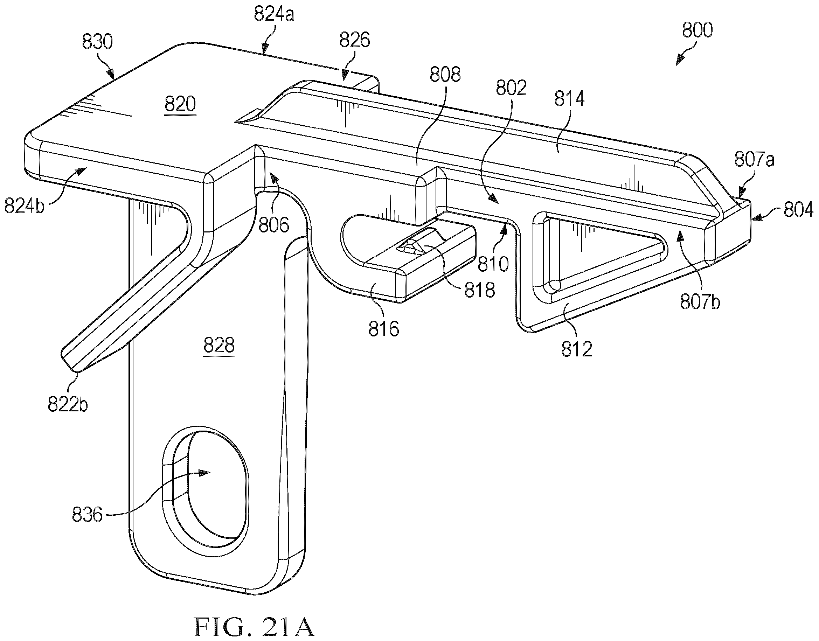

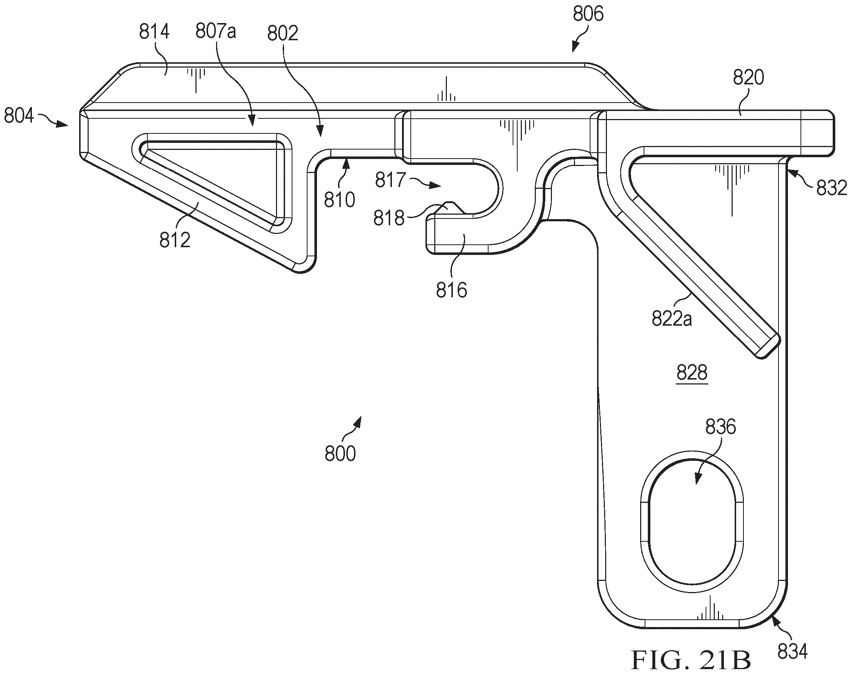

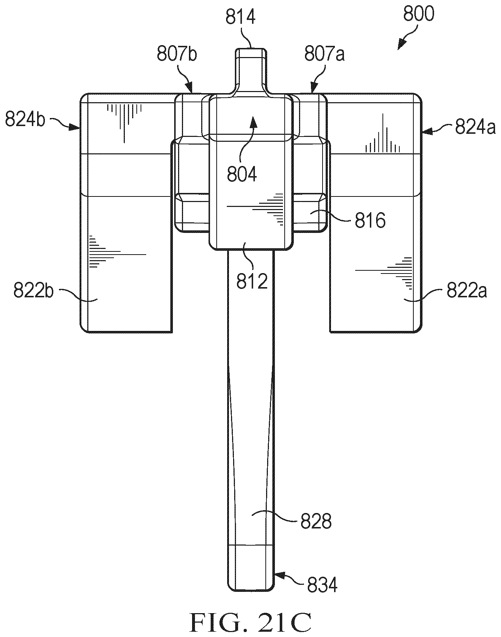

As shown in FIGS. 21A and 21B, the clip 800 may be provided in the form of a body having a first elongated member 802 defining a first end 804 and a second end 806, opposite the first end 804. The first elongated member 802 may have a first elongated side 807a and a second elongated side 807b, whereby the first and second elongated sides 807a, 807b may extend between the first end 804 and the second end 806 of the first elongated member 802. The first elongated member 802 may further be defined by a top side 808 and a bottom side 810.

The first elongated member 802 may terminate at a hook portion 812 that extends downwardly from the bottom side 810 at the first end 804. In some embodiments, the hook portion 812 may be designed to engaged with the locking mechanism 54" (e.g., the top opening 53) of the third EV charge plug 50". In some embodiments, the hook portion 812 may be imparted with a substantially triangular cross-sectional profile. In other embodiments, the hook portion 812 may be imparted with a different shape.

The first elongated member 802 may further include a rail 814 that extends along the top side 808 of the first elongated member 802. The rail 814 may be disposed along a center of and be coextensive with the top side 808 between the first elongated side 807a and the second elongated side 807b. In some embodiments, the rail 814 may provide structural support or additional rigidity to the first elongated member 802.

The first elongated member 802 may further include a coupling member 816 protruding downwardly from the bottom side 810 thereof. The coupling member 816 may be disposed on the bottom side 810 of the first elongated member 802 adjacent the second end 806. In some embodiments, the bottom side 810 of the first elongated member 802 together with the coupling member 816 may define a "C" or "U" shape nook 817 as shown in FIG. 21B. The coupling member 816 may include a projection 818 on an end portion of the coupling member 816. In some embodiments, the projection 818 may extend upwardly toward the bottom side 810 of the first elongated member 802. In some embodiments, the nook 817 and the projection 818 may be designed to keep the clip 800 engaged with the housing 702 when placed thereon (see, e.g., FIG. 22C).

In some embodiments, the first elongated member 802 may be made of a flexible, but sturdy material, so that the hook portion 812 can slide up and over the top side 65 of the first protrusion 64" and into the top opening 53 of the third EV charge plug 50" when the clip 800 is attached to or engaged with the housing 702 of the EV lockout device 700, but is not able to be easily tampered with or broken. In some embodiments, the first elongated member 802 also may be imparted with a length that is suitable for the hook portion 812 to slide up and over the top side 65 of the first protrusion 64" and into the top opening 53 of the third EV charge plug 50" and secure the EV lockout device 700 to the first protrusion 64" of the third EV charge plug 50", when the clip 800 is attached or engaged with the housing 702 of the EV lockout device 700.

The second end 806 of the first elongated member 802 may be connected to or attached to a platform portion 820. The platform portion 820 may include a first support leg 822a disposed on a first platform side 824a of the platform portion 820 and a second support leg 822b disposed on a second platform side 824b of the platform portion 820. In some embodiments, the second support leg 822b may be substantially parallel to and a mirror image of the first support leg 822a. The first and second support legs 822a, 822b may extend from a front end 826 of the platform portion 820 on an angle downward and away from the front end 826. In some embodiments, the angle at which the first and second support legs 822a, 822b may extend downwardly from the front end 826 of the platform portion 820 may be 45 degrees or about 45 degrees. In other embodiments, the angle may be greater than or less than 45 degrees. In some embodiments, the first and second support legs 822a, 822b may be made of a flexible, but sturdy material, so that the first and second support legs 822a, 822b can compress and expand without breaking. In some embodiments, the first and second support legs 822a, 822b may be springs or a flexible material.

In some embodiments, the platform portion 820 may be imparted with a substantially rectangular shape. In other embodiments, the platform portion 820 may be imparted with another shape (e.g., elliptical) or an irregular shape. In some embodiments, the platform portion 820 may be imparted with a length and a width and/or a surface area that is large enough for a human finger or thumb to engage with and press downward on the platform portion 820. For example, in some embodiments, the platform portion 820 may be imparted with a length of 13.88 mm, or about 13.88 mm, and a width of 22.5 mm, or about 22.5 mm.

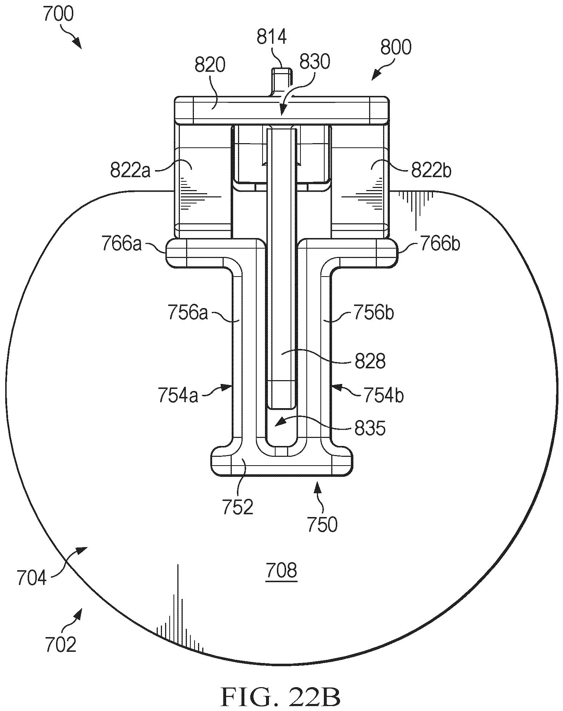

The clip 800 may further include a second elongated member 828 that extends downwardly from a center portion 830 of the platform portion 820. The second elongated member 828 may have a top end 832 and a bottom end 834 and may be connected or attached to the center portion 830 of the platform portion 820 at the top end 832 of the second elongated member 828. In some embodiments, the second elongated member 828 may extend downwardly from the platform portion 820 such that the first elongated member 802 and second elongated member 828 are disposed substantially perpendicular to one another as shown in FIG. 21B. In some embodiments, the second elongated member 828 may be imparted with a length such that a space 835 exists between the bottom support 752 of the housing 702 of the EV lockout device 700 and the bottom end 834 of the second elongated member 828 as shown in FIGS. 22B and 22C.

A lock through hole 836 may be disposed in and extend entirely through the second elongated member 828 between the top end 832 and the bottom end 834. In some embodiments, the lock through hole 836 may be disposed adjacent the bottom end 834. The lock through hole 836 may be imparted with a size and shape that is suitable for a shackle or shank of a lock (e.g., shackle 14 of lock 10) to pass through. In some embodiments, the lock through hole 836 may be the same shape and size as the first and second holes 764a, 764b of the clip support unit 750 of the housing 702. In some embodiments, the lock through hole 836 may be the same shape, but a different size as the first and second holes 764a, 764b of the clip support unit 750 of the housing 702. In other embodiments, the lock through hole 836 may be a different size and/or shape as the first hole 764a or the second hole 764b of the clip support unit 750 of the housing 702. In some embodiments, the lock through hole 836 may be disposed at a location in the second elongated member 828 such that the lock through hole 836 substantially aligns with the first hole 764a and the second hole 764b of the clip support unit 750 when the clip 800 is attached to or engages with the housing 702 in a first clip position (see, e.g., FIG. 22C).

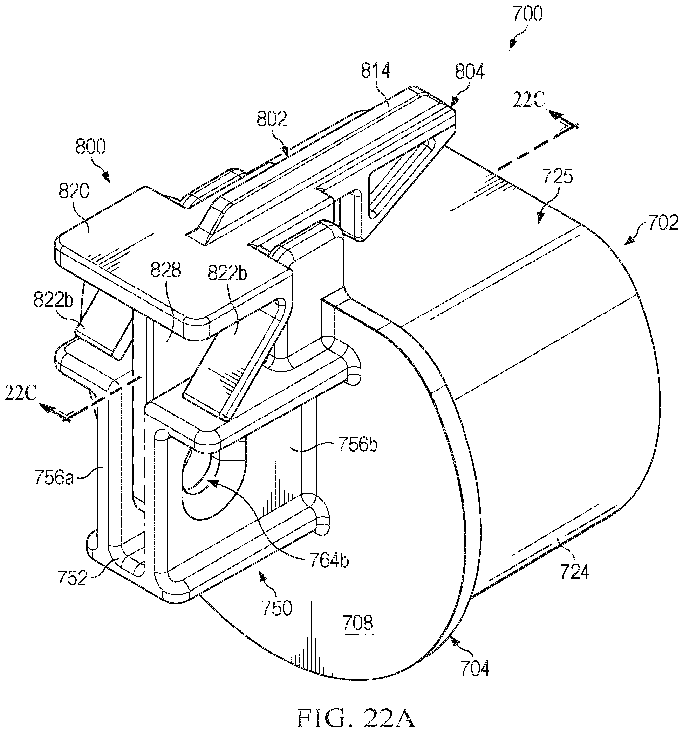

As shown in FIGS. 22A-22C, the clip 800 may attach to or otherwise engage with the housing 702. When in the first clip position, the clip 800 may be placed on the housing 702 such that the coupling member 816, the bottom side 810 of the first elongated member 802, and/or the projection 818 of the clip 800 may engage with the clip connector 770 of the housing 702 as best seen in FIG. 22C. The clip connector 770 may rest within the nook 817 when in the first clip position, and the coupling member 816 may extend through the opening 774 of the housing 702 as shown in FIG. 22C. In addition, when in the first clip position, the first support leg 822a may engage with the first clip support 766a of the clip support unit 750, and the second support leg 822b may engage with the second clip support 766b of the clip support unit 750. The first elongated member 802 of the clip 800 may extend over the top flange portion 725 of the first flange 724. The second elongated member 828 may be disposed within the gap 762 between the first side 754a and the second side 754b of the clip support unit 750 as shown in FIG. 22B. Further, when in the first clip position, the lock through hole 836 of the clip 800 may substantially align with the first hole 764a of the first side 754a and the second hole 764b of the second side 754b of the clip support unit 750.

As discussed above, when in the first clip position, the first and second support legs 822a, 822b may engage with the first and second clip supports 766a, 766b, respectively. In addition, when in the first clip position, the lock through hole 836 of the second elongated member 828 of the clip 800 may substantially align with the first hole 764a of the first side 754a and the second hole 764b of the second side 754b of the clip support unit 750 of the housing 702.

When the EV lockout device 700 is being placed on or is being removed from the third EV charge plug 50", the clip 800 may move to a second clip position (not shown). When moving into the second clip position, the first end 804 of the first elongated member 802 may move in a substantially upward direction. In some embodiments, the clip 800 may move to the second clip position in response to the platform portion 820 being pressed downward so that the first and second support legs 822a, 822b compress (e.g., the angle between the platform portion 820 and one or more of the first and second support legs 822a, 822b decreases). In other embodiments, the clip 800 may move to the second clip position in response to the hook portion 812 of the first elongated member 802 moving up and over the top side 65 of the first protrusion 64" of the third EV charge plug 50". In the second clip position, the first end 804 of the first elongated member 802 may raise up in order for the hook portion 812 to slide over the top side 65 of the first protrusion 64" and into the top opening 53 of the third EV charge plug 50". As the first end 804 of the first elongated member 802 raises upward, the coupling member 816 and the projection 818 may move or rotate about the clip connector 770 of the housing 702 in a first direction. In some embodiments, as the first end 804 of the first elongated member 802 raises upward, the second elongated member 828 may move in a substantially downward direction such that the space 835 between the bottom end of the second elongated member 828 and the bottom support 752 of the clip support unit 750 decreases. In some embodiments, as the second elongated member 828 moves in the substantially downward direction, the lock through hole 836 of the second elongated member 828 may become out of alignment with the first hole 764a and the second hole 764b of the clip support unit 750.

If the EV lockout device 700 is being placed into the third EV charge plug 50", the clip 800 may move from the first clip position to the second clip position. As the clip 800 is moving from the first clip position to the second clip position, the housing 702 may engage with the third EV charge plug 50". In some embodiments, the first flange 724 of the housing 702 may engage with the inner wall 63 of the first protrusion 64" of the third EV charge plug 50" such that the first protrusion 64" surrounds all or a portion of the first flange 724.

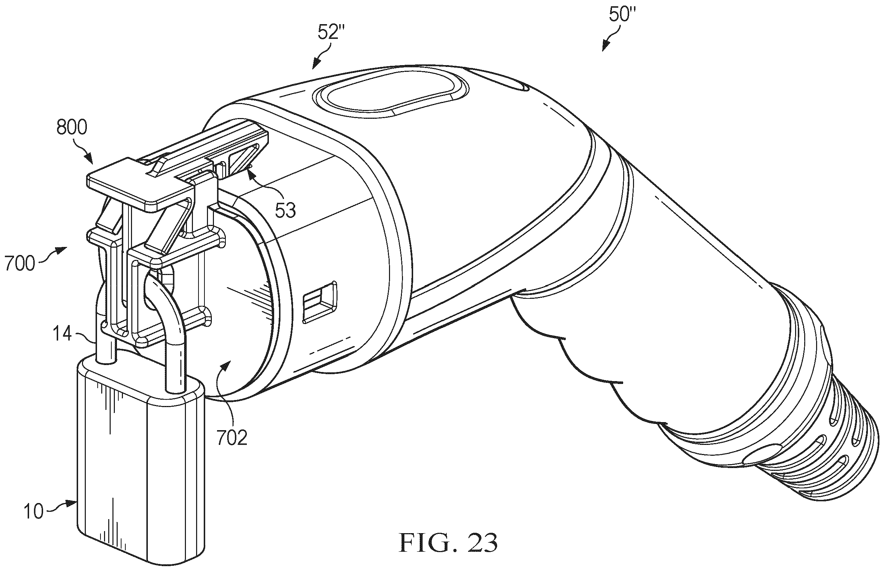

After moving into the second clip position in response to the platform portion 820 being depressed, the clip 800 may move back into the first clip position upon release of the platform portion 820. As the clip 800 moves back into the first clip position, the first end 804 of the first elongated member 802 may lower and the coupling member 816 and the projection 818 may move or rotate about the clip connector 770 of the housing 702 in a direction opposition the first direction. In addition, as the clip 800 moves back in the first clip position, the second elongated member 828 may move in a substantially upward direction as the first and second support legs 822a, 822b decompress (e.g., the angle between the platform portion 820 and one or more of the first and second support legs 822a, 822b increases). If the EV lockout device 700 has been placed onto the third EV charge plug 50", the hook portion 812 may be disposed in the top opening 53 on the top side 65 of the first protrusion 64", when the clip 800 returns to the first clip position. Additionally, when the clip 800 moves back into the first clip position, the first hole 764a of the clip support unit 750, the lock through hole 836 of the second elongated member 828, and the second hole 764b of the clip support unit 750 may be substantially aligned such that the shackle 14 of lock 10 may be threaded through the first hole 764a, the lock through hole 836, and the second hole 764b, or vice versa. The shackle 14 may then be securely attached to the body 12 of the lock 10, thereby placing the EV lockout device 700 in a locked position as shown in FIG. 23.

When in the locked position, the clip 800 cannot fully move to the second clip position (e.g., the hook portion 812 cannot be raised high enough to slide out of the top opening 53 and back over the top side 65 of the first protrusion 64" of the third EV charge plug 50") as the shackle 14 prevents the second elongated member 828 of the clip 800 from moving sufficiently downward. To remove the EV lockout device 700 from the third EV charge plug 50", the shackle 14 of the lock 10 may be disengaged from the body 12 of the lock 10 and removed from the clip support unit 750 of the housing 702 by threading the shackle 14 through the second hole 764b, the lock through hole 836, and the first hole 764a, or vice versa. Once the lock 10 is removed from the EV lockout device 700, the platform portion 820 of the clip 800 may be depressed causing the clip 800 to move from the first clip position to the second clip position in which the first and second support legs 822a, 822b compress and the hook portion 812 is raised. The hook portion 812 may then be moved up and away from the top opening 53 as the EV lockout device 700 is slid off or otherwise removed from the third EV charge plug 50" (e.g., the first flange 724 is removed from the first protrusion 64").

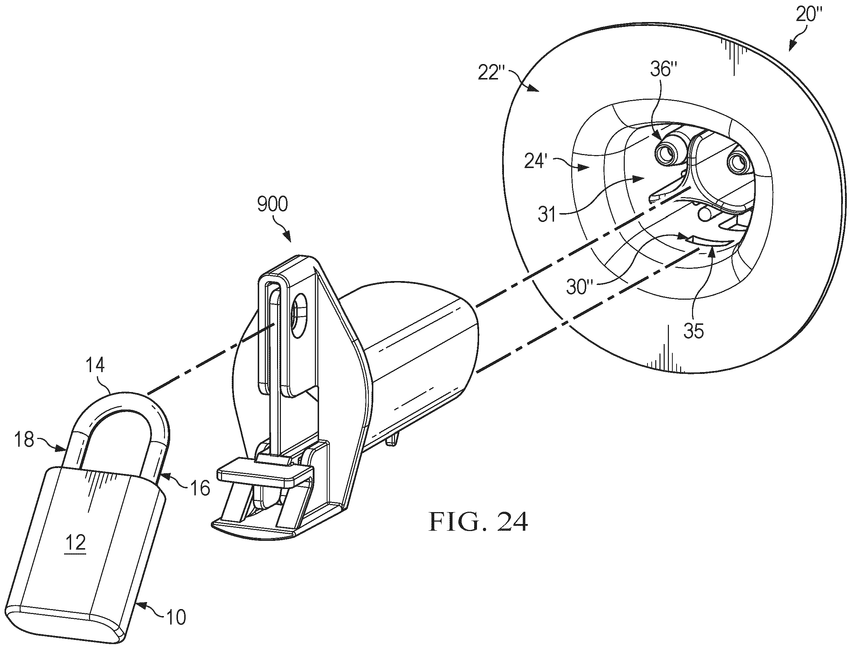

FIG. 24 depicts a partially exploded view of a lock 10, a sixth embodiment of an EV lockout device 900, and a third electric vehicle (EV) charge port 20".

The third EV charge port 20" may be disposed inside of, on, or otherwise associated with an electric vehicle (not shown). In some embodiments, the third EV charge port 20" may be provided in the form of a North American Charging Standard (NACS) or Tesla socket.

The third EV charge port 20" may include a port housing 22" having a locking mechanism aperture 24'. The third EV charge port 20" may include a locking mechanism 30" disposed within an inner wall 31 of the locking mechanism aperture 24'. The locking mechanism 30" may include a bottom opening 35 disposed on a bottom portion of the inner wall 31 of the locking mechanism aperture 24'.

A first set of terminals receptors 36" may be disposed within the locking mechanism aperture 24'.

The locking mechanism aperture 24' may be imparted with a first shape. In some embodiments, the first shape may be partially cylindrical. In other embodiments, the locking mechanism aperture 24' may be imparted with other shapes, for example, a rectangular or square shape, a triangular shape, a trapezoidal shape, and the like, a combination of shapes, or an irregular shape.

The locking mechanism aperture 24' may be imparted with a set of dimensions (not shown). In some embodiments, the set of dimensions of the locking mechanism aperture 24' may include a center width, a center height, and/or a depth. In some embodiments, the center width of the locking mechanism aperture 24' may be about 40.35 mm. In some embodiments, the center height of the locking mechanism aperture 24' may be about 36.14 mm. In some embodiments, the depth of the locking mechanism aperture 24' may be about 49.86 mm.

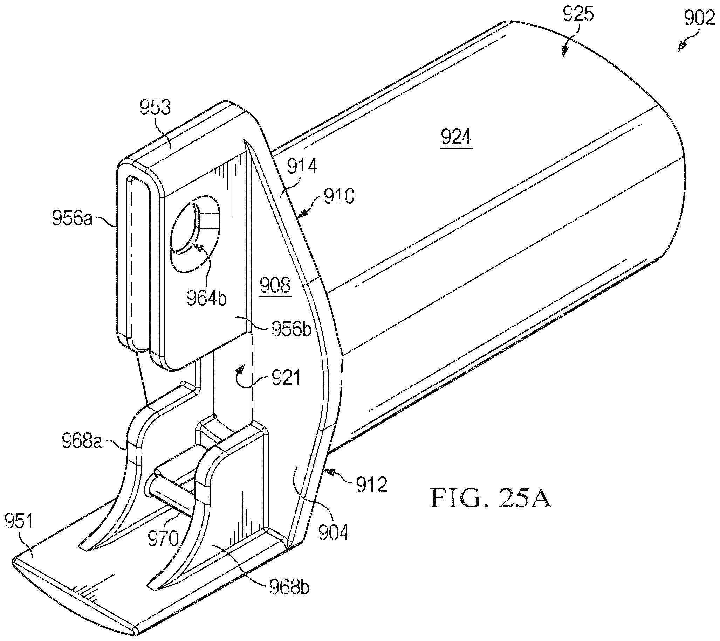

Turning to FIGS. 25A-25D, the sixth embodiment of the EV lockout device 900 may include a housing 902. The housing 902 may be made of a polymeric material such as a plastic, metal, or other suitable materials, or combinations thereof. In one embodiment, the housing 902 may be made of ABS polymer plastic. In some embodiments, the housing 902 may be formed using injection molding or a 3D printer.

The housing 902 may include a base 904 defined by a front side 906 and a back side 908. The base 904 may also have a top portion 910 and a bottom portion 912, opposite the top portion 910. In some embodiments, the bottom portion 912 may have a bottom edge 913.

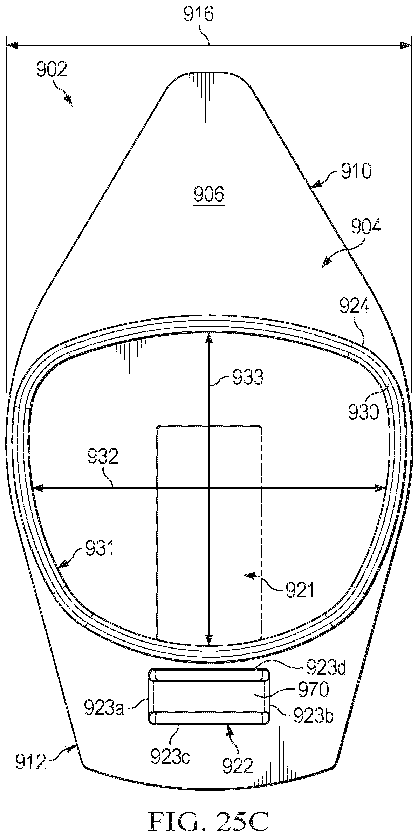

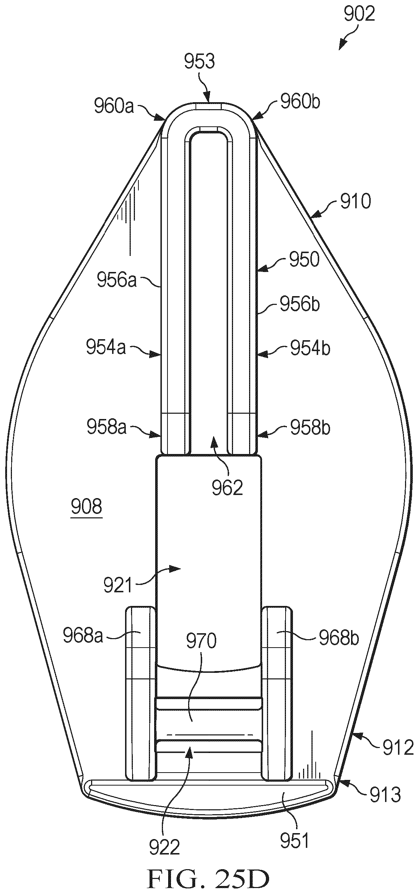

The base 904 may have an outer edge 914 that defines a shape of the base 904. In some embodiments, the shape of the base 904 may be substantially a square, a rectangle, a circle, an oval, a triangle, a trapezoid, and the like. In some embodiments, the shape of the base 904 may be imparted with round edges as shown in FIGS. 25A, 25C, and 25D. Combinations of shapes and irregular shapes are also contemplated.

In some embodiments, the base 904 may be imparted with a shape that is substantially oblong or a substantially boat shape as shown in FIGS. 25C and 25D. In some embodiments, the base 904 may be imparted with a base width 916. In some embodiments, the base width 916 may be 40.38 mm, or about 40.38 mm.

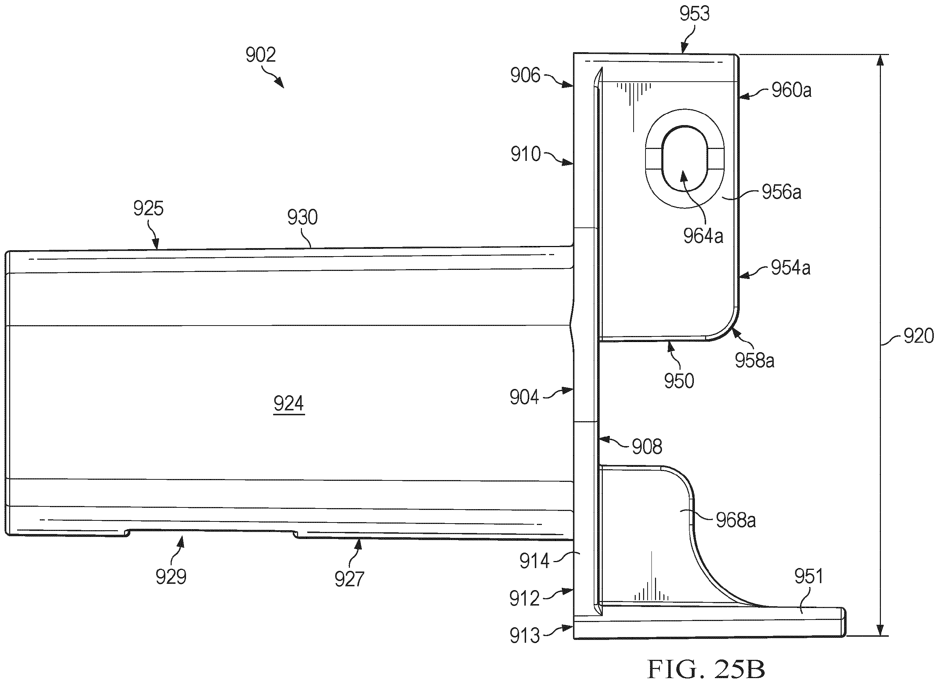

The base 904 may be imparted with a base height 920 (see FIG. 25B). In some embodiments, the base height 920 may be 71.14 mm, or about 71.14 mm. The base 904 also may be imparted with a base thickness (not shown). In some embodiments, the base thickness may be 3 mm, or about 3 mm.

The base 904 may have a clip opening 921. In some embodiments, the clip opening 921 may be disposed in and extend entirely through the base 904 within a first flange wall 930 of a first flange 924 (discussed in more detail below) as shown in FIG. 25C. The clip opening 921 may be imparted with any size or shape suitable for a first end 1004 of a first elongated member 1002 of a fourth embodiment of a clip 1000, discussed below, and/or a fin portion 1037 of a second elongated member 1028 of the clip 1000 to fit partially or fully therethrough. In some embodiments, the clip opening 921 may have a substantially rectangular shape as shown in FIGS. 25C and 25D.

The bottom portion 912 of the base 904 may have a divot opening 922 disposed in and extend entirely through a center area of the bottom portion 912. In some embodiments, the divot opening 922 may be disposed below the clip opening 921. The divot opening 922 may be defined by a first divot side 923a, a second divot side 923b, a bottom divot side 923c, and a top divot side 923d. In some embodiments, the divot opening 1122 may be imparted with a substantially rectangular shape as shown in FIGS. 25C and 25D.

The front side 906 of the base 904 may include the first flange 924. In some embodiments, the first flange 924 may be elongated as shown in FIG. 25B. The first flange 924 may have a top flange portion 925 and a bottom flange portion 927. The first flange 924 may also have an inner side 931.

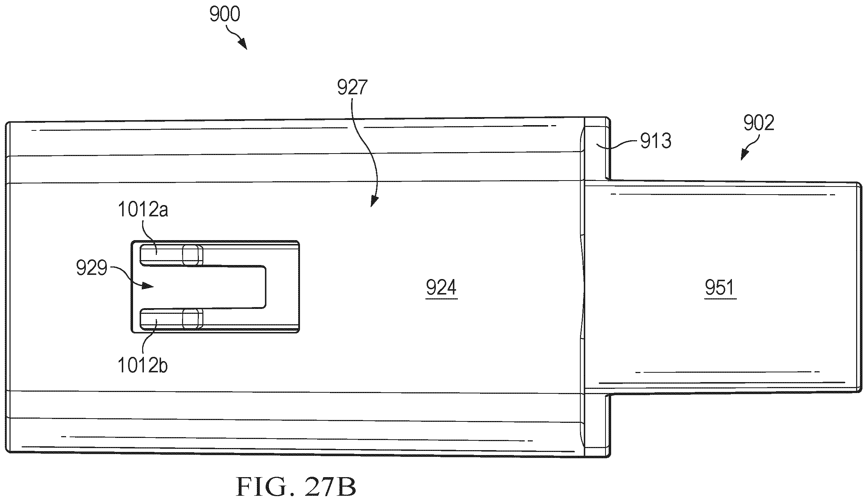

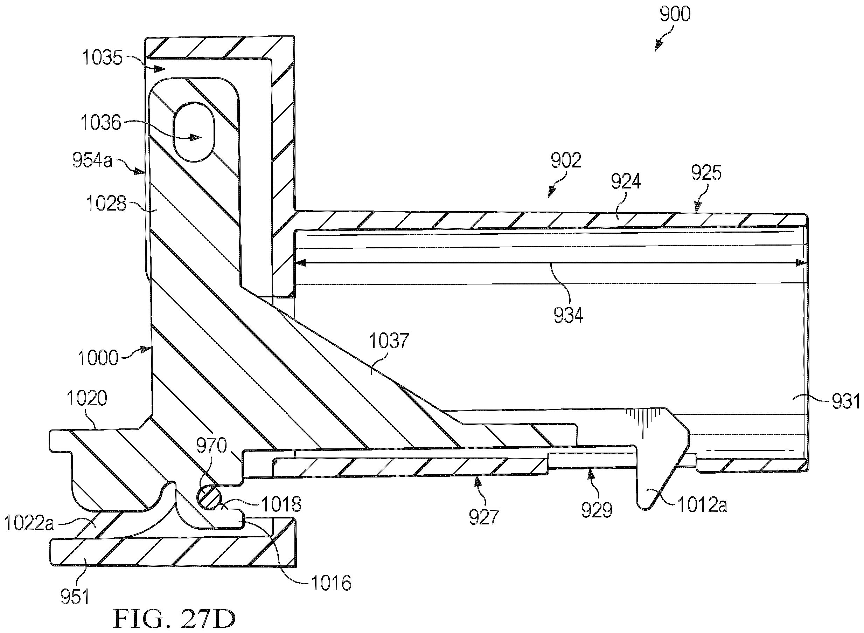

In some embodiments, a first flange aperture 929 may be disposed in the bottom flange portion 927 as shown in FIGS. 25B, 27B, and 27D. The first flange aperture 929 may be imparted with any size or shape suitable for a first hook portion 1012a and/or a second hook portion 1012b of the clip 1000, discussed in more detail below, to fit partially or fully therethrough (see, e.g., FIG. 27D).

The first flange 924 may have a first flange wall 930 that is imparted with a first flange thickness. In some embodiments, the first flange thickness may be 1.6 mm, or about 1.6 mm.

The first flange wall 930 may define a first flange shape. The first flange shape may be any size and shape suitable to engage with the locking mechanism aperture 24' when the EV lockout device 900 is placed on or otherwise in communication with the third EV charge port 20". In some embodiments, the first flange shape may be the same or substantially the same as the shape of the locking mechanism aperture 24' of the third EV charge port 20". In some embodiments, the first flange shape may be partially cylindrical.

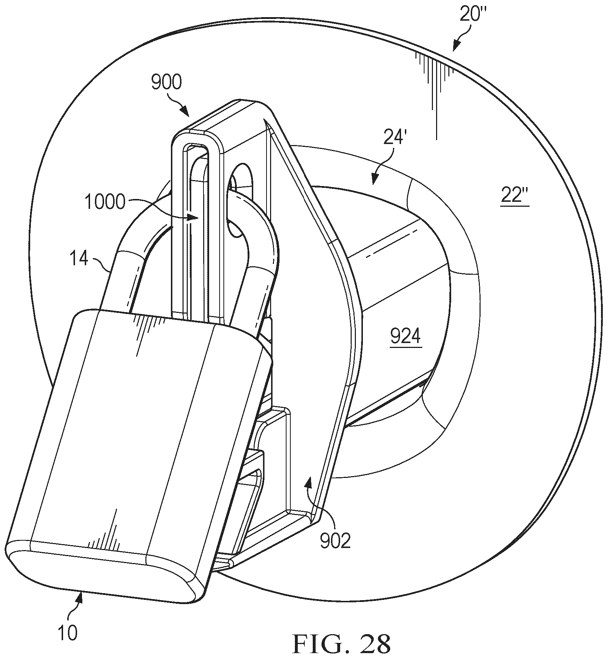

The first flange 924 may be imparted with a first set of dimensions. In some embodiments, the first set of dimensions of the first flange 924 may be complimentary to the set of dimensions for the locking mechanism aperture 24' of the third EV charge port 20" so that the first flange 924 can be placed into and fit within the locking mechanism aperture 24' as shown in FIG. 28. In some instances, a friction fit between the first flange wall 930 and the inner wall 31 of the locking mechanism aperture 24' may prevent the housing 902 from disengaging from the third EV charge port 20".

In some embodiments, the first set of dimensions of the first flange 924 may include a first flange center width 932, a first flange center height 933 (see FIG. 25C), and a first flange depth 934 (see FIG. 27D). In some embodiments, the first flange center width 932 may be the same as or less than the center width of the locking mechanism aperture 24' of the third EV charge port 20". For example, in some embodiments, the first flange center width 932, may be 35.56 mm, or about 35.56 mm, and the first flange center height 933 may be 31.24 mm, or about 31.24 mm.

The first flange depth 934 may be the same as or different from the depth of the locking mechanism aperture 24' of the third EV charge port 20". In some embodiments, the first flange depth 934 is the same as, substantially the same as, or greater than the depth of the locking mechanism aperture 24' of the third EV charge port 20". For example, in some embodiments, the first flange depth 934 may be 69 mm, or about 69 mm.

The back side 908 of the base 904 may include a clip support unit 950 and a bottom clip support 951 protruding outwardly therefrom. The clip support unit 950 may be defined by a top support 953, a first side 954a, and a second side 954b. In some embodiments, the first side 954a may be substantially parallel to the second side 954b. In some embodiments, the second side 954b may be a mirror image of the first side 954a.

The first side 954a may include a first side plate 956a having a first bottom end 958a and a first top end 960a. The first side plate 956a may be connected or attached to the top support 953 on the first top end 960a. The second side 954b may include a second side plate 956b having a second bottom end 958b and a second top end 960b. The second side plate 956b may be connected or attached to the top support 953 on the second top end 960b.

The top support 953 may connect the first side plate 956a to the second side plate 956b. A gap 962 is formed between the first side plate 956a and the second side plate 956b as shown in FIG. 25D.

A first hole 964a may be disposed in and extend entirely through the first side plate 956a between the first top end 960a and the first bottom end 958a. A second hole 964b may also be disposed in and extend entirely through the second side plate 956b between the second top end 960b and the second bottom end 958b. The second hole 964b may be disposed in the second side plate 956b at the same location as the first hole 964a is disposed in the first side plate 956a so that the first hole 964a and the second hole 964b are substantially aligned. The first and second holes 964a, 964b may be any size and shape suitable for a shackle or shank of a lock (e.g., shackle 14 of the lock 10) to pass through. In some embodiments, the first and second holes 964a, 964b may be imparted with a substantially oval shape. In other embodiments, the first and second holes 964a, 964b may be imparted with a substantially circular shape.

In some embodiments, the bottom clip support 951 may be imparted with a substantially rectangular shape as shown in FIG. 27B. The bottom clip support 951 may include a first vertical support 968a and a second vertical support 968b. The first vertical support 968a may extend from the bottom clip support 951 upward toward the top portion 910 of the housing 902 and the second vertical support 968b may extend from the bottom clip support 951 upward toward the top portion 910 of the housing 902. In some embodiments, the first vertical support 968a and the second vertical support 968b may be mirror images of each other. The first and second vertical supports 968a, 968b may also be disposed on the back side 908 of the housing 902 adjacent the divot opening 922 such that the first vertical support 668a is disposed adjacent the first divot side 923a and the second vertical support 968b is disposed adjacent the second divot side 923b of the divot opening 922.

A clip connector 970 may extend between the first vertical support 968a and the second vertical support 968b thereby connecting the first vertical support 968a to the second vertical support 968b. The clip connector 970 may also extend across the divot opening 922. In some embodiments, the clip connector 970 may be imparted with a cylindrical or rod shape.

The clip support unit 950 and the bottom clip support 951 may be designed to engage with one or more embodiments of a clip (e.g., 200, 400, 800, 1000) disclosed herein. In some embodiments, the bottom clip support 951 may be designed to engage or otherwise be in communication with first and second support legs (e.g., 1022a, 1022b) of a clip (e.g., 1000). The clip connector 970 may be designed to engage with a coupling member (e.g., 1016) of the clip such that the coupling member can rotate about the clip connector 970 in order to raise and/or lower a first end (e.g., 1004) of a first elongated member (e.g., 1002) of the clip. In addition, the gap 962 disposed between the first and second side plates 956a, 956b of the clip support unit 950 may be designed to engage with a second elongated member (e.g., 1028) of the clip and allow the second elongated member of the clip to move in a substantially upwardly or downwardly direction between the first and second side plates 956a, 956b. Furthermore, the first and second holes 964a, 964b of the clip support unit 950 may be designed to substantially align with a lock through hole (e.g., 1036) of the clip to enable the shackle of a lock (e.g., shackle 14 of lock 10) to pass through the housing 902 and clip and secure same to an EV charge port (e.g., 20") or an EV charge plug.

The sixth embodiment of the EV lockout device 900 may include a fourth embodiment of a clip 1000 designed for use therewith. The clip 1000 may be made of a polymeric material such as a plastic, metal, or other suitable materials, or combinations thereof. In one embodiment, the clip 1000 may be made of polypropylene. In some embodiments, the clip 1000 may be formed using injection molding or a 3D printer.

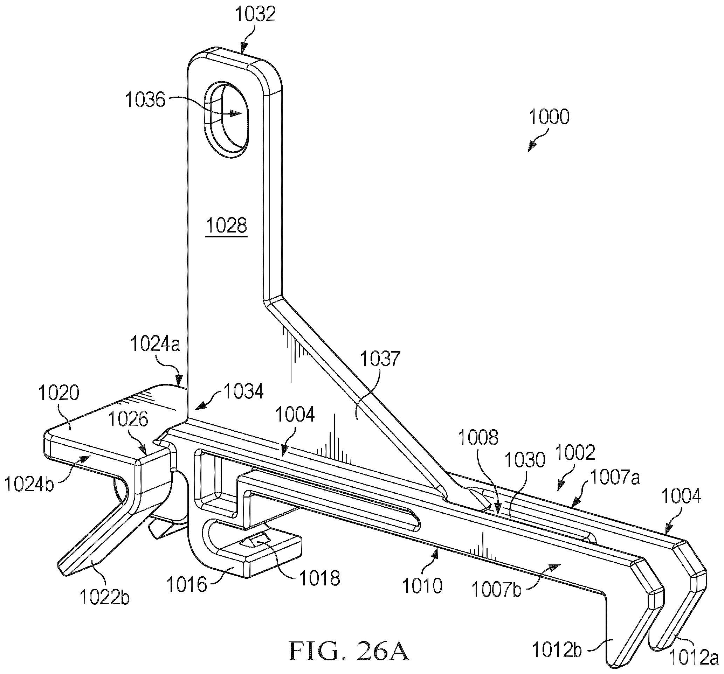

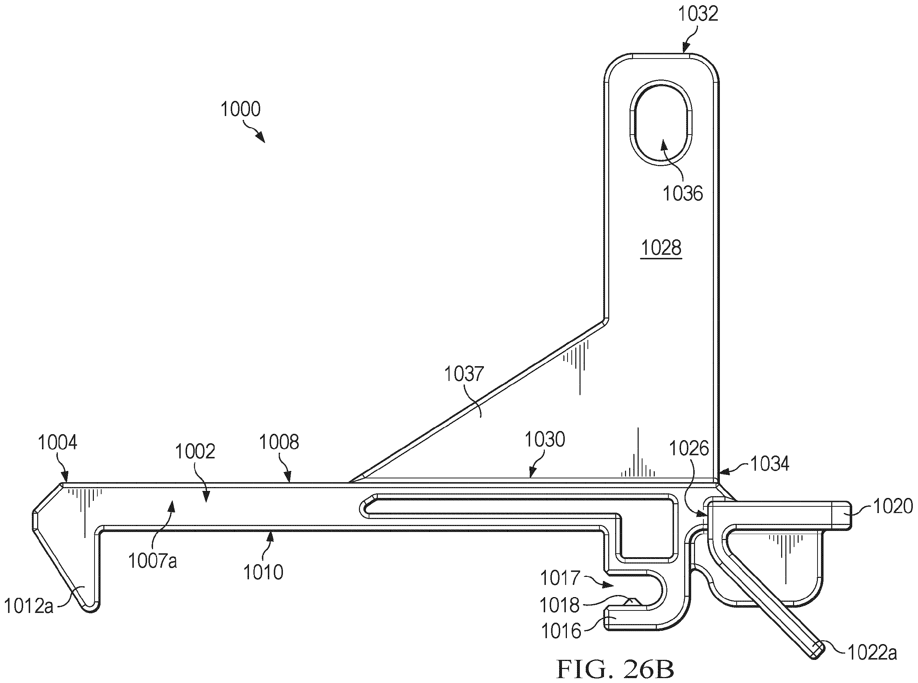

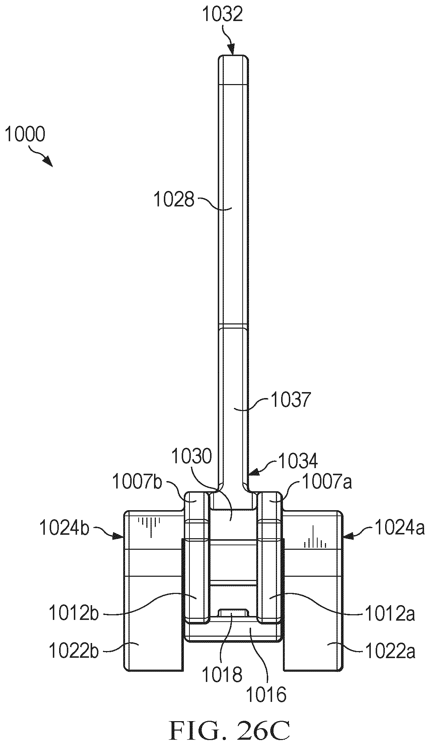

As shown in FIGS. 26A and 26B, the clip 1000 may be provided in the form of a body having a first elongated member 1002 defining a first end 1004 and a second end 1006, opposite the first end 1004. The first elongated member 1002 may have a first elongated side 1007a and a second elongated side 1007b, whereby the first and second elongated sides 1007a, 1007b may extend between the first end 1004 and the second end 1006 of the first elongated member 1002. The first elongated member 1002 may further be defined by a top side 1008 and a bottom side 1010.

The first elongated member 1002 may terminate at a first hook portion 1012a and a second hook portion 1012b that extend downwardly from the bottom side 1010 of the first elongated side 1007a at the first end 1004. In some embodiments, the first and second hook portions 1012a, 1012b may be designed to engage with the locking mechanism 30" (e.g., bottom opening 35) of the third EV charge port 20" of FIG. 24. In some embodiments, the first and second hook portions 1012a, 1012b may be imparted with a substantially triangular cross-sectional profile. In other embodiments, the first and second hook portions 1012a, 1012b may be imparted with a different shape.

The first elongated member 1002 may further include a coupling member 1016 protruding downwardly from the bottom side 1010 thereof. The coupling member 1016 may be disposed on the bottom side 1010 of the first elongated member 1002 adjacent the second end 1006. In some embodiments, the bottom side 1010 of the first elongated member 1002 together with the coupling member 1016 may define a "C" or "U" shape nook 1017 as shown in FIG. 26B. The coupling member 1016 may include a projection 1018 on an end portion of the coupling member 1016. In some embodiments, the projection 1018 may extend upwardly toward the bottom side 1010 of the first elongated member 1002. In some embodiments, the nook 1017 and the projection 1018 may be designed to keep the clip 1000 engaged with the housing 902 when placed thereon (see, e.g., FIG 27D).

In some embodiments, the first elongated member 1002 may be made of a flexible, but sturdy material, material so that the first and second hook portions 1012a, 1012b can slide up and over the inner wall 31 of the locking mechanism aperture 24' and into the bottom opening 35 of the locking mechanism 30" of the third EV charge port 20" when the clip 1000 is attached to or engaged with the housing 902 of the EV lockout device 900), but is not able to be easily tampered with or broken. In some embodiments, the first elongated member 1002 may be imparted with a length that is suitable for first and second hook portions 1012a, 1012b to slide up and over the inner wall 31 of the locking mechanism aperture 24' of the third EV charge port 20" and secure the EV lockout device 900 to the locking mechanism 30", when the clip 1000 is attached or engaged with the housing 902 of the EV lockout device 900.

The second end 1006 of the first elongated member 1002 may be connected to or attached to a platform portion 1020. The platform portion 1020 may include a first support leg 1022a disposed on a first platform side 1024a of the platform portion 1020 and a second support leg 1022b disposed on a second platform side 1024b of the platform portion 1020. In some embodiments, the second support leg 1022b may be substantially parallel to and a mirror image of the first support leg 1022a. The first and second support legs 1022a, 1022b may extend from a front end 1026 of the platform portion 1020 on an angle downward and away from the front end 1026. In some embodiments, the angle at which the first and second support legs 1022a, 1022b may extend downwardly from the front end 1026 of the platform portion 1020 may be 45 degrees or about 45 degrees. In other embodiments, the angle may be greater than or less than 45 degrees. In some embodiments, the first and second support legs 1022a, 1022b may be made of a flexible, but sturdy material, so that the first and second support legs 1022a, 1022b can compress and expand without breaking. In some embodiments, the first and second support legs 1022a, 1022b may be springs or a flexible material.

In some embodiments, the platform portion 1020 may be imparted with a substantially rectangular shape. In other embodiments, the platform portion 1020 may be imparted with another shape (e.g., elliptical) or an irregular shape. In some embodiments, the platform portion 1020 may be imparted with a length and a width and/or a surface area that is large enough for a human finger or thumb to engage with and press downward on the platform portion 1020. For example, in some embodiments, the platform portion 1020 may be imparted with a length of 13.88 mm, or about 13.88 mm, and a width of 22.5 mm, or about 22.5 mm.

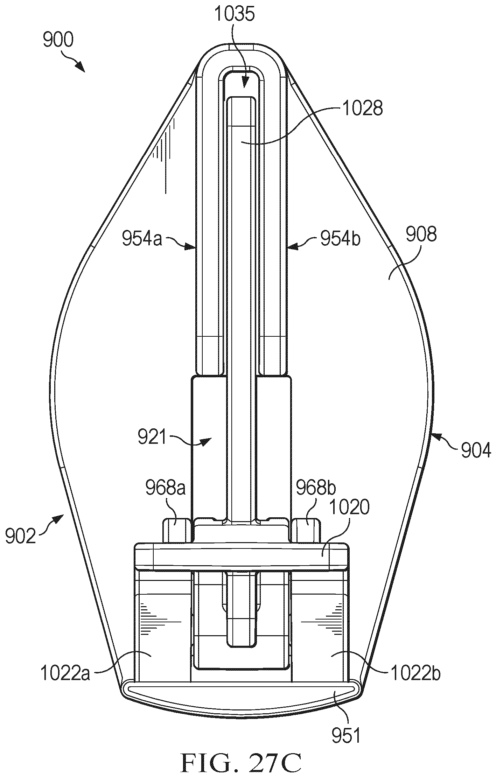

The clip 1000 may further include a second elongated member 1028 that extends upwardly from the top side 1008 of the second end 1006 of the first elongated member 1002. The second elongated member 1028 may extend upwardly from a center section 1030 of the first elongated member 1002 between the first elongated side 1007a and the second elongated side 1007b. The second elongated member 1028 may have a top end 1032 and a bottom end 1034 and may be connected or attached to the center section 1030 of the first elongated member 1002 at the bottom end 1034 of the second elongated member 1028. In some embodiments, the second elongated member 1028 may extend upwardly from the first elongated member 1002 such that the first elongated member 1002 and second elongated member 1028 are disposed substantially perpendicular to one another as shown in FIG. 26B. In some embodiments, the second elongated member 1028 may be imparted with a length such that a space 1035 exists between the top support 953 of the housing 902 of the EV lockout device 900 and the top end 1032 of the second elongated member 1028 when the clip 1000 is attached to or engaged with the housing 902 as shown in FIGS. 27C and 27D.

In some embodiments, the second elongated member 1028 may be imparted with a fin portion 1037 that is coextensive with and extends from the second elongated member 1028 toward the first end 1004 of the first elongated member 1002 (see, e.g., FIG. 26B). In some embodiments, the fin portion 1037 may be imparted with a substantially triangular shape. In some embodiments, a bottom 1037 of the fin portion 1037 may be connected or attached to the first elongated member 1002 along the center section 1030 of the first elongated member.

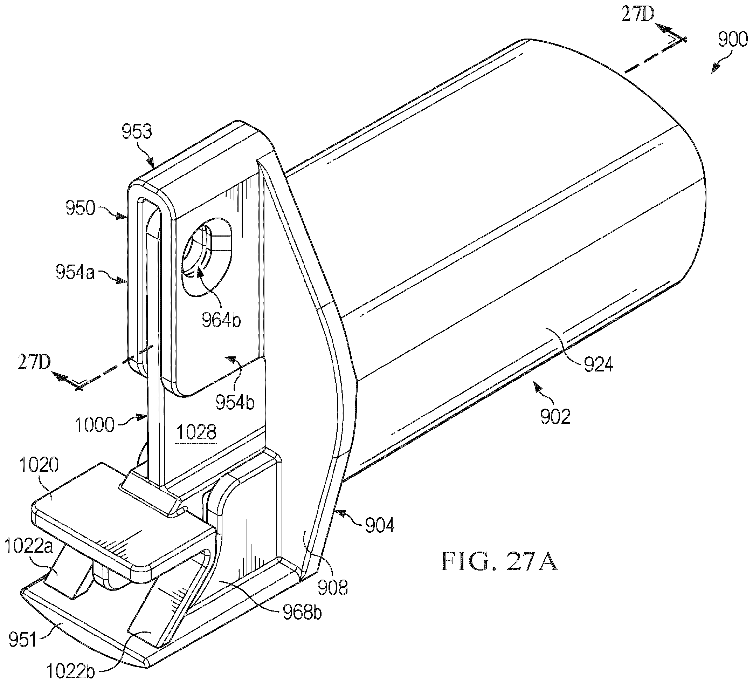

A lock through hole 1036 may be disposed in and extend entirely through the second elongated member 1028 between the top end 1032 and the bottom end 1034. In some embodiments, the lock through hole 1036 may be disposed adjacent the top end 1032. The lock through hole 1036 may be imparted with a size and shape that is suitable for a shackle or shank of a lock (e.g., shackle 14 of lock 10) to pass through. In some embodiments, the lock through hole 1036 may be the same shape and size as the first and second holes 964a, 964b of the clip support unit 950 of the housing 902. In some embodiments, the lock through hole 1036 may be the same shape, but a different size as the first and second holes 964a, 964b of the clip support unit 950 of the housing 902. In other embodiments, the lock through hole 936 may be a different size and/or shape as the first hole 964a or the second hole 964b of the clip support unit 950 of the housing 902. In some embodiments, the lock through hole 1036 may be disposed at a location in the second elongated member 1028 such that the lock through hole 1036 substantially aligns with the first hole 964a and the second hole 964b of the clip support unit 950 when the clip 1000 is attached to or engages with the housing 902 in a first clip position (see, e.g., FIG. 27A and 27D).

As shown in FIGS. 27A-27D, the clip 1000 may attach to or otherwise engage with the housing 902. When in the first clip position, the clip 1000 may be placed on the housing 902 such that the coupling member 1016, the bottom side 1010 of the first elongated member 1002, and/or the projection 1018 of the clip 1000 may engage with the clip connector 970 of the housing 902 as best seen in FIG. 27D. The clip connector 970 may rest within the nook 1017 when in the first clip position, and the coupling member 1016 may extend through the divot opening 922 of the housing 902 as shown in FIG. 27D. In addition, when in the first clip position, the first support leg 1022a and/or the second support leg 1022b may engage with the bottom clip support 951. The first elongated member 1002 of the clip 1000 may extend through the clip opening 921 and over the inner side 931 of the first flange 924 of the housing 902. The first and second hook portions 1012a, 1012b may be disposed in the first flange aperture 929 as shown in FIGS. 27A, 27B, and 27D. The second elongated member 1028 may be disposed within the gap 962 between the first side 954a and the second side 954b of the clip support unit 950 as shown in FIG. 27C. Further, when in the first clip position, the lock through hole 1036 of the clip 1000 may substantially align with the first hole 964a of the first side 954a and the second hole 964b of the second side 954b of the clip support unit 950.

As discussed above, when in the first clip position, the first and second support legs 1022a, 1022b may engage with the bottom clip support 951. In addition, when in the first clip position, the lock through hole 1036 of the second elongated member 1028 of the clip 1000 may substantially align with the first hole 964a of the first side 954a and the second hole 964b of the second side 954b of the clip support unit 950 of the housing 902.

When the EV lockout device 100 is being placed on or is being removed from the third EV charge port 20", the clip 1000 may move to a second clip position (not shown). When moving into the second clip position, the first end 1004 of the first elongated member 1002 may move in a substantially upward direction. In some embodiments, the clip 1000 may move to the second clip position in response to the platform portion 1020 being pressed downward so that the first and second support legs 1022a, 1022b compress (e.g., the angle between the platform portion 1020 and one or more of the first and second support legs 1022a, 1022b decreases). In other embodiments, the clip 1000 may move to the second clip position in response to the first and second hook portions 1012a, 1012b of the first elongated member 1002 engaging with the inner side 931 of the first flange 924. In the second clip position, the first end 1004 of the first elongated member 1002 may raise up in order for the first and second hook portions 1012a, 1012b to slide over the inner side 931 of the first flange 924 and into the bottom opening 35 of the locking mechanism 30" of third EV charge port 20". As the first end 1004 of the first elongated member 1002 raises upward, the coupling member 1016 and the projection 1018 may move or rotate about the clip connector 970 of the housing 902 in a first direction. In some embodiments, as the first end 1004 of the first elongated member 1002 raises upward, the second elongated member 1028 may move in a substantially downward direction such that the space 1035 between the top end 1032 of the second elongated member 1028 and the top support 953 of the clip support unit 950 increases. In some embodiments, as the second elongated member 1028 moves in the substantially downward direction, the lock through hole 1036 of the second elongated member 1028 may become out of alignment with the first hole 964a and the second hole 964b of the clip support unit 950.

If the EV lockout device 900 is being placed onto the third EV charge port 20", the clip 1000 may move from the first clip position to the second clip position. As the clip 1000 is moving from the first clip position to the second clip position, the housing 902 may engage with the third EV charge port 20". In some embodiments, the first flange 924 of the housing 902 may engage with the inner wall 31 of the locking mechanism aperture 24' of the third EV charge port 20" such that the locking mechanism aperture 24' surrounds all or a portion of the first flange 924.

After moving into the second clip position in response to the platform portion 1020 being depressed, the clip 1000 may move back into the first clip position upon release of the platform portion 1020. As the clip 1000 moves back into the first clip position, the first end 1004 of the first elongated member 1002 may lower and the coupling member 1016 and the projection 1018 may move or rotate about the clip connector 970 of the housing 902 in a direction opposition the first direction. In addition, as the clip 1000 moves back in the first clip position, the second elongated member 1028 may move in a substantially upward direction as the first and second support legs 1022a, 1022b decompress (e.g., the angle between the platform portion 1020 and one or more of the first and second support legs 1022a, 1022b increases). If the EV lockout device 900 has been placed on the third EV charge port 20", the first and second hook portions 1012a, 1012b may be disposed within the first flange aperture 929 and the bottom opening 35 of the locking mechanism 30", when the clip 200 returns to the first clip position. Additionally, when the clip 1000 moves back into the first clip position, the first hole 964a of the clip support unit 950, the lock through hole 1036 of the second elongated member 1028, and the second hole 964b of the clip support unit 950 may be substantially aligned such that the shackle 14 of lock 10 may be threaded through the first hole 964a, the lock through hole 1036, and the second hole 964b, or vice versa. The shackle 14 may then be securely attached to the body 12 of the lock 10, thereby placing the EV lockout device 900 in a locked position as shown in FIG. 28.

When in the locked position, the clip 1000 cannot fully move to the second clip position (e.g., the first and second hook portions 1012a, 1012b cannot be raised high enough to move up and out of the bottom opening 35 of the third EV charge port 20") as the shackle 14 prevents the second elongated member 1028 of the clip 1000 from moving sufficiently downward. To remove the EV lockout device 900 from the third EV charge port 20", the shackle 14 of the lock 10 may be disengaged from the body 12 of the lock 10 and removed from the clip support unit 950 of the housing 902 by threading the shackle 14 through the second hole 964b, the lock through hole 1036, and the first hole 964a, or vice versa. Once the lock 10 is removed from the EV lockout device 900, the platform portion 1020 of the clip 1000 may be depressed causing the clip 1000 to move from the first clip position to the second clip position in which the first and second support legs 1022a, 1022b compress and the first and second hook portions 1012a, 1012b are raised. The first and second hook portions 1012a, 1012b may then be moved over and away from the bottom opening 35 of the locking mechanism aperture 24' of the third EV charge port 20" as the EV lockout device 900 is slid out of or otherwise removed from the third EV charge port 20" (e.g., the first flange 924 is removed from the locking mechanism aperture 24').

FIG. 29 depicts a partially exploded view of the lock 10, a seventh embodiment of an EV lockout device 1100, and a fourth electric vehicle (EV) charge plug 50‴.

The fourth EV charge plug 50‴ may be attached to an EV charging station (not shown). In some embodiments, the fourth EV charge plug 50‴ may be provided in the form of a North American Charging Standard (NACS) or Tesla charge plug.

The fourth EV charge plug 50‴ may include a plug housing 52‴ having a front side 55"'. A first protrusion 64‴ may extend from the front side 55‴ of the plug housing 52"'.

The fourth EV charge plug 50‴ may include a locking mechanism 54‴ disposed on a top side 65' of the first protrusion 64‴. In some embodiments, the locking mechanism 54‴ may include a top opening 53'. A first set of terminals 66‴ may be disposed with the first protrusion 64‴.

The first protrusion 64‴ may be imparted with a first protrusion shape. In some embodiments, the first protrusion shape may be partially cylindrical. In other embodiments, the first protrusion 64‴ may be imparted with other shapes, for example, a rectangular or square shape, a triangular shape, a trapezoidal shape, and the like, a combination of shapes, or an irregular shape.

The first protrusion 64‴ may be imparted with a set of dimensions (not shown). In some embodiments, the set of dimensions of the first protrusion 64‴ may include a center width, a center height, and/or a depth. In some embodiments, the center width of the first protrusion 64" may be about 39.84 mm. In some embodiments, the center height of the first protrusion 64‴ may be about 35.11 mm. In some embodiments, the depth of the first protrusion 64‴ may be about 48.36 mm.

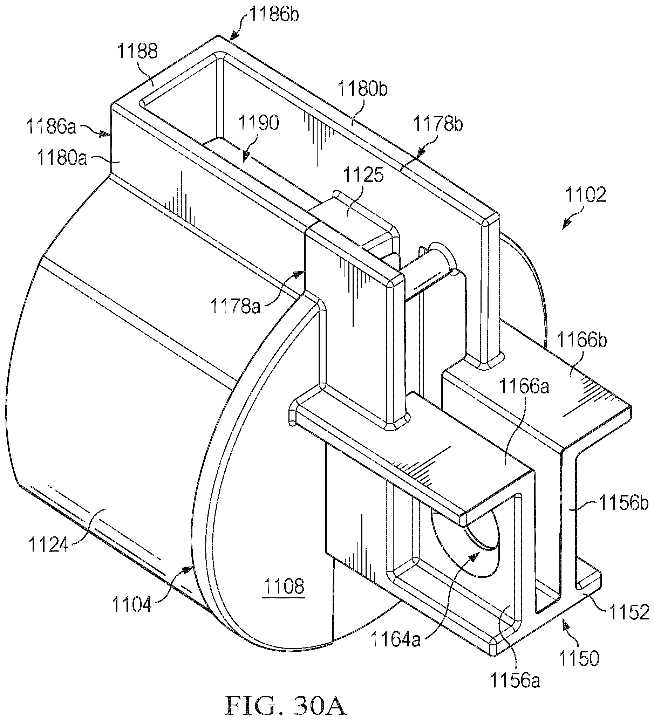

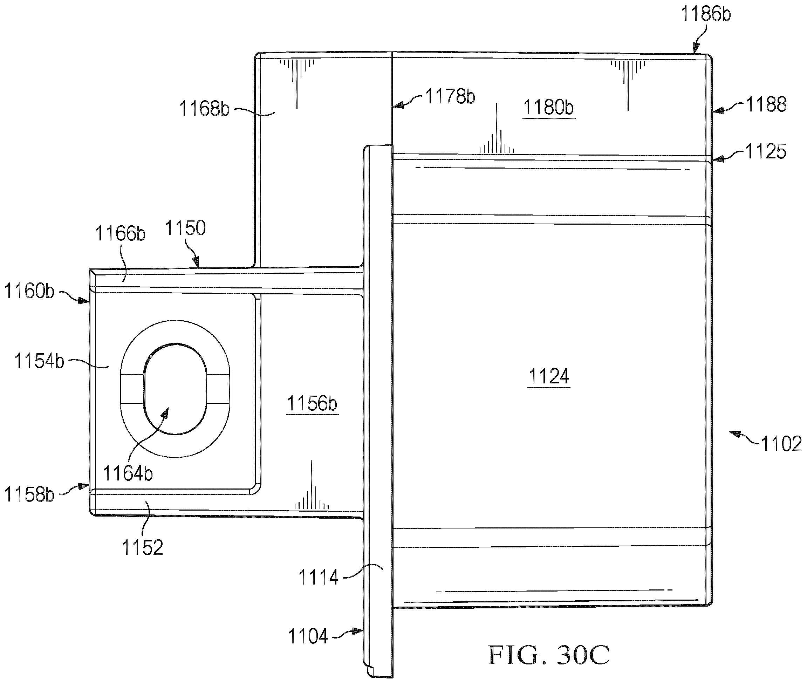

Turning to FIGS. 30A-30D, the seventh embodiment of the EV lockout device 1100 may include a housing 1102. The housing 1102 may be made of a polymeric material such as a plastic, metal, or other suitable materials, or combinations thereof. In one embodiment, the housing 1102 may be made of ABS polymer plastic. In some embodiments, the housing 1102 may be formed using injection molding or a 3D printer.

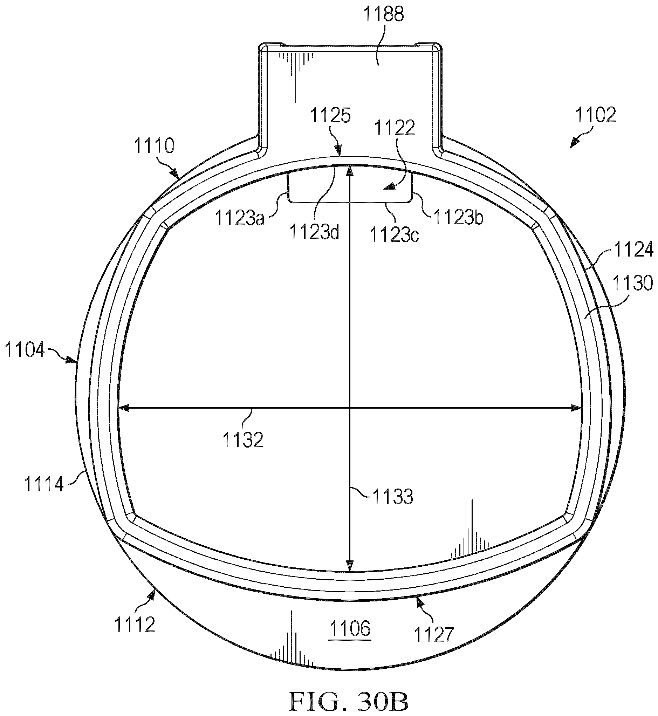

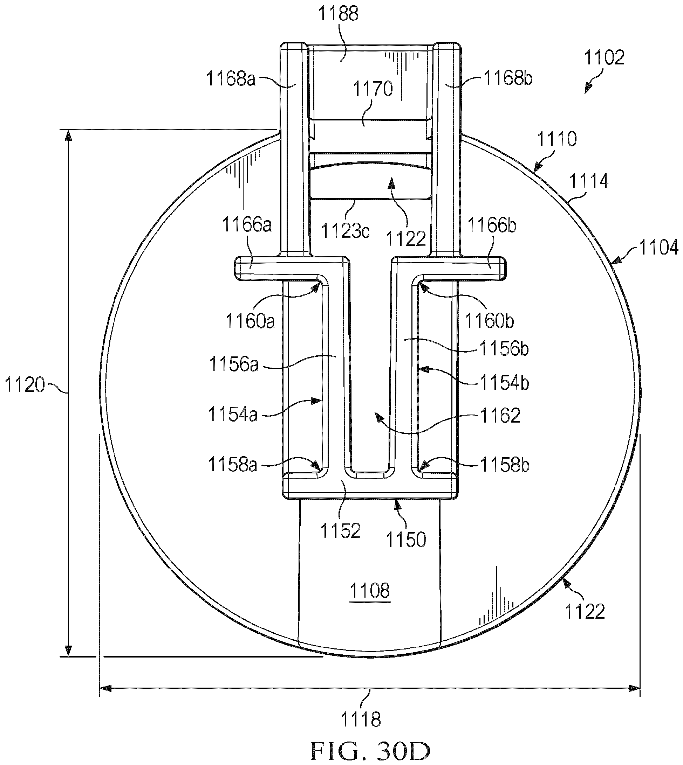

The housing 1102 may include a base 1104 defined by a front side 1106 and a back side 1108. The base 1104 may also have a top portion 1110 and a bottom portion 1112, opposite the top portion 1110. The base 1104 may have an outer edge 1114 that defines a shape of the base 1104. In some embodiments, the shape of the base 1104 may be substantially a square, a rectangle, a circle, an oval, a triangle, a trapezoid, and the like. In some embodiments, the shape of the base 1104 may be imparted with round edges as shown in FIGS. 30B and 30D. Combinations of shapes and irregular shapes are also contemplated.

In some embodiments, the base 1104 may be imparted with a substantially circular shape as shown in FIGS. 30B and 30D. In some embodiments, the base 1104 may be imparted with a base diameter (or width) 1118. In some embodiments, the base diameter (or width) 1118 may be 48 mm, or about 48 mm.

The base 1104 may be imparted with a center base height 1120. In some embodiments, the center base height 1120 may be 40.92 mm, or about 40.92 mm. The base 1104 also may be imparted with a base thickness (not shown). In some embodiments, the base thickness may be 2.5 mm, or about 2.5 mm

The top portion 1110 of the base 1104 may have a divot opening 1122 disposed in a center area of the top portion 1110. The divot opening 1122 may be defined by a first divot side 1123a, a second divot side 1123b, a bottom divot side 1123c, and a top divot side 1123d. In some embodiments, the divot opening 1122 may be imparted with a partially rectangular shape with a rounded top as shown in FIGS. 30B and 30D.

The front side 1106 of the base 1104 may include a first flange 1124 protruding outwardly therefrom. The first flange 1124 may have a top flange portion 1125 and a bottom flange portion 1127. The first flange 1124 may also have a first flange wall 1130 that is imparted with a first flange thickness. In some embodiments, the first flange thickness may be 2 mm, or about 2 mm.

The first flange wall 1130 may define a first flange shape. The first flange shape may be imparted with any size and shape suitable to engage with the first protrusion 64‴ when the EV lockout device 1100 is placed on or otherwise in communication with the fourth EV charge plug 50‴. In some embodiments, the first flange shape may be the same or substantially the same as the shape of the first protrusion 64‴ of the fourth EV charge plug 50‴. In some embodiments, the first flange shape may be partially cylindrical.

The first flange 1124 may be imparted with a first set of dimensions. In some embodiments, the first set of dimensions of the first flange 1124 may be complimentary to the set of dimensions for the first protrusion 64‴ so that the first flange 1124 can be placed onto and fit over the first protrusion 64‴. In some instances, a friction fit between the first flange wall 1130 and the first protrusion 64‴ may prevent the housing 1102 from disengaging from the charge plug 50‴.

In some embodiments, the first set of dimensions of the first flange 1124 may include a first flange width 1132, a first flange center height 1133 (see FIG. 30B), and a first flange depth 1134 (see FIG. 31C). In some embodiments, the first flange diameter 1132 may be the same as or greater than the diameter of the first protrusion 64‴ of the fourth EV charge plug 50‴. For example, in some embodiments, the first flange width 1132, may be 41.12 mm, or about 41.12 mm, and the first flange center height 1133 may be 36.16 mm, or about 36.16 mm.

The first flange depth 1134 may be the same as or different from the depth of the first protrusion 64‴ of the fourth EV charge plug 50‴. In some embodiments, the first flange depth 1134 is the same as, substantially the same as, or less than the depth of the first protrusion 64‴ of the fourth EV charge plug 50‴. For example, in some embodiments, the first flange depth 1134 may be 28 mm, or about 28 mm.

The back side 1108 of the base 1104 may include a clip support unit 1150 protruding outwardly therefrom. The clip support unit 1150 may be defined by a bottom support 1152, a first side 1154a and a second side 1154b. In some embodiments, the first side 1154a may be substantially parallel to the second side 1154b. In some embodiments, the second side 1154b may be a mirror image of the first side 1154a.

The first side 1154a may include a first side plate 1156a having a first bottom end 1158a and a first top end 1160a. The first side plate 1156a may be attached to the bottom support 1152 on the first bottom end 1158a. The second side 1154b may include a second side plate 1156b having a second bottom end 1158b and a second top end 1160b. The second side plate 1156b may be attached to the bottom support 1152 on the second bottom end 1158b.

The bottom support 1152 may connect the first bottom end 1158a of the first side plate 1156a to the second bottom end 1158b of the second side plate 1156b. A gap 1162 is formed between the first side plate *1156a* and the second side plate 1156b as shown in FIG. 30D.

A first hole 1164a may be disposed in and extend entirely through the first side plate 1156a between the first top end 1160a and the first bottom end 1158a. A second hole 1164b may also be disposed in and extend entirely through the second side plate 1156b between the second top end 1160b and the second bottom end *1158b.* The second hole 1164b may be disposed in the second side plate 1156b at the same location as the first hole 1164a is disposed in the first side plate 1156a so that the first hole 1164a and the second hole 1164b are substantially aligned. The first and second holes 1164a, 1164b may be any size and shape suitable for a shackle or shank of a lock (e.g., shackle 14 of the lock 10) to pass through. In some embodiments, the first and second holes 1164a, 1164b may be imparted with a substantially oval shape. In other embodiments, the first and second holes 1164a, 1164b may be imparted with a substantially circular shape.

The first side 1154a may further include a first clip support 1166a on the first top end 1160a, and the second side 1154b may include a second clip support 1166b on the second top end 1160b. A first vertical support 1168a may extend from the first clip support 1166a upward and past the top portion 1110 of the housing 1102. A second vertical support 1168b may extend from the second clip support 1166b upward and past the top portion 1110 of the housing 1102. In some embodiments, the first vertical support 1168a and the second vertical support 1168b may be mirror images of each other.

A clip connector 1170 may extend between the first vertical support 1168a and the second vertical support 1168b thereby connecting the first vertical support 1168a to the second vertical support 1168b. In some embodiments, the clip connector 1170 may be imparted with a cylindrical or rod shape.

The first vertical support 1168a may have a first front portion 1178a, and the second vertical support 1168b may have a second front portion 1178b. Extending outward from the first front portion 1178a of the first vertical support 1168a may be a first guide rail 1180a, and extending outward from the second front portion 1178b of the second vertical support 1168b may be a second guide rail 1180b. In some embodiments, the first and second guide rails 1180a, 1180b may extend along a top flange portion 1176 of the first flange 1124 across the entire depth of the first flange 1124. In some embodiments, the first and second guide rails 1180a, 1180b may be disposed substantially parallel to one another and may be mirror images of each other.

The first guide rail 1180a may have a first end portion 1186a, opposite the first front portion 1178a of the first vertical support 1168a, and the second guide rail 1180b may have a second end portion 1186b, opposite the second front portion 1178b of the second vertical support 1168b. An end wall 1188 may extend from the first end portion 1186a of the first guide rail 1180a to the second end portion 1186b of the second guide rail 1180b. The end wall 1188 may connect the first guide rail 1180a to the second guide rail 1180b.

A first flange aperture 1190 may be disposed in and extend entirely through the top flange portion 1125 between the first guide rail 1180a, the second guide rail 1180b and the end wall 1188 as shown in FIG. 30A and 31C. The first flange aperture 1190 may be imparted with any size suitable to accommodate the hook portion 212 of the clip 200. In some embodiments, the first flange aperture 1190 has a substantially rectangular shape.

The clip support unit 1150 may be designed to engage with one or more embodiments of a clip (e.g., 200, 400, 800, 1000) disclosed herein. In some embodiments, the first and second clip supports 1166a, 1166b may be designed to engage or otherwise be in communication with first and second support legs (e.g., 222a, 222b), respectively, of a clip (e.g., 200). The clip connector 1170 may be designed to engage with a coupling member (e.g., 216) of the clip such that the coupling member can rotate about the clip connector 1170 in order to raise and/or lower a first end (e.g., 204) of a first elongated member (e.g., 202) of the clip. In addition, the gap 1162 disposed between the first and second side plates 1156a, 1156b of the clip support unit 1150 may be designed to allow a second elongated member (e.g., 228) of the clip to move in a substantially upwardly or downwardly direction between the first and second side plates 1156a, 1156b. The first and second guide rails 1180a, 1180b may be designed to engage or otherwise be in communication with first and second rails (e.g., 212a, 212b), respectively, of the clip. Furthermore, the first and second holes 1164a, 1164b of the clip support unit 1150 may be designed to substantially align with a lock through hole (e.g., 236) of the clip to enable the shackle of a lock (e.g., shackle 14 of lock 10) to pass through the housing 1102 and clip and secure same to an EV charge port or an EV charge plug (e.g., 50‴).

The seventh embodiment of the EV lockout device 1100 may include the clip 200 designed for use therewith. As shown in FIGS. 31A-31C, the clip 200 may attach to or otherwise engage with the housing 1102. When in the first clip position, the clip 200 may be placed on the housing 1102 such that the coupling member 216, the bottom side 210 of the first elongated member 202, and/or the projection 218 of the clip 200 may engage with the clip connector 1170 of the housing 1102 as best seen in FIG. 31C. The clip connector 1170 may rest within the nook 217 when in the first clip position, and the coupling member 216 may extend through the divot opening 1122 of the housing 1102 as shown in FIG. 31C. In addition, when in the first clip position, the first support leg 222a may engage with the first clip support 1166a of the clip support unit 1150, and the second support leg 222b may engage with the second clip support 1166b of the clip support unit 1150. The first elongated member 202 of the clip 200 may extend over the top flange portion 1125 of the first flange 1124, and the hook portion 212 of the clip 200 may rest within the first flange aperture 1190. The second elongated member 228 may be disposed within the gap 1162 between the first side 1154a and the second side 1154b of the clip support unit 1150 as shown in FIG. 31B. Further, when in the first clip position, the lock through hole 236 of the clip 200 may substantially align with the first hole 1164a of the first side 1154a and the second hole 1164b of the second side 1154b of the clip support unit 1150*.*

As discussed above, when in the first clip position, the first and second support legs 222a, 222b may engage with the first and second clip supports 1166a, 1166b, respectively. In addition, when in the first clip position, the lock through hole 236 of the second elongated member 228 of the clip 200 may substantially align with the first hole 1164a of the first side 1154a and the second hole 1164b of the second side 1154b of the clip support unit 1150 of the housing 1102.

When the EV lockout device 1100 is being placed on or is being removed from the fourth EV charge plug 50‴, the clip 200 may move to a second clip position (not shown). When moving into the second clip position, the first end 204 of the first elongated member 202 may move in a substantially upward direction. In some embodiments, the clip 200 may move to the second clip position either in response to the platform portion 220 being pressed downward so that the first and second support legs 222a, 222b compress (e.g., the angle between the platform portion 220 and the first and second support legs 222a, 222b decreases). In other embodiments, the clip 200 may move to the second clip position in response to the hook portion 212 of the first elongated member 202 engaging with the first protrusion 64‴ of the fourth EV charge plug 50‴. In the second clip position, the first end 204 of the first elongated member 202 may raise up in order for the hook portion 212 to slide over the first protrusion 64‴ and into the top opening 53' of the fourth EV charge plug 50‴. As the first end 204 of the first elongated member 202 raises upward, the coupling member 216 and the projection 218 may move or rotate about the clip connector 1170 of the housing 1102 in a first direction. In some embodiments, as the first end 204 of the first elongated member 202 raises upward, the second elongated member 228 may move in a substantially downward direction such that the space 235 between the bottom end 234 of the second elongated member 228 and the bottom support 1152 of the clip support unit 1150 decreases. In some embodiments, as the second elongated member 228 moves in the substantially downward direction, the lock through hole 236 of the second elongated member 228 may become out of alignment with the first hole 1164a and the second hole 1164b of the clip support unit 1150*.*

If the EV lockout device 1100 is being placed onto the fourth EV charge plug 50‴, the clip 200 may move from the first clip position to the second clip position. As the clip 200 is moving from the first clip position to the second clip position, the housing 1102 may engage with the fourth EV charge plug 50‴. In some embodiments, the first flange 1124 of the housing 1102 may engage with the first protrusion 64‴ of fourth EV charge plug 50‴such that the first flange 1124 surrounds all or a portion of the first protrusion 64‴.

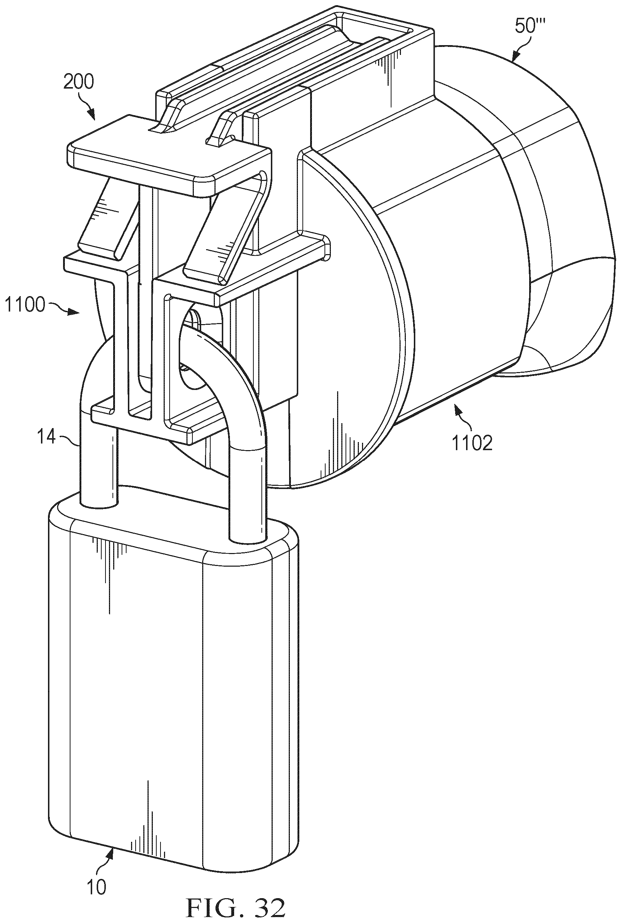

After moving into the second clip position in response to the platform portion 220 being depressed, the clip 200 may move back into the first clip position upon release of the platform portion 220. As the clip 200 moves back into the first clip position, the first end 204 of the first elongated member 202 may lower and the coupling member 216 and the projection 218 may move or rotate about the clip connector 1170 of the housing 1102 in a direction opposition the first direction. In addition, as the clip 200 moves back in the first clip position, the second elongated member 228 may move in a substantially upward direction as the first and second support legs 222a, 222b decompress (e.g., the angle between the platform portion 220 and one or more of the first and second support legs 222a, 222b increases). If the EV lockout device 1100 has been placed on the fourth EV charge plug 50‴, the hook portion 212 may be disposed in one or more of the first flange aperture 1190 of the housing 1102 and the top opening 53' of the fourth EV charge plug 50‴, when the clip 200 returns to the first clip position. Additionally, when the clip 200 moves back into the first clip position, the first hole 1164a of the clip support unit 1150, the lock through hole 236 of the second elongated member 228, and the second hole 1164b of the clip support unit 1150 may be substantially aligned such that the shackle 14 of lock 10 may be threaded through the first hole 1164a, the lock through hole 236, and the second hole 1164b, or vice versa. The shackle 14 may then be securely attached to the body 12 of the lock 10, thereby placing the EV lockout device 1100 in a locked position as shown in FIG. 32.

When in the locked position, the clip 200 cannot fully move to the second clip position (e.g., the hook portion 212 cannot be raised high enough to slide out of the top opening 53' and/or the first flange aperture 1190 and back over the first protrusion 64‴of the fourth EV charge plug 50‴) as the shackle 14 prevents the second elongated member 228 of the clip 200 from moving sufficiently downward. To remove the EV lockout device 1100 from the fourth EV charge plug 50*"',* the shackle 14 of the lock 10 may be disengaged from the body 12 of the lock 10 and removed from the clip support unit 1150 of the housing 1102 by threading the shackle 14 through the second hole 1164b, the lock through hole 236, and the first hole 1164a, or vice versa. Once the lock 10 is removed from the EV lockout device 500, the platform portion 220 of the clip 200 may be depressed causing the clip 200 to move from the first clip position to the second clip position in which the first and second support legs 222a, 222b compress and the hook portion 212 is raised. The hook portion 212 may then be moved over and away from the top opening 53' of the fourth EV charge plug 50‴ and the first flange aperture 1190 as the EV lockout device 1100 is slid off or otherwise removed from the fourth EV charge plug 50‴ (e.g., the first flange 1124 is removed from the first protrusion 64‴).

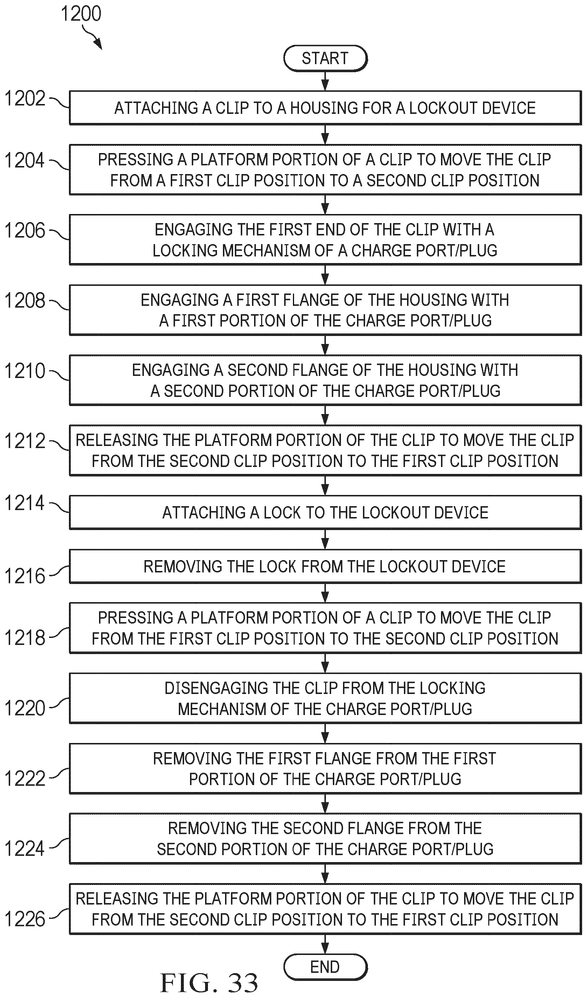

FIG. 33 illustrates a method 1200 of using the first, second, third, fourth, fifth, and sixth embodiments of the EV lockout device (e.g., 100, 300, 500, 600, 700, 900, 1100, respectively) discussed above.

At a step 1202, a clip (e.g., 200, 400, 800, 1000) may be attached to a housing (e.g., 102, 302, 502, 602, 702, 902, 1102) of the EV lockout device. As discussed above, the clip may be attached to the housing by engaging a coupling member (216, 416, 816, 1016) and a projection (218, 418, 818, 1018) of the clip with a clip connector (170, 370, 570, 670, 770, 970, 1170) of the housing such that the clip connector rests within a nook (217, 417, 817, 1017) of the clip.

Once attached to the housing, the clip may be disposed be in a first clip position. As discussed above, when in the first clip position, first and second support legs (e.g., 222a, 222b; 422a, 422b; 822a, 822b; 1022a, 1022b) of the clip may engage with first and second clip supports (e.g., 166a, 166b; 366a, 366b; 566a, 566b; 666a, 666b; 766a, 766b; 966a, 966b, 1166a, 1166b), respectively, of the housing or the bottom support unit (see, e.g., 951) of the housing (e.g., 902). The first and second support legs may be in a neutral position, when the clip is in the first clip position, such that the first and second support legs are not compressed. In addition, a first elongated member (e.g., 202, 402, 802, 1002) of the clip may extend over a top flange portion (e.g., 125, 325, 525, 625, 725, 1125) of a first flange (e.g., 124, 324, 524, 624, 724, 1124) or an inner side (e.g., 931) of a first flange (e.g., 924) of the housing when the clip is in the first clip position. And, a second elongated member (e.g., 228, 428, 828, 1028) of the clip may be disposed within a gap (e.g., 162, 362, 562, 662, 762, 962, 1162) between first and second sides (e.g., 154a, 154b; 354a, 354b; 554a, 554b, 654a, 654b; 754a, 754b, 954a, 954b; 1154a, 1154b) of a clip support unit (e.g., 150, 350, 550, 650, 750, 950, 1150) when the clip is in the first clip position. Furthermore, first and second holes (e.g., 164a, 164b; 364a, 364b; 564a, 564b; 664a, 664b; 764a, 764b; 964a, 964b, 1164a, 1164b) of the clip support unit of the housing may be in substantial alignment with a lock through hole (e.g., 236, 436, 836, 1036) of the second elongated member of the clip.

Once the clip is attached to the housing, the EV lockout device may be placed onto or into a port housing (e.g., 22, 22', 22") of an EV charge port (e.g., 20, 20', or 20") or a plug housing (e.g., 52, 52', 52", 52‴) of an EV charge plug (e.g., 50, 50', 50", 50‴).

At a step 1204, a platform portion (e.g., 220, 420, 820, 1020) of the clip may be pressed downward causing the first and second support legs of the clip to compress, which in turn raises a first end (e.g., 204, 404, 804, 1004) of the first elongated member of the clip, thereby moving the first clip from the first clip position to a second clip position.

When in the second clip position, the first end of the first elongated member of the clip may engage with a locking mechanism (e.g., 30, 30', 30") of the EV charge port or a locking mechanism (e.g., 54, 54', 54", 54"') of the EV charge plug at a step 1206. In some embodiments, the first end of the clip (e.g., 204, 804, 1004) engages with the locking mechanism (e.g., 30, 30', 30") of the EV charge port (e.g., 20, 20', 20") or the locking mechanism (e.g., 54", 54‴) of the EV charge plug (e.g., 50", 50‴) by raising up in order to hook onto or into the locking mechanism. In other embodiments, the first end of the clip (e.g., 404) engages with the locking mechanism of the EV charge plug (e.g., 50, 50') by raising up to allow a locking member (e.g., 56, 56') of the locking mechanism (e.g., 54, 54') to latch onto an inner side (e.g., 385, 685) of a center divider (e.g., 384, 684) of the housing (e.g., 302, 602) of the EV lockout device. In addition, when in the second clip position, the lock through hole of the second elongated member of the clip may be out of substantial alignment with the first and second holes of the clip support unit of the housing.

At a step 1208, the first flange of the housing of the EV lockout device may engage with a first portion of the port housing of the EV charge port or a first portion of the plug housing of the EV charge plug while the clip is in the second clip position. In some embodiments, the first portion of the EV charge port may be provided in the form of a first protrusion (e.g., 34, 34'). In some embodiments, the first portion of the EV charge port may be provided in the form of a locking mechanism aperture (e.g., 24'). In some embodiments, the first portion of the EV charge plug may be provided in the form of a first protrusion (e.g., 64, 64', 64", 64‴). In some embodiments, the first portion of the port housing of the EV charge port (e.g., 20, 20') may include a channel (e.g., 44, 44'). In some embodiments, the first portion of the plug housing of the EV charge plug (e.g., 50, 50') may include a protrusion ridge (e.g., 62, 62'). In some embodiments, a ridge (e.g., 128, 528) may extend from a bottom flange portion (e.g., 127, 527) of the first flange (e.g., 124, 524) and may engage with the corresponding channel (e.g., 44, 44') of the EV charge port as the first flange is mating with the first portion of the EV charge port. In some embodiments, a flange channel (e.g., 328, 628) may be disposed in a bottom flange portion (e.g., 327, 627) of the first flange (e.g., 324, 624) and may engage with the corresponding protrusion ridge (e.g., 62, 62') of the EV charge plug as the first flange is mating with the first portion of the plug housing of the EV charge plug.

In some embodiments, the housing (e.g., 102, 302) of the EV lockout device may have a second flange (e.g., 126, 326). If the housing of the EV lockout device has a second flange, then the second flange may be mated with a second portion of the port housing of the EV charge port or the plug housing of a second portion of a EV charge plug at an optional step 1210. In some embodiments, the second portion of the port housing of the EV charge port may be provided in the form of a second protrusion (e.g., 38) and the second portion of the plug housing of the EV charge plug may be provided in the form of a second protrusion (e.g., 68). In some embodiments, the first flange and the second flange of the EV lockout device may be mated with the first portion and the second portion of the EV port housing of the EV charge port or the plug housing of the EV charge plug at the same time. In other embodiments, the clip may engage with the locking mechanism of the EV charge port or the EV charge plug as the first flange is mating with the first protrusion and the second flange, where applicable, is mating with the second portion of the EV charge port or the EV charge plug.

At a step 1212, once the clip has engaged with the locking mechanism of the EV charge port or EV charge plug, the first flange (including any ridges or flange channels) and the second flange, where applicable, have mated with the first portion and the second portion, respectively, of the EV charge port or the EV charge plug, the platform portion of the clip may be released causing the clip to move from the second clip position back to the first clip position. As the clip moves from the second clip position to the first clip position, the first and second support legs of the clip decompress and the first end of the first elongated member of the clip lowers. In some embodiments, when the clip moves back into the first clip position after being placed onto or into the EV charge port or the EV charge plug, the first end of the first elongated member of the clip (e.g., 200) may be disposed on an inner side (e.g., 33, 33' ) of a locking member (e.g., 32, 32' ) of the locking mechanism (e.g., 30, 30') of the EV charge port (e.g., 20, 20'). In other embodiments, the first end of the first elongated member of the clip (e.g., 1000) may be disposed in a bottom opening (e.g., 35) of the locking mechanism (e.g., 30") of the EV charge port (e.g., 20"). In some embodiments, the first end of the first elongated member of the clip (e.g., 800, 200) may be disposed in a top opening (e.g., 53, 53') of the locking mechanism (e.g., 54", 54‴) of the EV charge plug (e.g., 50", 50‴) when the clip returns to the first clip position. In further embodiments, when the clip (e.g., 400) moves back into the first clip position, the locking member (e.g., 56, 56') of the locking mechanism (e.g., 54, 54') of the EV charge plug (e.g., 50, 50') may be disposed on the inner side (e.g., 385, 685) of the center divider (e.g., 384, 684) of the housing (e.g., 300, 600).

At a step 1214, a lock 10 may be attached to the EV lockout device once the clip is back in the first clip position. When the clip returns to the first clip position after being placed on the EV charge port or EV charge plug, the first and second holes of the clip support unit of the housing may be in substantial alignment with the lock through hole of the second elongated member of the clip. A shackle 14 of the lock may be threaded through the first hole of the clip support unit, the lock through hole of the second elongated member, and the second hole of the clip support unit, or vice versa, and then securely reattached or locked to the body 12 of the lock 10.

To remove the EV lockout device from the EV charge port or EV charge plug, the lock 10 may be removed at a step 1216. The lock 10 may be removed, by detaching one or both ends (e.g., 16, 18) of the shackle 14 of the lock 10 and threading the shackle 14 back through the first hole of the housing, the lock through hole of the clip, and the second hole of the housing, or vice versa. Once the lock 10 is removed from the EV lockout device, the EV lockout device can be removed from the EV charge port or EV charge plug.

At a step 1218, the platform portion of the clip can be depressed causing the clip to move from the first clip position to the second clip position where the first end of the first elongated member of the clip is raised up. Once raised, the first end of the clip can be disengaged from the locking mechanism of the EV charge port or the EV charge plug at a step 1220.

At a step 1222, the first flange can be removed from the first portion of the EV charge port or EV charge plug by pulling the first flange off of the first portion of the EV charge port of EV charge plug.

If the housing has a second flange, then the second flange can be removed from the EV charge port or EV charge plug by pulling the second flange off of the second portion of the EV charge port or EV charge plug at the optional step 1224. In some embodiments, the first and second flanges are removed from the first and second portions of the EV charge port or plug at the same time. In some embodiments, the clip is disengaged from the housing at the same time as the first flange is removed from the first portion and the second flange, where applicable, is removed from the second portion of the EV charge port or EV charge plug.

At a step 1226, once the EV lockout device has been removed from the EV charge port or EV charge plug, the platform portion of the clip can be released and the clip returned to the first clip position.

It will be appreciated by those skilled in the art that while the above disclosure has been described above in connection with particular embodiments and examples, the above disclosure is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the above disclosure are set forth in the following claims.

## Claims

1. A housing for an electric vehicle (EV) lockout device comprising:
a base having a front side and a back side;
a first flange extending from the front side of the base, the first flange configured to engage with a first portion of a port housing of an EV charge port or a first portion of a plug housing of an EV charge plug; and
a clip support unit extending from the back side of the base, the clip support unit comprising:
a first side plate having a first top end, a first bottom end opposite the first top end, and a first opening disposed between the first top end and the first bottom end; and
a second side plate having a second top end, a second bottom end opposite the second top end, and a first opening disposed between the second top end and the second bottom end, wherein the second side plate is disposed substantially parallel to the first side plate, and wherein the second opening is substantially aligned with the first opening.

2. The housing for an EV lockout device of claim 1, wherein the first opening and the second opening have the same shape and size.

3. The housing for an EV lockout device of claim 1, wherein the first flange has a bottom flange portion, the housing for an EV lockout device further comprising a ridge that extends from the bottom flange portion of the first flange, wherein the ridge is configured to engage with a channel in the first portion of the port housing of the EV charge port.

4. The housing for an EV lockout device of claim 1, wherein the first flange has a bottom flange portion, the housing for the EV lockout device further comprising a flange channel that extends through the bottom flange portion of the first flange, wherein the flange channel is configured to engage with a protrusion ridge of the plug housing of the EV charge plug.

5. The housing for an EV lockout device of claim 1, further comprising a first vertical member disposed on the back side of the base and a second vertical member disposed on the back side of the base, wherein the first vertical member is disposed substantially parallel to the second vertical member.

6. The housing for an EV lockout device of claim 5, further comprising a clip connector that extends between the first vertical member and the second vertical member.

7. The housing for an EV lockout device of claim 5, further comprising a first support member connected to the first top end of the first side plate and a second support member connected to the second top end of the second side plate, wherein the first vertical member extends upwardly from the first support member and the second vertical member extends upwardly from the second support member.

8. The housing for an EV lockout device of claim 1, further comprising a second flange extending from the front side of the base, wherein the second flange is disposed below the first flange, and wherein the second flange is configured to engage with a second portion of the port housing of the EV charge port or a second portion of the plug housing of the EV charge plug.

9. The housing for an EV lockout device of claim 8, wherein a ridge is disposed between the first flange and the second flange, wherein the ridge is configured to engage with a channel in the first portion of the port housing of the EV charge port.

10. The housing for an EV lockout device of claim 8, wherein a flange channel is disposed between the first flange and the second flange, wherein the flange channel is configured to engage with a protrusion ridge of the first portion of the plug housing of the EV charge plug.

11. A method of using an electric vehicle (EV) lockout device, the EV lockout device comprising a clip and a housing, the clip comprising a first elongated member having a first end and a second end, opposite the first end, a second elongated member disposed perpendicular to the first elongated member, wherein a hole is disposed on the second elongated member, and a platform portion connected to the second end of the first elongated member, the method comprising the steps of:
attaching the clip to the housing, wherein the first elongated member extends over a first flange of the housing, and the hole is in substantial alignment with a first opening of the housing and a second opening of the housing;
depressing the platform portion of the clip to move the clip from a first clip position to a second clip position, wherein the clip is in a neutral position when in the first clip position, and wherein the first end of the first elongated member is raised in the second clip position;
engaging the first end of the clip with a locking mechanism of an EV charge port or an EV charge plug;
mating the first flange of the housing with a first portion of the port housing of the EV charge port or a first portion of a plug housing of the EV charge plug;
releasing the platform portion of the clip to move the clip from the second clip position to the first clip position;
attaching a lock to the EV lockout device by threading a shackle of the lock through the first opening of the housing, the hole of the second elongated member of the clip, and the second opening of the housing, and attaching the shackle to a body of the lock.
